(19) Europäisches Patentamt
European Patent Office
Office européen des brevets

(11) **EP 4 770 087 A1**

(12) **EUROPEAN PATENT APPLICATION**

(43) Date of publication:
**01.07.2026   Bulletin 2026/27**

(21) Application number: **25227835.3**

(22) Date of filing: **31.12.2025**

(51) International Patent Classification (IPC):
**H04N 19/124** (2014.01)    **H04N 19/70** (2014.01)

(52) Cooperative Patent Classification (CPC):
**H04N 19/70; H04N 19/124**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **31.12.2024   US 202463740853 P**

(71) Applicant: **Comcast Cable Communications, LLC Philadelphia, PA 19103 (US)**

(72) Inventors:
• **RUIZ COLL, Damian**
  **Philadelphia, 19103 (US)**
• **LEE, Jung Kyung**
  **Philadelphia, 19103 (US)**

(74) Representative: **V.O.**
**P.O. Box 87930**
**2508 DH Den Haag (NL)**

(54) **ADAPTIVE DELTA QUANTIZATION FOR LUMA CLIPPING**

(57)    Systems, apparatuses, and methods are described for enhancing picture reconstruction in video coding. Bitstream information, such as original bit depth and range indicators, may be used to adjust reconstruction parameters. Compact representations of range differences may be signaled to enable efficient decoding. By adapting clipping ranges for reconstructed samples, the system may improve visual fidelity and reduce artifacts, even when internal processing operates at a different bit depth than the source. These techniques may support flexible configurations and maintain compression efficiency across diverse video formats.

2700

Set a reference range for reconstructed samples of a picture
2702

Obtain, from a bitstream, an original bit depth
2704

Determine a quantization step based at least on an internal processing bit depth and the original bit depth
2706

Dequantize, in accordance with the determined quantization step, at least one of a quantized first range difference and a quantized second range difference from the bitstream to obtain a first range difference and a second range difference
2708

Derive, using the at least one of the first range difference and the second range difference and based on the reference range, a target range
2710

Clip reconstructed samples of the picture to be in the target range
2712

Reconstruct the picture comprising the clipped reconstructed samples.
2714

*FIG. 27*

EP 4 770 087 A1

**Description**

CROSS-REFERENCE TO RELATED APPLICATIONS

This application claims the benefit of U.S. Provisional Application No. 63/740,853 filed on December 31, 2024. The above-referenced application is hereby incorporated by reference in its entirety.

BACKGROUND

A computing device processes video for storage, transmission, reception, and/or display. Processing a video comprises encoding and decoding, for example, to reduce a data size associated with the video.

SUMMARY

The following summary presents a simplified summary of certain features. The summary is not an extensive overview and is not intended to identify key or critical elements.
Systems, apparatuses, and methods are described herein for improving the accuracy and visual quality of reconstructed pictures in video processing. When video content is encoded and later decoded, differences between the original sample range and the reference range used during reconstruction can lead to visual artifacts or loss of detail. These challenges may become more pronounced in scenarios involving varying bit depths and/or high-dynamic-range content. To address this, a computing device may interpret information from a bitstream, such as original bit depth and range adjustment indicators, and use this information to refine the reconstruction process. Signaling compact representations of range differences and adapting the clipping range for reconstructed samples ensures that decoded pictures more closely reflect original image characteristics. This approach allows for efficient signaling while maintaining high visual fidelity, even if internal processing operates at a different bit depth than the source. Such coordination between encoding and decoding improves consistency across diverse video formats and transmission environments, reduces artifacts, preserves detail, and supports flexible configurations without imposing significant computational or bandwidth overhead. As a result, the overall quality and reliability of video playback may be enhanced.
These and other features and advantages are described in greater detail below.

BRIEF DESCRIPTION OF THE DRAWINGS

Examples of several of the various embodiments of the present disclosure are described herein with reference to the drawings.

FIG. 1 shows an example video coding/decoding system in which embodiments of the present disclosure may be implemented.
FIG. 2 shows an example decoder in which embodiments of the present disclosure may be implemented.
FIG. 3 shows an example decoder in which embodiments of the present disclosure may be implemented.
FIG. 4 shows an example quadtree partitioning of a coding tree block (CTB).
FIG. 5 shows an example quadtree corresponding to the example quadtree partitioning of the CTB in FIG. 4.
FIG. 6 shows examples of binary tree and ternary tree partitions.
FIG. 7A shows an example of combined quadtree and multi-type tree partitioning of a CTB.
FIG. 7B shows an example tree corresponding to the combined quadtree and multi-type tree partitioning of the CTB shown in FIG. 7A.
FIG. 8 shows an example of partitioning modes in AV1.
FIG. 9 shows an example set of reference samples determined for intra prediction of a current block.
FIG. 10A, FIG. 10B, FIG. 10C show example intra prediction modes.
FIG. 11 shows an example of a current block and corresponding reference samples.
FIG. 12 shows an example of applying an intra prediction mode (e.g., an angular mode) for prediction of a current block.
FIG. 13A shows an example of inter prediction performed for a current block in a current picture.
FIG. 13B shows an example motion vector.
FIG. 14 shows an example of bi-prediction performed for a current block.
FIG. 15A shows example spatial candidate neighboring blocks relative to a current block being coded.
FIG. 15B shows example locations of two temporal, co-located blocks relative to a current block.
FIG. 16 shows an example of intra block copy (IBC).
FIG. 17 shows an example of intra template matching prediction (IntraTMP).

FIG. 18 shows an example of video ranges for a picture.
FIG. 19A shows an example of the bounds in adaptive clipping.
FIG. 19B shows an example method for adaptive clipping.
FIG. 20 shows an example of obtaining a reference range of video sample values.
FIG. 21 shows an example of obtaining a reference range of video sample values.
FIG. 22 shows an example of upscaling a picture.
FIG. 23 shows an example of maximum and minimum delta parameters from a picture for an original bit depth and an internal bit depth.
FIG. 24A shows an example method of adaptive quantization for use in clipping.
FIG. 24B shows an example method of adaptive quantization for use in clipping.
FIG. 25 shows an example method of adaptive quantization for use in clipping.
FIG. 26 shows an example method for adaptive quantization based on original bit depth.
FIG. 27 shows an example method for adaptive quantization based on original bit depth.
FIG. 28 shows an example computer system in which examples of the present disclosure may be implemented.
FIG. 29 shows example elements of a computing device that may be used to implement any of the various devices described herein.

DETAILED DESCRIPTION

The accompanying drawings and descriptions provide examples. It is to be understood that the examples shown in the drawings and/or described are non-exclusive, and that features shown and described may be practiced in other examples. Examples are provided for operation of video encoding and decoding systems, which may be used in the technical field of video data storage and/or transmission/reception. More particularly, the technology disclosed herein may relate to video compression as used in encoding and/or decoding devices and/or systems.

A video sequence, comprising multiple pictures/frames, may be represented in digital form for storage and/or transmission. Representing a video sequence in digital form may require a large quantity of bits. Large data sizes that may be associated with video sequences may require significant resources for storage and/or transmission. Video encoding may be used to compress a size of a video sequence for more efficient storage and/or transmission. Video decoding may be used to decompress a compressed video sequence for display and/or other forms of consumption.

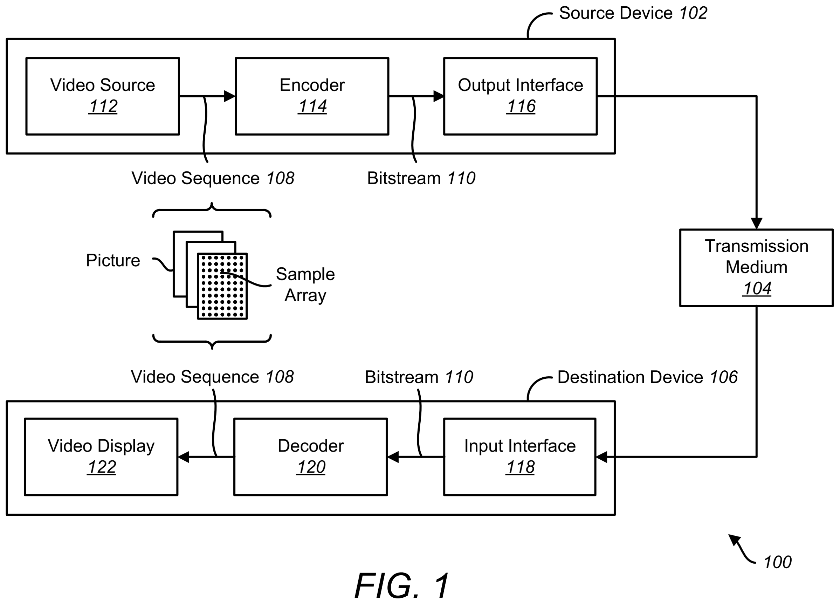

FIG. 1 shows an example video coding/decoding system. Video coding/decoding system 100 may comprise a source device 102, a transmission medium 104, and a destination device 106. The source device 102 may encode a video sequence 108 into a bitstream 110 for more efficient storage and/or transmission. The source device 102 may store and/or send/transmit the bitstream 110 to the destination device 106 via the transmission medium 104. The destination device 106 may decode the bitstream 110 to display the video sequence 108. The destination device 106 may receive the bitstream 110 from the source device 102 via the transmission medium 104. The source device 102 and/or the destination device 106 may be any of a plurality of different devices (e.g., a desktop computer, laptop computer, tablet computer, smart phone, wearable device, television, camera, video gaming console, set-top box, video streaming device, etc.).

The source device 102 may comprise (e.g., for encoding the video sequence 108 into the bitstream 110) one or more of a video source 112, an encoder 114, and/or an output interface 116. The video source 112 may provide and/or generate the video sequence 108 based on a capture of a natural scene and/or a synthetically generated scene. A synthetically generated scene may be a scene comprising computer generated graphics and/or screen content. The video source 112 may comprise a video capture device (e.g., a video camera), a video archive comprising previously captured natural scenes and/or synthetically generated scenes, a video feed interface to receive captured natural scenes and/or synthetically generated scenes from a video content provider, and/or a processor to generate synthetic scenes.

A video sequence, such as video sequence 108, may comprise a series of pictures (also referred to as frames). A video sequence may achieve an impression of motion based on successive presentation of pictures of the video sequence using a constant time interval or variable time intervals between the pictures. A picture may comprise one or more sample arrays of intensity values. The intensity values may be taken (e.g., measured, determined, provided) at a series of regularly spaced locations within a picture. A color picture may comprise (e.g., typically comprises) a luminance sample array and two chrominance sample arrays. The luminance sample array may comprise intensity values representing the brightness (e.g., luma component, Y) of a picture. The chrominance sample arrays may comprise intensity values that respectively represent the blue and red components of a picture (e.g., chroma components, Cb and Cr) separate from the brightness. Other color picture sample arrays may be possible based on different color schemes (e.g., a red, green, blue (RGB) color scheme). A pixel, in a color picture, may refer to/comprise/be associated with all intensity values (e.g., luma component, chroma components), for a given location, in the sample arrays used to represent color pictures. For example, three sample arrays may be used for one luma component and two chroma components, respectively. A monochrome picture may comprise a single, luminance sample array. A pixel, in a monochrome picture, may refer to/comprise/be associated with the intensity value (e.g., luma component) at a given location in the single, luminance sample array used to represent monochrome pictures.

The encoder 114 may encode the video sequence 108 into the bitstream 110. The encoder 114 may apply/use (e.g., to encode the video sequence 108) one or more prediction techniques to reduce redundant information in the video sequence 108. Redundant information may comprise information that may be predicted at a decoder and need not be transmitted to the decoder for accurate decoding of the video sequence 108. For example, the encoder 114 may apply spatial prediction (e.g., intra-frame or intra prediction), temporal prediction (e.g., inter-frame prediction or inter prediction), inter-layer prediction, and/or other prediction techniques to reduce redundant information in the video sequence 108. The encoder 114 may partition pictures comprising the video sequence 108 into rectangular regions referred to as blocks, for example, prior to applying one or more prediction techniques. The encoder 114 may then encode a block using the one or more of the prediction techniques.

The encoder 114 may search for a block similar to the block being encoded in another picture (e.g., a reference picture) of the video sequence 108, for example, for temporal prediction. The block determined during the search (e.g., a prediction block) may then be used to predict the block being encoded. The encoder 114 may form a prediction block based on data from reconstructed neighboring samples of the block to be encoded within the same picture of the video sequence 108, for example, for spatial prediction. A reconstructed sample may be a sample that was encoded and then decoded. The encoder 114 may determine a prediction error (e.g., a residual) based on the difference between a block being encoded and a prediction block. The prediction error may represent non-redundant information that may be sent/transmitted to a decoder for accurate decoding of the video sequence 108.

The encoder 114 may apply a transform to the prediction error (e.g. using a discrete cosine transform (DCT), or any other transform) to generate transform coefficients. The encoder 114 may form the bitstream 110 based on the transform coefficients and other information used to determine prediction blocks using/based on prediction types, motion vectors, and/or prediction modes. The encoder 114 may perform one or more of quantization and entropy coding of the transform coefficients and/or the other information used to determine the prediction blocks, for example, prior to or before forming the bitstream 110. The quantization and/or the entropy coding may further reduce the quantity of bits needed to store and/or transmit the video sequence 108.

The output interface 116 may be configured to write and/or store the bitstream 110 onto the transmission medium 104 for transmission to the destination device 106. Also or alternatively, the output interface 116 may be configured to send/transmit, upload, and/or stream the bitstream 110 to the destination device 106 via the transmission medium 104. The output interface 116 may comprise a wired and/or a wireless transmitter configured to send/transmit, upload, and/or stream the bitstream 110 in accordance with one or more proprietary, open-source, and/or standardized communication protocols (e.g., Digital Video Broadcasting (DVB) standards, Advanced Television Systems Committee (ATSC) standards, Integrated Services Digital Broadcasting (ISDB) standards, Data Over Cable Service Interface Specification (DOCSIS) standards, 3rd Generation Partnership Project (3GPP) standards, Institute of Electrical and Electronics Engineers (IEEE) standards, Internet Protocol (IP) standards, Wireless Application Protocol (WAP) standards, and/or any other communication protocol).

The transmission medium 104 may comprise wireless, wired, and/or computer readable medium. For example, the transmission medium 104 may comprise one or more wires, cables, air interfaces, optical discs, flash memory, and/or magnetic memory. Also or alternatively, the transmission medium 104 may comprise one or more networks (e.g., the internet) or file servers configured to store and/or send/transmit encoded video data.

The destination device 106 may decode the bitstream 110 into the video sequence 108 for display. The destination device 106 may comprise one or more of an input interface 118, a decoder 120, and/or a video display 122. The input interface 118 may be configured to read the bitstream 110 stored on the transmission medium 104 by the source device 102. Also or alternatively, the input interface 118 may be configured to receive, download, and/or stream the bitstream 110 from the source device 102 via the transmission medium 104. The input interface 118 may comprise a wired and/or a wireless receiver configured to receive, download, and/or stream the bitstream 110 in accordance with one or more proprietary, open-source, standardized communication protocols, and/or any other communication protocol (e.g., such as referenced herein).

The decoder 120 may decode the video sequence 108 from the encoded bitstream 110. The decoder 120 may generate prediction blocks for pictures of the video sequence 108 in a similar manner as the encoder 114 and determine the prediction errors for the blocks, for example, to decode the video sequence 108. The decoder 120 may generate the prediction blocks using/based on prediction types, prediction modes, and/or motion vectors received in the bitstream 110. The decoder 120 may determine the prediction errors using the transform coefficients received in the bitstream 110. The decoder 120 may determine the prediction errors by weighting transform basis functions using the transform coefficients. The decoder 120 may combine the prediction blocks and the prediction errors to decode the video sequence 108. The video sequence 108 at the destination device 106 may be, or may not necessarily be, the same video sequence sent, such as the video sequence 108 as sent by the source device 102. The decoder 120 may decode a video sequence that approximates the video sequence 108, for example, because of lossy compression of the video sequence 108 by the encoder 114 and/or errors introduced into the encoded bitstream 110 during transmission to the destination device 106.

The video display 122 may display the video sequence 108 to a user. The video display 122 may comprise a cathode rate tube (CRT) display, a liquid crystal display (LCD), a plasma display, a light emitting diode (LED) display, and/or any other display device suitable for displaying the video sequence 108.

The video encoding/decoding system 100 is merely an example and video encoding/decoding systems different from the video encoding/decoding system 100 and/or modified versions of the video encoding/decoding system 100 may perform the methods and processes as described herein. For example, the video encoding/decoding system 100 may comprise other components and/or arrangements. The video source 112 may be external to the source device 102.The video display device 122 may be external to the destination device 106 or omitted altogether (e.g., if the video sequence 108 is intended for consumption by a machine and/or storage device). The source device 102 may further comprise a video decoder and the destination device 104 may further comprise a video encoder. For example, the source device 102 may be configured to further receive an encoded bit stream from the destination device 106 to support two-way video transmission between the devices.

The encoder 114 and/or the decoder 120 may operate according to one or more proprietary or industry video coding standards. For example, the encoder 114 and/or the decoder 120 may operate in accordance with one or more proprietary, open-source, and/or standardized protocols (e.g., International Telecommunications Union Telecommunication Standardization Sector (ITU-T) H.263, ITU-T H.264 and Moving Picture Expert Group (MPEG)-4 Visual (also known as Advanced Video Coding (AVC)), ITU-T H.265 and MPEG-H Part 2 (also known as High Efficiency Video Coding (HEVC)), ITU-T H.265 and MPEG-I Part 3 (also known as Versatile Video Coding (VVC)), the WebM VP8 and VP9 codecs, and/or AOMedia Video 1 (AV1), and/or any other video coding protocol).

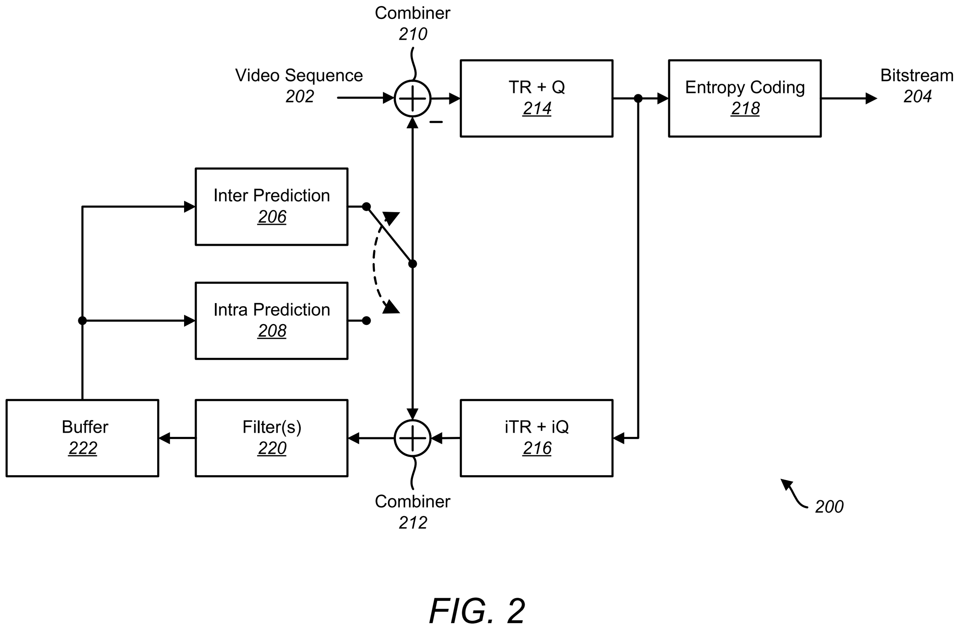

FIG. 2 shows an example encoder. The encoder 200 as shown in FIG. 2 may implement one or more processes described herein. The encoder 200 may encode a video sequence 202 into a bitstream 204 for more efficient storage and/or transmission. The encoder 200 may be implemented in the video coding/decoding system 100 as shown in FIG. 1 (e.g., as the encoder 114) or in any computing, communication, or electronic device (e.g., desktop computer, laptop computer, tablet computer, smart phone, wearable device, television, camera, video gaming console, set-top box, video streaming device, etc.). The encoder 200 may comprise one or more of an inter prediction unit 206, an intra prediction unit 208, combiners 210 and 212, a transform and quantization unit (TR + Q) 214, an inverse transform and quantization unit (iTR + iQ) 216, an entropy coding unit 218, one or more filters 220, and/or a buffer 222.

The encoder 200 may partition pictures (e.g., frames) of (e.g., comprising) the video sequence 202 into blocks and encode the video sequence 202 on a block-by-block basis. The encoder 200 may perform/apply a prediction technique on a block being encoded using either the inter prediction unit 206 or the intra prediction unit 208. The inter prediction unit 206 may perform inter prediction by searching for a block similar to the block being encoded in another, reconstructed picture (e.g., a reference picture) of the video sequence 202. The reconstructed picture may be or refer to a picture that was encoded and then decoded. The block determined during the search (e.g., a prediction block) may then be used to predict the block being encoded to remove redundant information. The inter prediction unit 206 may exploit temporal redundancy or similarities in scene content from picture to picture in the video sequence 202 to determine the prediction block. For example, scene content between pictures of the video sequence 202 may be similar except for differences due to motion and/or affine transformation of the screen content over time.

The intra prediction unit 208 may perform intra prediction by forming a prediction block based on data from reconstructed neighboring samples of the block to be encoded within the same picture of the video sequence 202. The reconstructed sample may be or refer to a sample that was encoded and then decoded. The intra prediction unit 208 may exploit spatial redundancy or similarities in scene content within a picture of the video sequence 202 to determine the prediction block. For example, the texture of a region of scene content in a picture may be similar to the texture in the immediate surrounding area of the region of the scene content in the same picture.

The combiner 210 may determine a prediction error (e.g., a residual) based on the difference between the block being encoded and the prediction block. The prediction error may represent non-redundant information that may be sent/transmitted to a decoder for accurate decoding of the video sequence 202.

The transform and quantization unit (TR + Q) 214 may transform and quantize the prediction error. The transform and quantization unit 214 may transform the prediction error into transform coefficients by applying, for example, a DCT to reduce correlated information in the prediction error. The transform and quantization unit 214 may quantize the coefficients by mapping data of the transform coefficients to a predefined set of representative values. The transform and quantization unit 214 may quantize the coefficients to reduce irrelevant information in the bitstream 204. The Irrelevant information may be information that may be removed from the coefficients without producing visible and/or perceptible distortion in the video sequence 202 after decoding (e.g., at a receiving device).

The entropy coding unit 218 may apply one or more entropy coding methods to the quantized transform coefficients to further reduce the bit rate. For example, the entropy coding unit 218 may apply context adaptive variable length coding (CAVLC), context adaptive binary arithmetic coding (CABAC), and/or syntax-based context-based binary arithmetic coding (SBAC). The entropy coded coefficients may be packed to form the bitstream 204.

The inverse transform and quantization unit (iTR + iQ) 216 may inverse quantize and inverse transform the quantized transform coefficients to determine a reconstructed prediction error. The combiner 212 may combine the reconstructed prediction error with the prediction block to form a reconstructed block. The filter(s) 220 may filter the reconstructed block, for example, using a deblocking filter and/or a sample-adaptive offset (SAO) filter. The buffer 222 may store the reconstructed block for prediction of one or more other blocks in the same and/or different picture of the video sequence 202.

The encoder 200 may further comprise an encoder control unit. The encoder control unit may be configured to control one or more units of the encoder 200 as shown in FIG. 2. The encoder control unit may control the one or more units of the encoder 200 such that the bitstream 204 may be generated in conformance with the requirements of one or more proprietary coding protocols, industry video coding standards, and/or any other video cording protocol. For example, the encoder control unit may control the one or more units of the encoder 200 such that bitstream 204 may be generated in conformance with one or more of ITU-T H.263, AVC, HEVC, VVC, VP8, VP9, AV1, and/or any other video coding standard/format.

The encoder control unit may be configured to attempt to minimize (or reduce) the bitrate of bitstream 204 and/or maximize (or increase) the reconstructed video quality (e.g., within the constraints of a proprietary coding protocol, industry video coding standard, and/or any other video cording protocol). For example, the encoder control unit may be configured to attempt to minimize or reduce the bitrate of bitstream 204 such that the reconstructed video quality does not fall below a certain level/threshold, and/or to maximize or increase the reconstructed video quality such that the bit rate (or bitrate) of bitstream 204 does not exceed a certain level/threshold. The encoder control unit may determine/control one or more of: partitioning of the pictures of the video sequence 202 into blocks, whether a block is inter predicted by the inter prediction unit 206 or intra predicted by the intra prediction unit 208, a motion vector for inter prediction of a block, an intra prediction mode among a plurality of intra prediction modes for intra prediction of a block, filtering performed by the filter(s) 220, and/or one or more transform types and/or quantization parameters applied by the transform and quantization unit 214. The encoder control unit may determine/control one or more of the above based on a rate-distortion measure for a block or picture being encoded. The encoder control unit may determine/control one or more of the above to reduce the rate-distortion measure for a block or picture being encoded.

The prediction type used to encode a block (intra or inter prediction), prediction information of the block (intra prediction mode if intra predicted, motion vector, etc.), and/or transform and/or quantization parameters, may be sent to the entropy coding unit 218 to be further compressed (e.g., to reduce the bit rate). For example, the entropy coding unit 218 may use/apply context adaptive variable length coding (CAVLC), context adaptive binary arithmetic coding (CABAC), and/or syntax-based context-based binary arithmetic coding (SBAC) to achieve further compression. The prediction type, prediction information, and/or transform and/or quantization parameters may be packed with the prediction error to form the bitstream 204.

The encoder 200 is merely an example and encoders different from the encoder 200 and/or modified versions of the encoder 200 may perform the methods and processes as described herein. For example, the encoder 200 may comprise other components and/or arrangements. One or more of the components shown in FIG. 2 may be optionally included in the encoder 200 (e.g., the entropy coding unit 218 and/or the filters(s) 220).

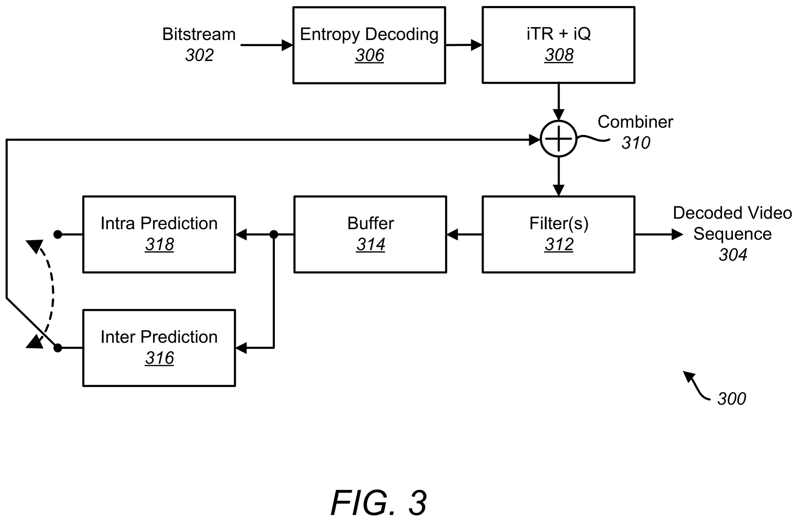

FIG. 3 shows an example decoder. A decoder 300 as shown in FIG. 3 may implement one or more processes described herein. The decoder 300 may decode a bitstream 302 into a decoded video sequence 304 for display and/or some other form of consumption. The decoder 300 may be implemented in the video encoding/decoding system 100 in FIG. 1 and/or in a computing, communication, or electronic device (e.g., desktop computer, laptop computer, tablet computer, smart phone, wearable device, television, camera, video gaming console, set-top box, and/or video streaming device). The decoder 300 may comprise an entropy decoding unit 306, an inverse transform and quantization (iTR + iQ) unit 308, a combiner 310, one or more filters 312, a buffer 314, an inter prediction unit 316, and/or an intra prediction unit 318.

The decoder 300 may comprise a decoder control unit configured to control one or more units of decoder 300. The decoder control unit may control the one or more units of decoder 300 such that the bitstream 302 is decoded in conformance with the requirements of one or more proprietary coding protocols, industry video coding standards, and/or any other communication protocol. For example, the decoder control unit may control the one or more units of decoder 300 such that the bitstream 302 is decoded in conformance with one or more of ITU-T H.263, AVC, HEVC, VVC, VP8, VP9, AV1, and/or any other video coding standard/format.

The decoder control unit may determine/control one or more of: whether a block is inter predicted by the inter prediction unit 316 or intra predicted by the intra prediction unit 318, a motion vector for inter prediction of a block, an intra prediction mode among a plurality of intra prediction modes for intra prediction of a block, filtering performed by the filter(s) 312, and/or one or more inverse transform types and/or inverse quantization parameters to be applied by the inverse transform and quantization unit 308. One or more of the control parameters used by the decoder control unit may be packed in bitstream 302.

The Entropy decoding unit 306 may entropy decode the bitstream 302. For example, the entropy decoding unit 306 may use/apply CAVLC, CABAC, and SBAC to decompress the prediction type used to encode a block (intra or inter prediction), prediction information of the block (intra prediction mode if intra predicted, motion vector, etc.), and transform and quantization parameters. The inverse transform and quantization unit 308 may inverse quantize and/or inverse transform the quantized transform coefficients to determine a decoded prediction error. The combiner 310 may combine the decoded prediction error with a prediction block to form a decoded block. The prediction block may be generated by the intra prediction unit 318 or the inter prediction unit 316 (e.g., as described above with respect to encoder 200 in FIG 2). The filter(s) 312 may filter the decoded block, for example, using a deblocking filter and/or a sample-adaptive offset (SAO) filter. The buffer 314 may store the decoded block for prediction of one or more other blocks in the same and/or different picture of the video sequence in the bitstream 302. The decoded video sequence 304 may be output from the filter(s) 312 as shown in FIG. 3.

The decoder 300 is merely an example and decoders different from the decoder 300 and/or modified versions of the decoder 300 may perform the methods and processes as described herein. For example, the decoder 300 may have other components and/or arrangements. One or more of the components shown in FIG. 3 may be optionally included in the decoder 300 (e.g., the entropy decoding unit 306 and/or the filters(s) 312).

Although not shown in FIGS. 2 and 3, each of the encoder 200 and the decoder 300 may further comprise an intra block copy unit in addition to inter prediction and intra prediction units. The intra block copy unit may perform/operate similar to an inter prediction unit but may predict blocks within the same picture. For example, the intra block copy unit may exploit repeated patterns that appear in screen content. The screen content may include computer generated text, graphics, animation, etc.

Video encoding and/or decoding may be performed on a block-by-block basis. The process of partitioning a picture into blocks may be adaptive based on the content of the picture. For example, larger block partitions may be used in areas of a picture with higher levels of homogeneity to improve coding efficiency.

A picture (e.g., in HEVC, or any other coding standard/format) may be partitioned into non-overlapping square blocks, which may be referred to as coding tree blocks (CTBs). The CTBs may comprise samples of a sample array. A CTB may have a size of 2nx2n samples, where n may be specified by a parameter of the encoding system. For example, n may be 4, 5, 6, or any other value. A CTB may have any other size. A CTB may be further partitioned by a recursive quadtree partitioning into coding blocks (CBs) of half vertical and half horizontal size. The CTB may form the root of the quadtree. A CB that is not split further as part of the recursive quadtree partitioning may be referred to as a leaf CB of the quadtree, and otherwise may be referred to as a non-leaf CB of the quadtree. A CB may have a minimum size specified by a parameter of the encoding system. For example, a CB may have a minimum size of 4x4, 8x8, 16x16, 32x32, 64x64 samples, or any other minimum size. A CB may be further partitioned into one or more prediction blocks (PBs) for performing inter and/or intra prediction. A PB may be a rectangular block of samples on which the same prediction type/mode may be applied. A CB may be further partitioned into intra sub-partitions (ISP) where the reconstructed samples of each sub-partition may be available to generate the prediction of the next sub-partition. For example, a CB may be split into 2 to 4 sub-partitions. For transformations, a CB may be partitioned into one or more transform blocks (TBs). A TB may be a rectangular block of samples that may determine/indicate an applied transform size.

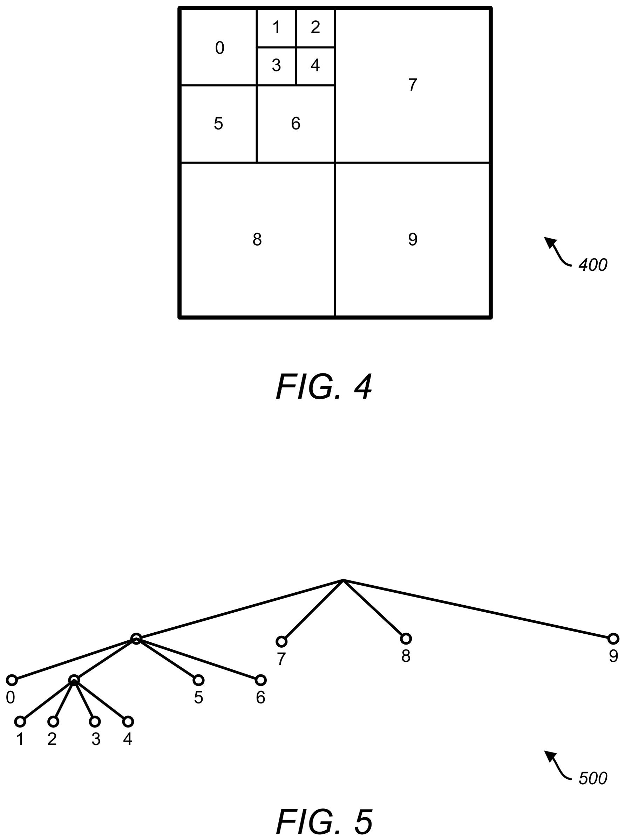

FIG. 4 shows an example quadtree partitioning of a CTB. FIG. 5 shows an example quadtree corresponding to the example quadtree partitioning of the CTB 400 in FIG. 4. As shown in the examples of FIGS. 4 and 5, the CTB 400 may first be partitioned into four CBs of half vertical and half horizontal size. Three of the resulting CBs of the first level partitioning of CTB 400 may be leaf CBs. The three leaf CBs of the first level partitioning of CTB 400 are respectively labeled 7, 8, and 9 in FIGS. 4 and 5. The non-leaf CB of the first level partitioning of CTB 400 may be partitioned into four sub-CBs of half vertical and half horizontal size. Three of the resulting sub-CBs of the second level partitioning of CTB 400 may be leaf CBs. The three leaf CBs of the second level partitioning of CTB 400 are respectively labeled 0, 5, and 6 in FIGS. 4 and 5. The non-leaf CB of the second level partitioning of CTB 400 may be partitioned into four leaf CBs of half vertical and half horizontal size. The four leaf CBs may be respectively labeled 1, 2, 3, and 4 in FIGS. 4 and 5.

The CTB 400 of FIG. 4 may be partitioned into 10 leaf CBs respectively labeled 0-9, and/or any other quantity of leaf CBs. The 10 leaf CBs may correspond to 10 CB leaf nodes (e.g., 10 CB leaf nodes of the quadtree 500 as shown in FIG. 5). In other examples, a CTB may be partitioned into a different number of leaf CBs. The resulting quadtree partitioning of the CTB 400 may be scanned using a z-scan (e.g., left-to-right, top-to-bottom) to form the sequence order for encoding/decoding the CB leaf nodes. A numeric label (e.g., indicator, index) of each CB leaf node in FIGS. 4 and 5 may correspond to the sequence order for encoding/decoding. For example, CB leaf node 0 may be encoded/decoded first and CB leaf node 9 may be encoded/decoded last. Although not shown in FIGS. 4 and 5, each CB leaf node may comprise one or more PBs and/or TBs.

A picture, in VVC (or in any other coding standard/format), may be partitioned in a similar manner (such as in HEVC). A picture may be first partitioned into non-overlapping square CTBs. The CTBs may then be partitioned, using a recursive quadtree partitioning, into CBs of half vertical and half horizontal size. A quadtree leaf node (e.g., in VVC) may be further partitioned by a binary tree or ternary tree partitioning (or any other partitioning) into CBs of unequal sizes.

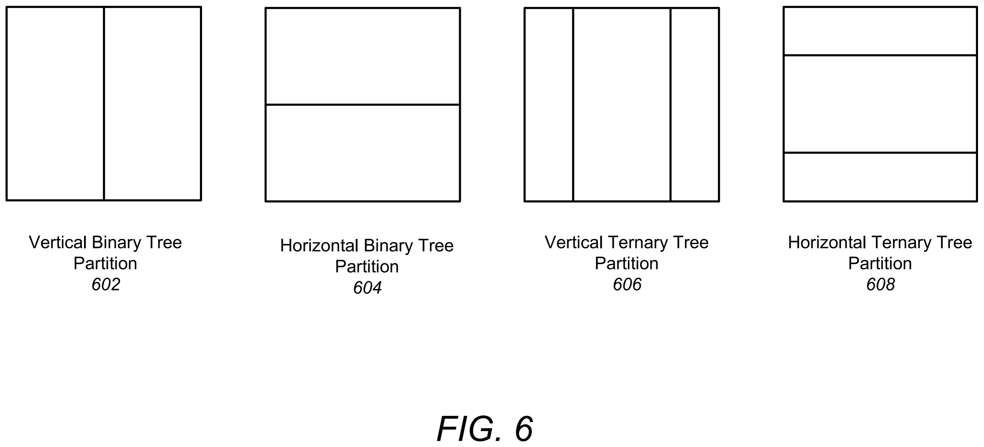

FIG. 6 shows example binary tree and ternary tree partitions. A binary tree partition may divide a parent block in half in either a vertical direction 602 or a horizontal direction 604. The resulting partitions may be half in size as compared to the parent block. The resulting partitions may correspond to sizes that are less than and/or greater than half of the parent block size. A ternary tree partition may divide a parent block into three parts in either a vertical direction 606 or a horizontal direction 608. FIG. 6 shows an example in which the middle partition may be twice as large as the other two end partitions in the ternary tree partitions. In other examples, partitions may be of other sizes relative to each other and to the parent block. Binary and ternary tree partitions are examples of multi-type tree partitioning. Multi-type tree partitions may comprise partitioning a parent block into other quantities of smaller blocks. The block partitioning strategy (e.g., in VVC) may be referred to as a combination of quadtree and multi-type tree partitioning (quadtree + multi-type tree partitioning) because of the addition of binary and/or ternary tree partitioning to quadtree partitioning.

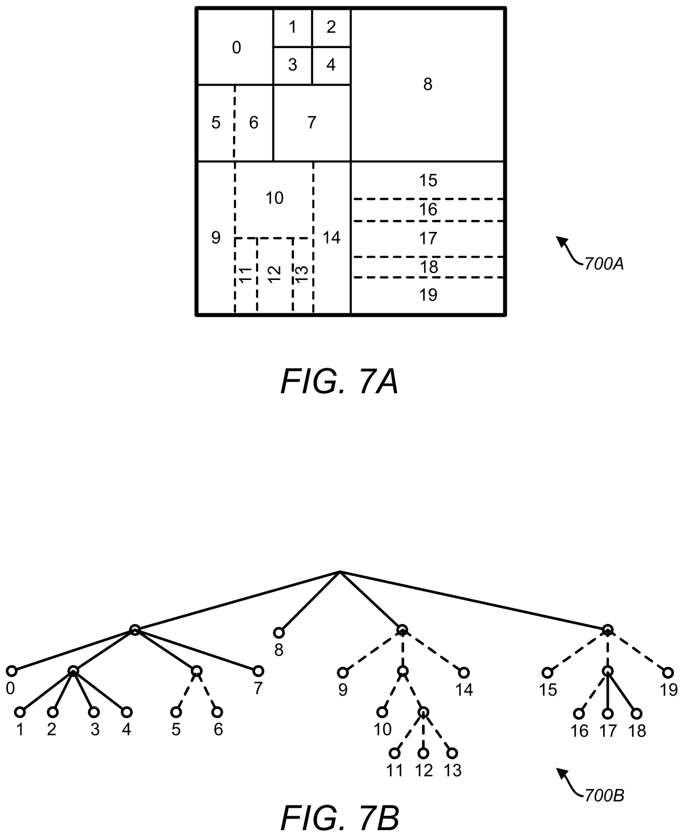

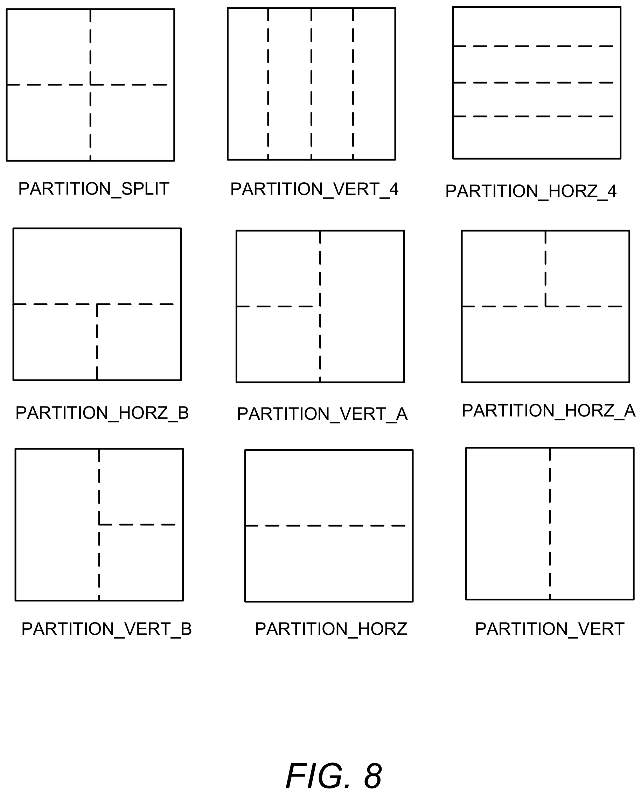

FIG. 7 shows an example of combined quadtree and multi-type tree partitioning of a CTB. FIG. 8 shows an example tree corresponding to the combined quadtree and multi-type tree partitioning of the CTB 700 shown in FIG. 7. In both FIGS. 7 and 8, quadtree splits are shown in solid lines and multi-type tree splits are shown in dashed lines. For ease of explanation, the CTB 700 is shown with the same quadtree partitioning as the CTB 400 described in FIG. 4, and a description of the quadtree partitioning of the CTB 700 (similar to that for CTB 400) is omitted. The quadtree partitioning of the CTB 700 is merely an example and a CTB may be quadtree partitioned in a manner different from the CTB 700. Additional multi-type tree partitions of the CTB 700 may be made relative to three leaf CBs shown in FIG. 4. The three leaf CBs in FIG. 4 that are shown in FIG. 7 as being further partitioned may be leaf CBs 5, 8, and 9. The three leaf CBs may be further partitioned using one or more binary and/or ternary tree partitions.

The leaf CB 5 of FIG. 4 may be partitioned into two CBs based on a vertical binary tree partitioning. The two resulting CBs may be leaf CBs respectively labeled 5 and 6 in FIGS. 7 and 8. The leaf CB 8 of FIG. 4 may be partitioned into three CBs based on a vertical ternary tree partition. Two of the three resulting CBs may be leaf CBs respectively labeled 9 and 14 in FIGS. 7 and 8. The remaining, non-leaf CB may be partitioned first into two CBs based on a horizontal binary tree partition. One of the two CBs may be a leaf CB labeled 10. The other of the two CBs may be further partitioned into three CBs based on a vertical ternary tree partition. The resulting three CBs may be leaf CBs respectively labeled 11, 12, and 13 in FIGS. 7 and 8. The leaf CB 9 of FIG. 4 may be partitioned into three CBs based on a horizontal ternary tree partition. Two of the three CBs may be leaf CBs respectively labeled 15 and 19 in FIGS. 7 and 8. The remaining, non-leaf CB may be partitioned into three CBs based on another horizontal ternary tree partition. The resulting three CBs may all be leaf CBs respectively labeled 16, 17, and 18 in FIGS. 7 and 8.

Altogether, the CTB 700 may be partitioned into 20 leaf CBs respectively labeled 0-19. The 20 leaf CBs may correspond to 20 leaf nodes (e.g., 20 leaf nodes of the tree 800 shown in FIG. 8). The resulting combination of quadtree and multi-type tree partitioning of the CTB 700 may be scanned using a z-scan (left-to-right, top-to-bottom) to form the sequence order for encoding/decoding the CB leaf nodes. A numeric label of each CB leaf node in FIGS. 7 and 8 may correspond to the sequence order for encoding/decoding, with CB leaf node 0 encoded/decoded first and CB leaf node 19 encoded/decoded last. Although not shown in FIGS. 7 and 8, it should be noted that each CB leaf node may comprise one or more PBs and/or TBs.

A coding standard/format (e.g., HEVC, VVC, or any other coding standard/format) may define various units (e.g., in addition to specifying various blocks (e.g., CTBs, CBs, PBs, TBs)). Blocks may comprise a rectangular area of samples in a sample array. Units may comprise the collocated blocks of samples from the different sample arrays (e.g., luma and chroma sample arrays) that form a picture as well as syntax elements and prediction data of the blocks. A coding tree unit (CTU) may comprise the collocated CTBs of the different sample arrays and may form a complete entity in an encoded bit stream (or bitstream). A coding unit (CU) may comprise the collocated CBs of the different sample arrays and syntax structures used to code the samples of the CBs. A prediction unit (PU) may comprise the collocated PBs of the different sample arrays and syntax elements used to predict the PBs. A transform unit (TU) may comprise TBs of the different samples arrays and syntax elements used to transform the TBs.

A block may refer to any of a CTB, CB, PB, TB, CTU, CU, PU, and/or TU (e.g., in the context of HEVC, VVC, or any other coding format/standard). A block may be used to refer to similar data structures in the context of any video coding format/standard/protocol. For example, a block may refer to a macroblock in the AVC standard, a macroblock or a sub-block in the VP8 coding format, a superblock or a sub-block in the VP9 coding format, and/or a superblock or a sub-block in the AV1 coding format.

Samples of a block to be encoded (e.g., a current block) may be predicted from samples in a line of samples immediately adjacent to the current block, for example, in intra prediction. For example, the line of samples may include samples of the column immediately adjacent to the left-most column of the current block and samples of the row immediately adjacent to the top-most row of the current block. The samples from the immediately adjacent column and row may be jointly referred to as reference samples. Each sample of the current block may be predicted (e.g., in an intra prediction mode) by projecting the position of the sample in the current block in a given direction to a point along the reference samples. The sample may be predicted by interpolating between the two closest reference samples of the projection point if the projection does not fall directly on a reference sample. A prediction error (e.g., a residual) may be determined for the current block based on differences between the predicted sample values and the original sample values of the current block.

Predicting samples and determining a prediction error based on a difference between the predicted samples and original samples may be performed (e.g., at an encoder) for a plurality of different intra prediction modes (e.g., including non-directional intra prediction modes). The encoder may select one of the plurality of intra prediction modes and its corresponding prediction error to encode the current block. The encoder may send an indication of the selected prediction mode and its corresponding prediction error to a decoder for decoding of the current block. The decoder may decode the current block by predicting the samples of the current block, using the intra prediction mode indicated by the encoder, and/or combining the predicted samples with the prediction error.

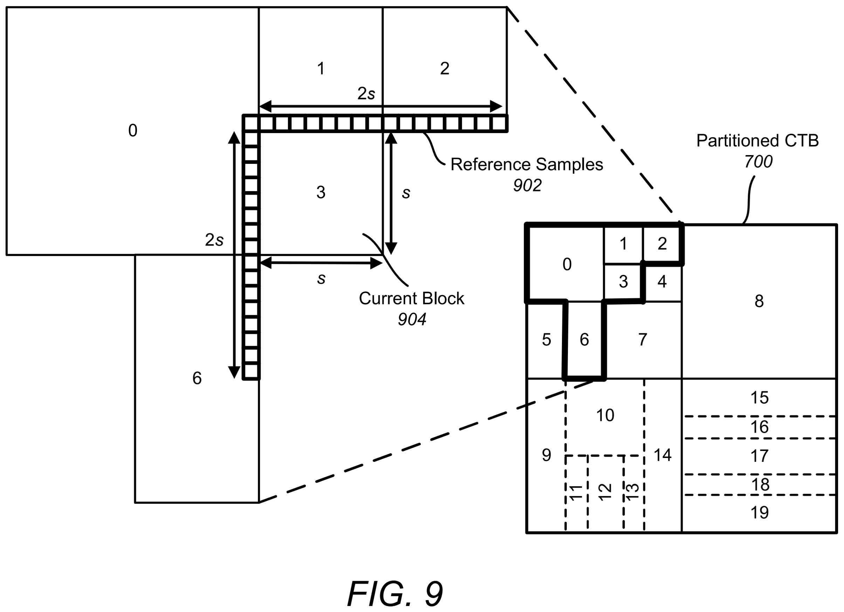

FIG. 9 shows an example set of reference samples determined for intra prediction of a current block. The current block 904 may correspond to a block being encoded and/or decoded. The current block 904 may correspond to block 3 of the partitioned CTB 700 as shown in FIG. 7. As described herein, the numeric labels 0-19 of the blocks of partitioned CTB 700 may correspond to the sequence order for encoding/decoding the blocks and may be used as such in the example of FIG. 9.

Reference samples 902 may include a line of samples immediately adjacent to current block 904. The reference samples 902 may include samples from a column and a row immediately adjacent to current block 904. For example, the line of samples may include reference samples to the left and/or above the current block 904. Reference samples 902 may be obtained (or selected) from a reference line of multiple reference lines (MRL). The MRL may include a line of samples adjacent to current block 904 and a line of samples not adjacent to the current block 904. The MRL may include reference lines identified by corresponding reference line indices that may indicate an i-th line of samples adjacent to current block 904 such that the 0-th line indicates the reference line immediately adjacent (or closest) to the current block 904 and a higher numbered i-th line indicates a line of samples further away from the current block 904. An encoder may select a reference line from a set of MRL and/or may signal an MRL index in the bitstream to indicate the selected reference line. For example, the encoder may signal a codeword encoding the MRL index. The decoder may decode the codeword to determine the MRL index that identifies a specific reference line used in intra prediction of the current block 904.

The current block 904 may be w x h samples in size. The reference samples 902 may comprise: 2w samples (or any other quantity of samples) of an i-th row (e.g., indicated by an MRL index) adjacent to the top-most row of current block 904, 2h samples (or any other quantity of samples) of the i-th column adjacent to the left-most column of current block 904, and the top left neighboring corner sample(s) extending from the i-th column and i-th row with respect to current block 904, for example, for the current block 904 that is w x h samples in size. The current block 904 may be square, such that w = h = s. In other examples, a current block need not be square, such that w # h. Available samples from neighboring blocks of the current block 904 may be used for constructing the set of reference samples 902. Samples may not be available for constructing the set of reference samples 902, for example, if the samples lie outside the picture of the current block, the samples are part of a different slice of the current block (e.g., if the concept of slices is used), and/or the samples belong to blocks that have been inter coded and constrained intra prediction is indicated. Intra prediction may not be dependent on inter predicted blocks, for example, if constrained intra prediction is indicated.

Samples that may not be available for constructing the set of reference samples 902 may comprise samples in blocks that have not already been encoded and reconstructed at an encoder and/or decoded at a decoder based on the sequence order for encoding/decoding. Restriction of such samples from inclusion in the set of reference samples 902 may allow identical prediction results to be determined at both the encoder and decoder. Samples from neighboring blocks 0, 1, 2, and 6 may be available to construct the reference samples 902 given that these blocks are encoded and reconstructed at an encoder and decoded at a decoder prior to coding of the current block 904. The samples from neighboring blocks 0, 1, and 2 may be available to construct reference samples 902, for example, if there are no other issues (e.g., as mentioned above) preventing the availability of the samples from the neighboring blocks 0, 1, and 2. The portion of reference samples 902 from neighboring block 6 may not be available due to the sequence order for encoding/decoding (e.g., because the block 6 may not have already been encoded and reconstructed at the encoder and/or decoded at the decoder based on the sequence order for encoding/decoding).

Unavailable samples from the reference samples 902 may be filled with one or more of the available reference samples 902. For example, an unavailable reference sample may be filled with a nearest available reference sample. The nearest available reference sample may be determined by moving in a clock-wise direction through the reference samples 902 from the position of the unavailable reference. The reference samples 902 may be filled with the mid-value of the dynamic range of the picture being coded, for example, if no reference samples are available.

Samples of the current block 904 may be intra predicted based on reference samples 902, for example, based on (e.g., after) determination and (optionally) filtering of the reference samples 902. A filtering scheme (e.g., a filtering algorithm) may be used/applied for/to the reference samples 902, for example, to improve prediction accuracy. The filtering scheme may be one of a plurality of filter types including at least a smoothing filter (or reference sample smoothing filter) or an interpolation filter. Only one of the plurality of filter types may be selected (e.g., activated) to be used/applied for/to reference samples of a given block, for example, if the reference samples are to be filtered. For example, the interpolation filter may not be selected (e.g., may be disabled), for example, if the smoothing filter is selected (e.g., activated), or vice versa.

A plurality of (e.g., many) encoders/decoders may support a plurality of intra prediction modes in accordance with one or more video coding standards. For example, HEVC supports 35 intra prediction modes, including a planar mode, a direct current (DC) mode, and 33 angular modes. VVC supports 67 intra prediction modes, including a planar mode, a DC mode, and 65 angular modes. Planar and DC modes may be used to predict smooth and gradually changing regions of a picture. Angular modes may be used to predict directional structures in regions of a picture. Any quantity of intra prediction modes may be supported.

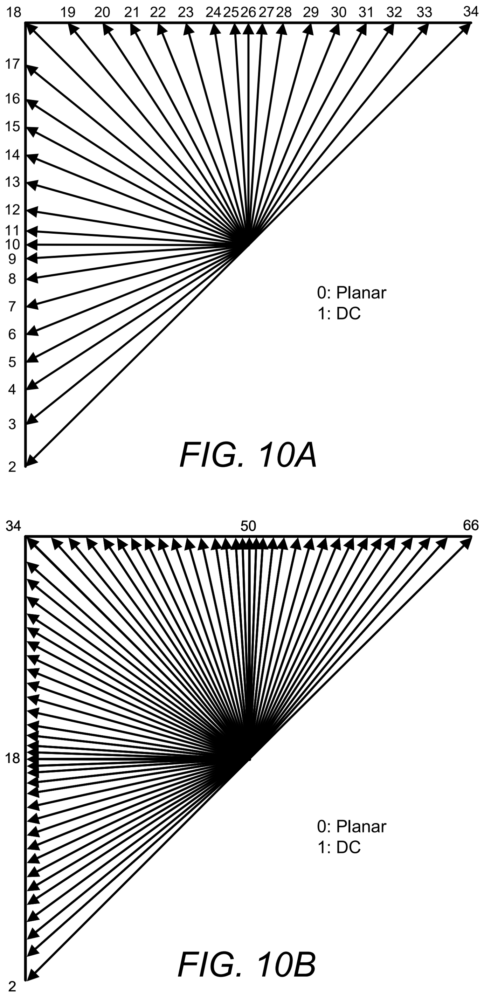

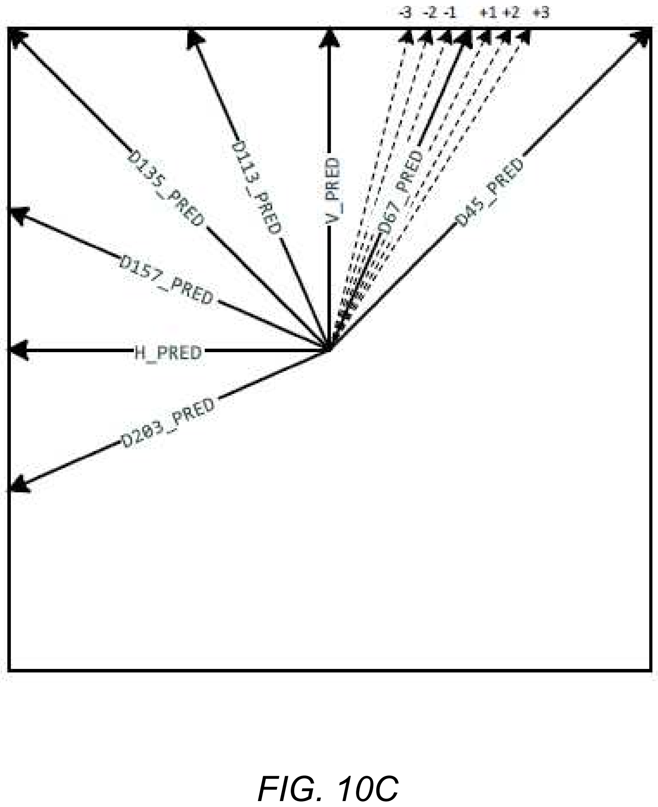

FIGS. 10A and 10B show example intra prediction modes. FIG. 10A shows 35 intra prediction modes, such as supported by HEVC. The 35 intra prediction modes may be indicated/identified by indices 0 to 34. Prediction mode 0 may correspond to planar mode. Prediction mode 1 may correspond to DC mode. Prediction modes 2-34 may correspond to angular modes. Prediction modes 2-18 may be referred to as horizontal prediction modes because the principal source of prediction is in the horizontal direction. Prediction modes 19-34 may be referred to as vertical prediction modes because the principal source of prediction is in the vertical direction.

FIG. 10B shows 67 intra prediction modes, such as supported by VVC. The 67 intra prediction modes may be indicated/identified by indices 0 to 66. Prediction mode 0 may correspond to planar mode. Prediction mode 1 corresponds to DC mode. Prediction modes 2-66 may correspond to angular modes. Prediction modes 2-34 may be referred to as horizontal prediction modes because the principal source of prediction is in the horizontal direction. Prediction modes 35-66 may be referred to as vertical prediction modes because the principal source of prediction is in the vertical direction. Some of the intra prediction modes illustrated in FIG. 10B may be adaptively replaced by wide-angle directions because blocks in VVC need not be squares.

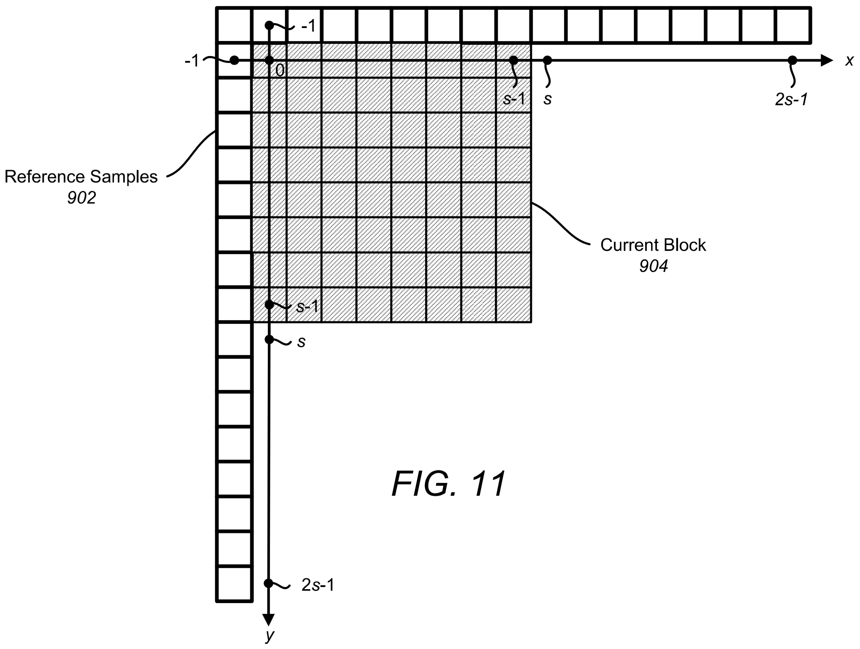

FIG. 11 shows an example current block 904 and corresponding reference samples 902 from FIG. 9. FIG. 11 shows current block 904 and reference samples 902 in a two-dimensional x, y plane, where a sample may be referenced as $p[x][y]$, for example, to further describe how intra prediction modes are used/applied for/to determine a prediction (e.g., a prediction block) of current block 904. The reference samples 902 may be from a reference line among a set of multiple reference lines (MRL) 908-910. To simplify the prediction process, reference samples 902 may be placed in two, one-dimensional arrays. The reference samples 902 belonging to a reference line $l$ from the set of MRL 908-912, above the current block 904, may be placed in the one-dimensional array $ref_1[x]$:

$$ref_1[x] = p[-l+x][-l], \ (x \geq 0). \tag{1}$$

The reference samples 902 belonging to reference line $l$, to the left of current block 904, may be placed in the one-dimensional array $ref_2[y]$:

$$ref_2[y] = p[-l][-l+y], \ (y \geq 0). \tag{2}$$

The variable $l$ represents how many lines away the selected reference line is from current block. For example, if a reference line #0 is selected, then $l$ is set to 1 to indicate the reference line adjacent to current block 904.

Reference samples 902 may be from reference line #0 that is immediately adjacent to current block 904, for example, if MRL is not activated or selected. In this example, the variable $l$ in Equations (1) and (2) is set to 1.

The prediction process may comprise determination of a predicted sample p[x][y] (e.g., a predicted value) at a location [x][y] in current block 904. For planar mode, a sample at the location [x][y] in current block 904 may be predicted by determining/calculating the mean of two interpolated values. The first of the two interpolated values may be based on a horizontal linear interpolation at the location [x][y] in the current block 904. The second of the two interpolated values may be based on a vertical linear interpolation at the location [x][y] in the current block 904. The predicted sample p[x][y] in the current block 904 may be determined/calculated as:

$$p[x][y] = \frac{1}{2 \cdot s}(h[x][y] + v[x][y] + s), \tag{3}$$

where

$$h[x][y] = (s - x - 1) \cdot ref_2[y] + (x + 1) \cdot ref_1[s] \tag{4}$$

may be the horizonal linear interpolation at the location [x][y] in current block 904 and

$$v[x][y] = (s - y - 1) \cdot ref_1[x] + (y + 1) \cdot ref_2[s] \tag{5}$$

may be the vertical linear interpolation at the location [x][y] in current block 904. $s$ may be equal to a length of a side (e.g., a number of samples on a side) of the current block 904.

A sample at a location [x][y] in current block 904 may be predicted by the mean of the reference samples 902, for example, for a DC mode. The predicted sample p[x][y] in current block 904 may be determined/calculated as:

$$p[x][y] = \frac{1}{2 \cdot s} \left( \sum_{x=0}^{s-1} ref_1[x] + \sum_{y=0}^{s-1} ref_2[y] \right). \tag{6}$$

A sample at a location [x][y] in current block 904 may be predicted by projecting the location [x][y] in a direction specified by a given angular mode to a point on the horizontal or vertical line of samples comprising reference samples 902, for example, for an angular mode. The sample at the location [x][y] may be predicted by interpolating between the two closest reference samples of the projection point, for example, if the projection does not fall directly on a reference sample. The direction specified by the angular mode may be given by an angle φ defined relative to the y-axis for vertical prediction modes (e.g., modes 19-34 in HEVC and modes 35-66 in VVC). The direction specified by the angular mode may be given by an angle φ defined relative to the x-axis for horizontal prediction modes (e.g., modes 2-18 in HEVC and modes 2-34 in VVC).

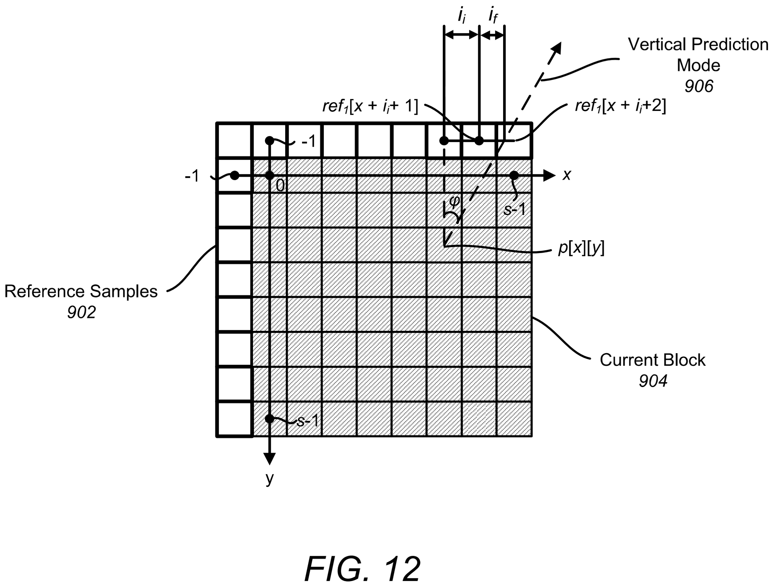

FIG. 12 shows an example application of an intra prediction mode (e.g., an angular mode such as vertical prediction mode 906) for prediction of a current block 904. FIG. 12 specifically shows prediction of a sample at a location [x] [y] in current block 904 for a vertical prediction mode 906. Vertical prediction mode 906 may be given by an angle φ with respect to the vertical axis. The location [x][y] in current block 904, in vertical prediction modes, may be projected to a point (e.g., referred to as a projection point) on the horizontal line of reference samples $ref_1[x]$. The reference samples 902 are only partially shown in FIG. 12 and shown as being from a reference line with reference line index of 0 for ease of illustration. Reference samples 902 may be from another reference line of the set of MRL, as explained in FIG. 9. As shown in FIG. 12, the projection point on the horizontal line of reference samples $ref_1[x]$ may not be exactly on a reference sample. A predicted sample p[x][y] in current block 904 may be determined/calculated by linearly interpolating between the two reference samples, for example, if the projection point falls at a fractional sample position between two reference samples. The predicted sample p[x][y] may be determined/calculated as:

$$p[x][y] = (1 - i_f) \cdot ref_1[x + i_i + 1] + i_f \cdot ref_1[x + i_i + 2]. \tag{7}$$

$i_i$ may be the integer part of the horizontal displacement of the projection point relative to the location [x][y]. $i_i$ may be determined/calculated as a function of the tangent of the angle φ of the vertical prediction mode 906 as:

$$i_i = \lfloor (y + 1) \cdot \tan \varphi \rfloor. \tag{8}$$

$i_f$ may be the fractional part of the horizontal displacement of the projection point relative to the location [x][y] and may be determined/calculated as:

$$i_f = ((y + 1) \cdot \tan \varphi) - \lfloor (y + 1) \cdot \tan \varphi \rfloor, \tag{9}$$

where $\lfloor \cdot \rfloor$ is the integer floor function.

A location [x][y] of a sample in current block 904 may be projected onto the vertical line of reference samples $ref_2$ [y], for example, for horizontal prediction modes. A predicted sample p[x][y] for horizontal prediction modes may be determined/calculated as:

$$p[x][y] = (1 - i_f) \cdot ref_2[y + i_i + 1] + i_f \cdot ref_2[y + i_i + 2]. \tag{10}$$

$i_i$ may be the integer part of the vertical displacement of the projection point relative to the location [x][y]. $i_i$ may be determined/calculated as a function of the tangent of the angle φ of the horizontal prediction mode as:

$$i_i = \lfloor (x + 1) \cdot \tan \varphi \rfloor. \tag{11}$$

$i_f$ may be the fractional part of the vertical displacement of the projection point relative to the location [x][y]. $i_f$ may be determined/calculated as:

$$i_f = ((x + 1) \cdot \tan \varphi) - \lfloor (x + 1) \cdot \tan \varphi \rfloor, \qquad (12)$$

where $\lfloor \cdot \rfloor$ is the integer floor function.

The interpolation functions given by Equations (7) and (10) may be implemented by an encoder and/or a decoder (e.g., encoder 200 in FIG. 2 and/or decoder 300 in FIG. 3). The interpolation functions may be implemented by finite impulse response (FIR) filters. For example, the interpolation functions may be implemented as a set of two-tap FIR filters. The coefficients of the two-tap FIR filters may be respectively given by $(1-i_f)$ and $i_f$. The predicted sample $p[x][y]$, in angular intra prediction, may be calculated with some predefined level of sample accuracy (e.g., 1/32 sample accuracy, or accuracy defined by any other metric). For 1/32 sample accuracy, the set of two-tap FIR interpolation filters may comprise up to 32 different two-tap FIR interpolation filters - one for each of the 32 possible values of the fractional part of the projected displacement $i_f$. In other examples, different levels of sample accuracy may be used.

The FIR filters may be used for predicting chroma samples and/or luma samples. For example, the two-tap interpolation FIR filter may be used for predicting chroma samples and a same and/or a different interpolation technique/filter may be used for luma samples. For example, a four-tap FIR filter may be used to determine a predicted value of a luma sample. Coefficients of the four tap FIR filter may be determined based on $i_f$ (e.g., similar to the two-tap FIR filter). For 1/32 sample accuracy, a set of 32 different four-tap FIR filters may comprise up to 32 different four-tap FIR filters - one for each of the 32 possible values of the fractional part of the projected displacement $i_f$. In other examples, different levels of sample accuracy may be used. The set of four-tap FIR filters may be stored in a look-up table (LUT) and referenced based on $i_f$. A predicted sample $p[x][y]$, for vertical prediction modes, may be determined based on the four-tap FIR filter as:

$$p[x][y] = \sum_{i=0}^{3} fT[i] \cdot ref_1[x + iIdx + i], \qquad (13)$$

where $fT[i]$, $i = 0\ldots3$, may be the filter coefficients, and $Idx$ is integer displacement. A predicted sample $p[x][y]$, for horizontal prediction modes, may be determined based on the four-tap FIR filter as:

$$p[x][y] = \sum_{i=0}^{3} fT[i] \cdot ref_2[y + iIdx + i]. \qquad (14)$$

Supplementary reference samples may be determined/constructed if the location $[x][y]$ of a sample in current block 904 to be predicted is projected to a negative x coordinate. The location $[x][y]$ of a sample may be projected to a negative x coordinate, for example, if negative vertical prediction angles $\varphi$ are used. The supplementary reference samples may be determined/constructed by projecting the reference samples in $ref_2[y]$ in the vertical line of reference samples 902 to the horizontal line of reference samples 902 using the negative vertical prediction angle $\varphi$. Supplementary reference samples may be similarly determined/constructed, for example, if the location $[x][y]$ of a sample in current block 904 to be predicted is projected to a negative y coordinate. The location $[x][y]$ of a sample may be projected to a negative y coordinate, for example, if negative horizontal prediction angles $\varphi$ are used. The supplementary reference samples may be determined/constructed by projecting the reference samples in $ref_1[x]$ on the horizontal line of reference samples 902 to the vertical line of reference samples 902 using the negative horizontal prediction angle $\varphi$.

An encoder may determine/predict samples of a current block being encoded (e.g., current block 904) for a plurality of intra prediction modes (e.g., using one or more of the functions described herein). For example, an encoder may determine/predict samples of a current block for each of 35 intra prediction modes in HEVC and/or 67 intra prediction modes in VVC and/or including extended intra prediction modes from WAIP for rectangular blocks. The encoder may determine, for each intra prediction mode applied, a corresponding prediction error for the current block based on a difference (e.g., sum of squared differences (SSD), sum of absolute differences (SAD), or sum of absolute transformed differences (SATD)) between the prediction samples, generated from reference samples 902 of a reference line (e.g., from a set of MRL), determined for the intra prediction mode and the original samples of the current block. The encoder may determine/select one of the intra prediction modes to encode the current block based on the determined prediction errors. For example, the encoder may determine/select one of the intra prediction modes that results in the smallest prediction error for the current block. The encoder may determine/select the intra prediction mode and the associated reference line to encode the current block based on a rate-distortion measure (e.g., Lagrangian rate-distortion cost) determined using the prediction errors. The encoder may signal an indication of the determined/selected intra prediction mode and an indication of the associated MRL index (which may indicate a reference line index). The encoder may signal an indication of the determined/selected intra prediction mode and an indication of the associated MRL index (which may indicate a reference line index), for example, in the bitstream to a decoder for decoding of the current block. The encoder may also signal in the bitstream to the decoder a corresponding prediction error (e.g., residual) of the intra prediction mode.

A decoder may determine/predict samples of a current block being decoded (e.g., current block 904) for an intra prediction mode. For example, a decoder may receive an indication of a reference line (e.g., a reference line index or an MRL index associated with the reference line index) and an intra prediction mode (e.g., an angular intra prediction mode) from an encoder for a current block. The decoder may retrieve a set of reference samples and perform intra prediction, for example, based on the MRL index and the intra prediction mode indicated by the encoder for the current block in a similar manner (e.g., as described above for the encoder). The decoder may obtain the reference samples from a reference line indicated/identified by the decoded MRL index. The reference line may have reference line index 0 and may be immediately adjacent to the current block, for example, if/when MRL is not enabled/activated/selected. In these examples, no indication of MRL index is signaled.

The decoder may add predicted values of the samples (e.g., determined based on the intra prediction mode) of the current block to a residual of the current block to reconstruct the current block. A decoder need not receive an indication of an angular intra prediction mode from an encoder for a current block. A decoder may determine an intra prediction mode, for example, through other decoder-side means (e.g., by applying template-based intra mode derivation (TIMD) tool/technique). While various examples herein correspond to intra prediction modes in HEVC and VVC, the methods, devices, and systems as described herein may be applied to/used for other intra prediction modes (e.g., as used in other video coding standards/formats, such as VP8, VP9, AV1, etc.).

Intra prediction may exploit correlations between spatially neighboring samples in the same picture of a video sequence to perform video compression. Inter prediction is another coding tool that may be used to perform video compression. Inter prediction may exploit correlations in the time domain between blocks of samples in different pictures of a video sequence. For example, an object may be seen across multiple pictures of a video sequence. The object may move (e.g., by some translation and/or affine motion) or remain stationary across the multiple pictures. A current block of samples in a current picture being encoded may have/be associated with a corresponding block of samples in a previously decoded picture. The corresponding block of samples may accurately predict the current block of samples. The corresponding block of samples may be displaced from the current block of samples, for example, due to movement of the object, represented in both blocks, across the respective pictures of the blocks. The previously decoded picture may be a reference picture. The corresponding block of samples in the reference picture may be a reference block for motion compensated prediction. An encoder may use a block matching technique to estimate the displacement (or motion) of the object and/or to determine the reference block in the reference picture.

An encoder may determine a difference between a current block and a prediction for a current block (e.g., similar to intra prediction). An encoder may determine a difference, for example, based on/after determining/generating a prediction for a current block (e.g., using inter prediction). The difference may be a prediction error (e.g., a residual). The encoder may store and/or send (e.g., signal), in/via a bitstream, the prediction error and/or other related prediction information. The prediction error and/or other related prediction information may be used for decoding and/or other forms of consumption. A decoder may decode the current block by predicting the samples of the current block (e.g., by using the related prediction information) and combining the predicted samples with the prediction error.

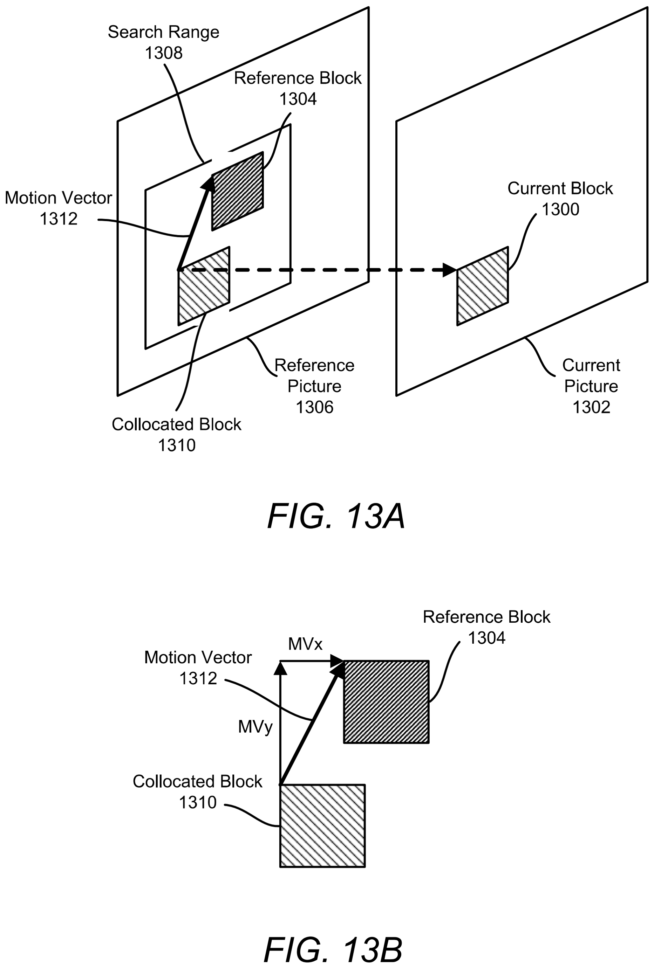

FIG. 13A shows an example of inter prediction. The inter prediction may be performed for a current block 1300 in a current picture 1302 being encoded. An encoder (e.g., encoder 200 as shown in FIG. 2) may perform inter prediction to determine and/or generate a reference block 1304 in a reference picture 1306. Reference block 1304 may be used to predict the current block 1300. Reference pictures (e.g., reference picture 1306) may be prior decoded pictures available at the encoder and/or a decoder. Availability of a prior decoded picture may depend/be based on whether the prior decoded picture is available in a decoded picture buffer, at the time, current block 1300 is being encoded and/or decoded. The encoder may search the one or more reference pictures 1306 for a block (e.g., a candidate reference block) that is similar (or substantially similar) to current block 1300. The encoder may determine the best matching block from the blocks (e.g., candidate reference blocks) tested during the searching process. The best matching block may be a reference block 1304. The encoder may determine that reference block 1304 is the best matching reference block based on one or more cost criteria. The one or more cost criteria may comprise a rate-distortion criterion (e.g., Lagrangian rate-distortion cost). The one or more cost criteria may be based on a difference (e.g., SSD, SAD, and/or SATD) between prediction samples of reference block 1304 and original samples of current block 1300.

The encoder may search for reference block 1304 within a reference region (e.g., a search range 1308). The reference region (e.g., a search range 1308) may be positioned around a collocated block (or position) 1310, of current block 1300, in reference picture 1306. Collocated block 1310 may have a same position in the reference picture 1306 as the current block 1300 in the current picture 1302. The reference region (e.g., search range 1308) may at least partially extend outside of reference picture 1306. Constant boundary extension may be used, for example, if the reference region (e.g., search range 1308) extends outside of reference picture 1306. The constant boundary extension may be used such that values of the samples in a row or a column of reference picture 1306, immediately adjacent to a portion of the reference region (e.g., search range 1308) extending outside of reference picture 1306, may be used for sample locations outside of reference picture 1306. A subset of potential positions, or all potential positions, within the reference region (e.g., search range 1308) may be searched for reference block 1304. The encoder may utilize one or more search implementations to determine and/or generate the reference block 1304. For example, the encoder may determine a set of candidate search positions based on motion information of neighboring blocks (e.g., a motion vector 1312) to the current block 1300.

One or more reference pictures may be searched by the encoder during inter prediction to determine and/or generate the best matching reference block. The reference pictures searched by the encoder may be included in (e.g., added to) one or more reference picture lists. For example, in HEVC and VVC (and/or in one or more other communication protocols), two reference picture lists may be used (e.g., a reference picture list 0 and a reference picture list 1). A reference picture list may include one or more pictures. The reference picture 1306 of reference block 1304 may be indicated by a reference index pointing into a reference picture list comprising reference picture 1306.

FIG. 13B shows an example motion vector. A displacement between reference block 1304 and current block 1300 may be interpreted as an estimate of the motion between reference block 1304 and current block 1300 across their respective pictures. The displacement may be represented by a motion vector 1312. For example, motion vector 1312 may be indicated by a horizontal component (MVx) and a vertical component (MVy) relative to the position of current block 1300. A motion vector (e.g., motion vector 1312) may have fractional or integer resolution. A motion vector with fractional resolution may point between two samples in a reference picture to provide a better estimation of the motion of current block 1300. For example, a motion vector may have 1/2, 1/4, 1/8, 1/16, 1/32, or any other fractional sample resolution. Interpolation between the two samples at integer positions may be used to generate a reference block and its corresponding samples at fractional positions, for example, if a motion vector points to a non-integer sample value in the reference picture. The interpolation may be performed by a filter with two or more taps.

The encoder may determine a difference (e.g., a corresponding sample-by-sample difference) between reference block 1304 and current block 1300. The encoder may determine the difference between reference block 1304 and current block 1300, for example, based on/after reference block 1304 is determined and/or generated, using inter prediction, for current block 1300. The difference may be a prediction error (e.g., a residual). The encoder may store and/or send (e.g., signal), in/via a bitstream, the prediction error and/or related motion information. The prediction error and/or the related motion information may be used for decoding (e.g., decoding current block 1300) and/or other forms of consumption. The motion information may comprise the motion vector 1312 and a reference indicator/index. The reference indicator may indicate the reference picture 1306 in a reference picture list. The motion information may comprise an indication of motion vector 1312 and/or an indication of the reference indicator/index. The reference indicator may indicate reference picture 1306 in the reference picture list comprising reference picture 1306. A decoder may decode current block 1300 by determining and/or generating the reference block 1304. The reference block 1304 may correspond to/form (e.g., be considered as) a prediction of the current block 1300. The decoder may determine and/or generate the reference block 1304, for example, based on the related motion information. The decoder may decode current block 1300 based on combining the prediction (e.g., a reference block) with the prediction error (e.g., a residual block).

Inter prediction, as shown in FIG. 13A, may be performed using one reference picture 1306 as a source of a prediction for current block 1300. Inter prediction based on a prediction of a current block using a single picture may be referred to as uni-prediction.

Inter prediction of a current block, using bi-prediction, may be based on two pictures (e.g., the source of prediction may be from the two pictures). Bi-prediction may be useful, for example, if a video sequence comprises fast motion, camera panning, zooming, and/or scene changes. Bi-prediction may be useful to capture fade outs of one scene or fade outs from one scene to another, where two pictures may effectively be displayed simultaneously with different levels of intensity.

One or both of uni-prediction and bi-prediction may be available/used for performing inter prediction (e.g., at an encoder and/or at a decoder). Performing a specific type of inter prediction (e.g., uni-prediction and/or bi-prediction) may depend on a slice type of current block. For example, for P slices, only uni-prediction may be available/used for performing inter prediction. For B slices, either uni-prediction or bi-prediction may be available/used for performing inter prediction. An encoder may determine and/or generate a reference block, for predicting a current block, from a reference picture list 0, for example, if the encoder is using uni-prediction. An encoder may determine and/or generate a first reference block, for predicting a current block, from a reference picture list 0 and determine and/or generate a second reference block, for predicting the current block, from a reference picture list 1, for example, if the encoder is using bi-prediction.

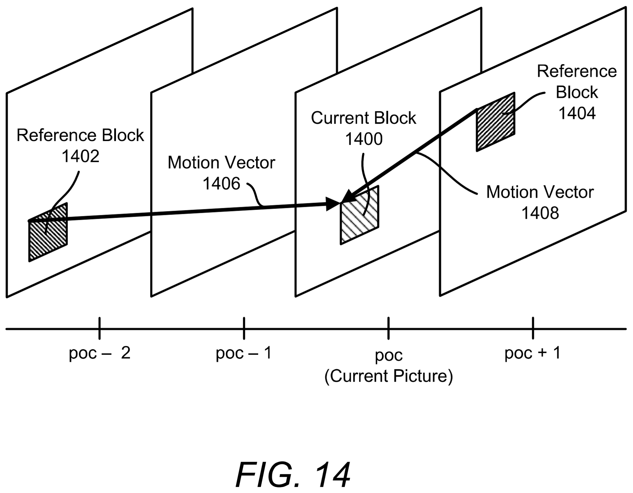

FIG. 14 shows an example of bi-prediction. More specifically, FIG. 14 shows an example of bi-prediction performed for a current block. Two reference blocks 1402 and 1404 may be used to predict a current block 1400. Reference block 1402 may be in a reference picture of one of reference picture list 0 or reference picture list 1. Reference block 1404 may be in a reference picture of another one of reference picture list 0 or reference picture list 1. As shown in FIG. 14, reference block 1402 may be in a first picture that precedes (e.g., in time) a current picture of current block 1400, and the reference block 1404 may be in a second picture that succeeds (e.g., in time) the current picture of current block 1400. The first picture may precede the current picture in terms of a picture order count (POC). The second picture may succeed the current picture in terms of the POC. The reference pictures may both precede or both succeed the current picture in terms of POC. A POC may be/indicate an order in which pictures are output (e.g., from a decoded picture buffer). A POC may be/indicate an order in which pictures are generally intended to be displayed. Pictures that are output may not necessarily be displayed but may undergo different processing and/or consumption (e.g., transcoding). The two reference blocks determined and/or generated using/for bi-prediction may correspond to (e.g., be comprised in) a same reference picture. The reference picture may be included in both the reference picture list 0 and the reference picture list 1, for example, if the two reference blocks correspond to the same reference picture.

A configurable weight and/or offset value may be applied to one or more inter prediction reference blocks. An encoder may enable the use of weighted prediction using a flag in a picture parameter set (PPS). The encoder may send/signal the weight and/or offset parameters in a slice segment header for current block 1400. Different weight and/or offset parameters may be sent/signaled for luma and/or chroma components.

The encoder may determine and/or generate the reference blocks 1402 and 1404 for the current block 1400 using inter prediction. The encoder may determine a difference between current block 1400 and each of reference blocks 1402 and 1404. The differences may be prediction errors or residuals. The encoder may store and/or send/signal, in/via a bitstream, the prediction errors and/or their respective related motion information. The prediction errors and their respective related motion information may be used for decoding and/or other forms of consumption.

The motion information for reference block 1402 may comprise a motion vector 1406 and/or a reference indicator/index. The reference indicator may indicate a reference picture, of the reference block 1402, in a reference picture list. The motion information for reference block 1402 may comprise an indication of motion vector 1406 and/or an indication of the reference index. The reference index may indicate the reference picture, of reference block 1402, in the reference picture list.

The motion information for reference block 1404 may comprise a motion vector 1408 and/or a reference index/indicator. The reference indicator may indicate a reference picture, of the reference block 1404, in a reference picture list. The motion information for reference block 1404 may comprise an indication of motion vector 1408 and/or an indication of the reference index. The reference index may indicate the reference picture, of the reference block 1404, in the reference picture list.

A decoder may decode current block 1400 by determining and/or generating the reference blocks 1402 and 1404. The decoder may determine and/or generate the reference blocks 1402 and 1404, for example, based on the respective related motion information for the reference blocks 1402 and 1404. The reference blocks 1402 and 1404 may correspond to/form (e.g., be considered as) the prediction (e.g., used to generate a prediction block) of the current block 1400. The decoder may decode the current block 1400 based on combining the prediction with the prediction errors.

Motion information may be predictively coded, for example, before being stored and/or sent/signaled in/via a bit stream (e.g., in HEVC, VVC, and/or other video coding standards/formats/protocols). The motion information for a current block may be predictively coded based on motion information of one or more blocks neighboring the current block. The motion information of the neighboring block(s) may often correlate with the motion information of the current block because the motion of an object represented in the current block is often the same as (or similar to) the motion of objects in the neighboring block(s). Motion information prediction techniques (such as those in HEVC and VVC) may comprise advanced motion vector prediction (AMVP) and/or inter prediction block merging (e.g., merge mode).

An encoder (e.g., encoder 200 as shown in FIG. 2), may code a motion vector. The encoder may code the motion vector (e.g., using AMVP) as a difference between a motion vector of a current block being coded and a motion vector predictor (MVP). An encoder may determine/select the MVP from a list of candidate MVPs. The candidate MVPs may be/correspond to previously decoded motion vectors of neighboring blocks in the current picture of the current block, and/or blocks at or near the collocated position of the current block in other reference pictures. The encoder and/or a decoder may reciprocally generate and/or determine the list of candidate MVPs.

The encoder may determine/select an MVP from the list of candidate MVPs. The encoder may send/signal, in/via a bitstream, an indication of the selected MVP and/or a motion vector difference (MVD). The encoder may indicate the selected MVP in the bitstream using an index/indicator. The index may indicate the selected MVP in the list of candidate MVPs. The MVD may be determined/calculated based on a difference between the motion vector of the current block and the selected MVP. For example, for a motion vector (e.g., comprising a horizontal component (MVx) and a vertical component (MVy)) that indicates a position relative to a position of the current block being coded, the MVD may be represented by two components $MVD_x$ and $MVD_y$. $MVD_x$ and $MVD_y$ may be determined/calculated as:

$$MVD_x = MV_x - MVP_x, \qquad\qquad (15)$$

$$MVD_y = MV_y - MVP_y. \qquad\qquad (16)$$

MVDx and MVDy may respectively represent horizontal and vertical components of the MVD. MVPx and MVPy may respectively represent horizontal and vertical components of the MVP.

A decoder (e.g., decoder 300 as shown in FIG. 3) may decode the motion vector by adding the MVD to the MVP indicated in/via the bitstream. The decoder may decode the current block by determining and/or generating the reference block. The decoder may determine and/or generate the reference block, for example, based on the decoded motion vector. The reference block may correspond to/form (e.g., be considered as) the prediction of the current block (e.g., a prediction block). The decoder may decode the current block by combining the prediction with the prediction error.

The list of candidate MVPs (e.g., in HEVC, VVC, and/or one or more other communication protocols), for AMVP, may comprise two or more candidates (e.g., candidates A and B). Candidates A and B may comprise: up to two (or any other quantity of) spatial candidate MVPs determined/derived from five (or any other quantity of) spatial neighboring blocks of a current block being coded; one (or any other quantity of) temporal candidate MVP determined/derived from two (or any other quantity of) temporal, co-located blocks (e.g., if both of the two spatial candidate MVPs are not available or are identical); and/or zero motion vector candidate MVPs (e.g., if one or both of the spatial candidate MVPs or temporal candidate MVPs are not available). Other quantities of spatial candidate MVPs, spatial neighboring blocks, temporal candidate MVPs, and/or temporal, co-located blocks may be used for the list of candidate MVPs.

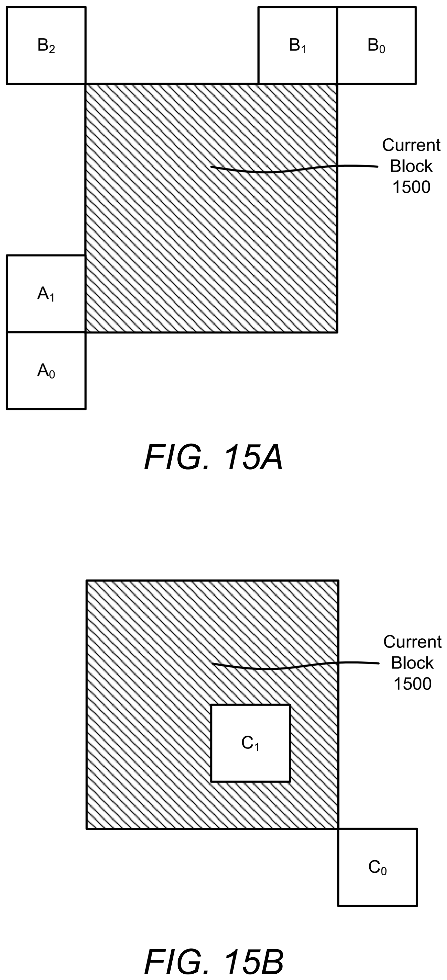

FIG. 15A shows example spatial candidate neighboring blocks for a current block. For example, five (or any other quantity of) spatial candidate neighboring blocks may be located relative to a current block 1500 being encoded. The five spatial candidate neighboring blocks may be A0, A1, B0, B1, and B2. FIG. 15B shows temporal, co-located blocks for the current block. For example, two (or any other quantity of) temporal, co-located blocks may be located relative to current block 1500 being coded. The two temporal, co-located blocks may be C0 and C1. The two temporal, co-located blocks may be in one or more reference pictures that may be different from the current picture of current block 1500.

An encoder (e.g., encoder 200 as shown in FIG. 2) may code a motion vector using inter prediction block merging (e.g., a merge mode). For example, the encoder (e.g., using merge mode) may reuse the same motion information of a neighboring block (e.g., one of neighboring blocks A0, A1, B0, B1, and B2) for inter prediction of a current block. For example, the encoder (e.g., using merge mode) may reuse the same motion information of a temporal, co-located block (e.g., one of temporal, co-located blocks C0 and C1) for inter prediction of a current block. An MVD need not be sent (e.g., indicated, signaled) for the current block because the same motion information as that of a neighboring block or a temporal, co-located block may be used for the current block (e.g., at the encoder and/or a decoder). A signaling overhead for sending/signaling the motion information of the current block may be reduced because the MVD need not be indicated for the current block. The encoder and/or the decoder may reciprocally generate a candidate list of motion information from neighboring blocks or temporal, co-located blocks of the current block (e.g., in a manner similar to AMVP). The encoder may determine to use (e.g., inherit) motion information, of one neighboring block or one temporal, co-located block in the candidate list, for predicting motion information of the current block being coded. The encoder may signal/send, in/via a bitstream, an indication of the determined motion information from the candidate list. For example, the encoder may signal/send an indicator/index. The index may indicate the determined motion information in the list of candidate motion information. The encoder may signal/send the index to indicate the determined motion information.

A list of candidate motion information for merge mode (e.g., in HEVC, VVC, or any other coding formats/-standards/protocols) may comprise: up to four (or any other quantity of) spatial merge candidates derived/determined from five (or any other quantity of) spatial neighboring blocks (e.g., as shown in FIG. 15A); one (or any other quantity of) temporal merge candidate derived from two (or any other quantity of) temporal, co-located blocks (e.g., as shown in FIG. 15B); and/or additional merge candidates comprising bi-predictive candidates and zero motion vector candidates. The spatial neighboring blocks and the temporal, co-located blocks used for merge mode may be the same as the spatial neighboring blocks and the temporal, co-located blocks used for AMVP.

Inter prediction may be performed in other ways and variants than those described herein. For example, motion information prediction techniques other than AMVP and merge mode may be used. While various examples herein correspond to inter prediction modes, such as used in HEVC and VVC, the methods, devices, and systems as described herein may be applied to/used for other inter prediction modes (e.g., as used for other video coding standards/formats such as VP8, VP9, AV1, etc.). History-based motion vector prediction (HMVP), combined intra/inter prediction mode (CIIP), and/or merge mode with motion vector difference (MMVD) (e.g., as described in VVC) may be performed/used and are within the scope of the present disclosure.

A block matching operation (or technique) may be applied/used (e.g., in inter prediction) to determine a reference block in a different picture than that of a current block being coded (e.g., encoded and/or decoded). A block matching operation also may be applied/used to determine a reference block in a same picture as that of a current block being coded. The reference block, in a same picture as that of the current block, as determined using block matching may often not accurately predict the current block (e.g., for camera captured videos). Prediction accuracy for screen content videos may not be similarly impacted, for example, if a reference block in the same picture as that of the current block is used for encoding. Screen content videos may comprise, for example, computer generated text, graphics, animation, etc. Screen content videos may comprise (e.g., may often comprise) repeated patterns (e.g., repeated patterns of text and/or graphics) within the same picture. Using a reference block (e.g., as determined using block matching), in a same picture as that of a current block being encoded, may provide efficient compression for screen content videos.

A prediction technique may be used (e.g., in HEVC, VVC, and/or any other coding standards/formats/protocols) to exploit correlation between blocks of samples within a same picture (e.g., of screen content videos). The prediction technique may be intra block copy (IBC) or current picture referencing (CPR). An encoder may apply/use a block matching technique (e.g., similar to inter prediction) to determine a displacement vector (e.g., a block vector (BV)). The BV may indicate a relative position of a reference block (e.g., in accordance with intra block compensated prediction), that best matches the current block, from a position of the current block. For example, the relative position of the reference block may be a relative position of a top-left corner (or any other point/sample) of the reference block. The BV may indicate a relative displacement from the current block to the reference block that best matches the current block. The encoder may determine the best matching reference block from blocks tested during a searching process (e.g., in a manner similar to that used for inter prediction). The encoder may determine that a reference block is the best matching reference block based on one or more cost criteria. The one or more cost criteria may comprise a rate-distortion criterion (e.g., Lagrangian rate-distortion cost). The one or more cost criteria may be based on, for example, one or more differences (e.g., an SSD, an SAD, an SATD, and/or a difference determined based on a hash function) between the prediction samples of the reference block and the original samples of the current block. A reference block may correspond to/comprise prior decoded blocks of samples (e.g., reconstructed samples) of the current picture. The reference block may comprise decoded blocks of samples of the current picture prior to being processed by in-loop filtering operations (e.g., deblocking and/or SAO filtering).

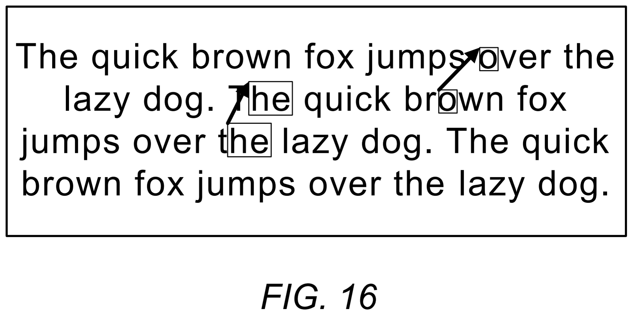

FIG. 16 shows an example of IBC (e.g., an IBC mode). The example shown in FIG. 16 may correspond to screen content. The rectangular portions/sections with arrows beginning at their boundaries may be the current blocks being encoded. The rectangular portions/sections that the arrows point to may be the reference blocks for predicting the respective current blocks.

A reference block may be determined and/or generated, for a current block, using IBC. The encoder may determine a difference (e.g., a corresponding sample-by-sample difference) between the reference block and the current block. The difference may be a prediction error or residual. The encoder may store and/or send/signal, in/via a bitstream the prediction error and/or related prediction information. The prediction error and/or the related prediction information may be used for decoding and/or other forms of consumption. The prediction information may comprise a BV. The prediction information may comprise an indication of the BV. A decoder (e.g., decoder 300 as shown in FIG. 3), may decode the current block by determining and/or generating the reference block. The decoder may determine and/or generate the current block, for example, based on the prediction information (e.g., the BV). The reference block may correspond to/form (e.g., be considered as) the prediction (e.g., a prediction block) of the current block. The decoder may decode the current block by combining the prediction (e.g., a prediction block) with the prediction error (e.g., residual or residual block).

A BV may be predictively coded (e.g., in HEVC, VVC, and/or any other coding standards/formats/protocols) before being stored and/or sent/signaled in/via a bitstream. For example, the BV for a current block may be predictively coded based on a BV of one or more blocks neighboring the current block. For example, an encoder may predictively code a BV using the merge mode (e.g., in a manner similar to as described herein for inter prediction), AMVP (e.g., as described herein for inter prediction), or a technique similar to AMVP. The technique similar to AMVP may be BV prediction and difference coding (or AMVP for IBC).

An encoder (e.g., encoder 200 as shown in FIG. 2) performing BV prediction and coding may code a BV as a difference between the BV of a current block being coded and a block vector predictor (BVP). An encoder may select/determine the BVP from a list of candidate BVPs. The candidate BVPs may comprise/correspond to previously decoded BVs of neighboring blocks in the current picture of the current block. The encoder and/or a decoder may reciprocally generate or determine the list of candidate BVPs.

The encoder may send/signal, in/via a bitstream, an indication of the selected BVP and a block vector difference (BVD). The encoder may indicate the selected BVP in the bitstream using an index/indicator. The index may indicate (e.g., point to) the selected BVP in the list of candidate BVPs. The BVD may be determined/calculated based on a difference between a BV of the current block and the selected BVP. For example, for a BV (e.g., represented by a horizontal component (BVx) and a vertical component (BVy)) that indicates a position relative to a position of the current block being coded, the BVD may be represented by two components $BVD_x$ and $BVD_y$. $BVD_x$ and $BVD_y$ may be determined/calculated as:

$$BVD_x = BV_x - BVP_x, \qquad (17)$$

$$BVD_y = BV_y - BVP_y. \qquad (18)$$

BVDx and BVDy may respectively represent horizontal and vertical components of the BVD. BVPx and BVPy may respectively represent horizontal and vertical components of the BVP. A decoder (e.g., decoder 300 as shown in FIG. 3), may decode the BV by adding the BVD to the BVP indicated in/via the bitstream. The decoder may decode the current block by determining and/or generating the reference block. The decoder may determine and/or generate the reference block, for example, based on the decoded BV. The reference block may correspond to/form (e.g., be considered as) the prediction (e.g., a prediction block) of the current block. The decoder may decode the current block by combining the prediction (e.g., the prediction block) with the prediction error (e.g., residual or residual block).

A same BV as that of a neighboring block may be used for the current block and a BVD need not be separately signaled/sent for the current block, such as in the merge mode. A BVP (in the candidate BVPs), which may correspond to a decoded BV of the neighboring block, may itself be used as a BV for the current block. Not sending the BVD may reduce the signaling overhead.

A list of candidate BVPs (e.g., in HEVC, VVC, and/or any other coding standard/format/protocol) may comprise two (or more) candidates. The candidates may comprise candidates A and B. Candidates A and B may comprise: up to two (or any other quantity of) spatial candidate BVPs determined/derived from five (or any other quantity of) spatial neighboring blocks of a current block being encoded; and/or one or more of last two (or any other quantity of) coded BVs (e.g., if spatial neighboring candidates are not available). Spatial neighboring candidates may not be available, for example, if neighboring blocks are encoded using intra prediction or inter prediction. Locations of the spatial candidate neighboring blocks, relative to a current block, being encoded using IBC may be illustrated in a manner similar to spatial candidate neighboring blocks used for coding motion vectors in inter prediction (e.g., as shown in FIG. 15A). For example, five spatial candidate neighboring blocks of a current block being coded using IBC may be respectively denoted A0, A1, B0, B1, and B2 as shown in FIG. 15A.

The most probable mode (MPM) may refer to a best mode for a current block being coded (e.g., encoded and/or decoded). For example, the MPM may refer to the intra prediction mode (IPM) that is (e.g., most likely to be) the best mode for the current block being encoded or decoded. The MPM may be determined by analyzing the intra prediction modes of the neighboring CUs (e.g., blocks) of a current block (or CU) to be coded (e.g., encoded or decoded), for example, in at least some intra prediction techniques. Video coding may use an MPM list for luma intra prediction. For example, VVC uses an MPM list (e.g., a list of 6 MPMs) for luma intra prediction. The MPM list may be derived from the intra prediction modes of the neighboring CUs, and/or may be updated as the encoder progresses through the video frame. When/If encoding a block, the encoder may determine if the current block is a candidate for any of the MPMs in the MPM list. The encoder may compare prediction errors of respective MPMs to determine which MPM from the MPM list is the best mode for the current block, for example, if the current block is a candidate for any of the MPMs in the MPM list. The encoder may evaluate all intra prediction modes (e.g., 67 in VVC) to determine the best mode for the current block, for example, if the current block is not a candidate for any of the MPMs in the MPM list.

The use of MPMs may improve (e.g., significantly improve) the coding efficiency. The use of MPMs may improve (e.g., significantly improve) the coding efficiency because the encoder does not need to signal the intra prediction mode for the current block if such mode is one of the MPMs (e.g., in the MPM list). The encoder does not need to signal the mode number which may require a significant number/quantity of bits. Instead, for example, the encoder may signal an index to the MPM list. The decoder may infer the intra prediction mode for the current block from the corresponding MPM list generated (e.g., reciprocally and identically generated) at the decoder. Advantages such as reduced signaling overhead in the bitstream and increased efficiency may be achieved.

Various types of intra modes may be considered to construct the MPM list. For example, three types of intra modes may be considered to construct the MPM list: default intra modes; neighboring intra modes; and derived intra modes. A unified MPM (e.g., 6-MPM) list may be used for intra blocks, for example, irrespective of whether Multiple Reference Lines (MRL) and Intra Sub-Partitions (ISP) coding tools are applied/used. The MPM list for the current block may be constructed, for example, based on intra modes of neighbor (or neighboring) blocks of the current block. The MPM list for the current block may be constructed, for example, based on intra modes of a left neighbor block (e.g., block corresponding to A1 in FIG. 15A) and an above neighbor block (e.g., block corresponding to B1 in FIG. 15A) of the current block. The intra mode of the left neighbor block may be denoted as Left. The intra mode of the above neighbor block may be denoted as Above. The unified MPM list may be constructed as follows: when/if a neighboring block is not available, its intra mode may be set to planar mode by default; if both modes Left and Above are non-angular modes, then the MPM list may be set to include {planar, DC, V, H, V - 4, V + 4}, where "V" and "H" may refer to vertical mode and horizontal mode, respectively; if one of modes Left and Above is an angular mode, and the other is non-angular, set a mode Max as the larger mode in Left and Above, and set the MPM list to include {planar, Max, Max - 1, Max + 1, Max - 2, Max + 2}; if Left and Above are both angular and are different, set a mode Max as the larger mode in Left and Above and a mode Min as the smaller mode in Left and Above, and if Max - Min is equal to 1, then set the MPM list to include {planar, Left, Above, Min - 1, Max + 1, Min - 2}, if Max - Min is greater than or equal to 62, then set the MPM list to include {planar, Left, Above, Min + 1, Max - 1, Min + 2}, if Max - Min is equal to 2, set the MPM list to include {planar, Left, Above, Min + 1, Min - 1, Max + 1}, or otherwise, set the MPM list to include {planar, Left, Above, Min - 1, -Min + 1, Max - 1}; and if Left and Above are both angular and are the same, set the MPM list to include {planar, Left, Left - 1, Left + 1, Left - 2, Left + 2}.

An encoder may encode an MPM index in a bitstream to indicate the position of a selected intra prediction mode in a MPM list to a decoder. The encoder may represent the MPM index as a codeword and may encode (e.g., entropy encode) the codeword into the bitstream. The decoder may derive the MPM list (e.g., in a manner identical to the encoder), and use the MPM index obtained from the codeword decoded from bitstream to obtain the intra prediction mode from the MPM list derived at the decoder. The first bin of codeword, representing the MPM index, may be context coded using an arithmetic coder (e.g., CABAC) so as to achieve additional coding efficiencies. For example, three contexts may be used, corresponding to whether the current intra block is MRL enabled, ISP enabled, or a normal intra block.

Pruning may be used to remove duplicated intra modes. Pruning may be used to remove duplicated intra modes so that the MPM list includes only unique intra modes, for example, during the 6 MPM list generation process. For entropy coding of the 61 non-MPM modes (that is, the 67 modes in VVC minus the 6 MPM), a truncated binary code (TBC) may be used.

The MPM list may be extended to include additional candidates (e.g., 16 additional candidates), and may be divided into two parts: the primary MPM (PMPM) (e.g., including 6 entries) and the secondary MPM (SMPM) (e.g., including 16 entries). The first entry in a general MPM list may be a planar mode. The remaining entries may include the intra modes of the adjacent neighboring blocks corresponding to positions left (L), above (A), below-left (BL), above-right (AR), and above-left (AL) (e.g., shown in FIG.15A as A1, B1, A0, B0, and B2), and decoder-side intra mode derivation (DIMD) modes which may be sorted in ascending order of a cost such as, for example, SAD, SSD, SATD, etc. Up to a preconfigured/predetermined number/quantity of modes (e.g., 5) with the smallest costs may be added to the MPM list. The cost for a respective MPM (e.g., an IPM corresponding to an entry in the MPM list) may be determined (e.g., computed) between the prediction of the reconstructed samples of the template of the current block and the reconstructed samples. For example, the prediction may be generated by applying/using the respective MPM for the template. Sorted directional modes may be added into the general MPM list, and then into the default modes, until a general MPM list with a predetermined quantity (e.g., 22) entries is constructed. The order of neighboring blocks may correspond to A, L, BL, AR, AL, for example, if a CU block is vertically oriented. The order of neighboring blocks may correspond to L, A, AL, AR, BL, for example, if a CU block is not vertically oriented.

As described with respect to FIG. 16, in IBC mode used/applied for screen content, a reference block (RB) may be determined as a "best matching" reference block to a current block. For example, the arrows correspond to block vectors (BVs) that indicate respective displacements from respective current blocks (CBs) to respective reference blocks that best match the respective current blocks. As described with respect to FIG. 16, the reference blocks match the respective current blocks and/or the calculated residuals may be small, for example, if not zero. Video content may be more efficiently encoded by considering symmetry properties. For example, symmetry may be present in video content, for example, in text character regions and/or computer generated graphics in screen content video.

A Reconstruction-Reordered intra block copy IBC (RRIBC) mode (e.g., referred to as IBC-Mirror Mode) may be used for screen content video coding to take advantage of symmetry within video content to further improve the coding efficiency of IBC. For example, the RRIBC mode may be signaled based on IBC mode with an indication (or flag) indicating whether flipping is applied and if flipping is used/applied, further signaling an indication (or flag) indication a direction of flipping.

A residual for the current block may be calculated based on samples of a reference block (e.g., corresponding to an original reference block being encoded and decoded to form a reconstructed block) being flipped relative to the current block based on a flip direction indicated for the current block. A residual for the current block may be calculated based on samples of a reference block being flipped relative to the current block, for example, if the RRIBC mode is indicated for encoding a current block. For example, at the encoder side, the current block (to be predicted) may be flipped before matching and residual calculation, while the reference block (used to predict the current block) may be derived without flipping. For example, at the decoder side, the current block (that was flipped at the encoder) may be determined based on the reference block and residual information, and/or flipped back to restore the original orientation of the current block before being flipped at the encoder side. For example, instead of the current block being flipped, the reference block may be flipped instead such that the reference block is flipped to encode the current block (at the encoder) and/or flipped back (at the decoder) to restore the original orientation of the reference block at the encoder. As described herein, reference to flipping the current block may alternatively refer to flipping the reference block and not the current block such that the reference block and/or the current block may be flipped in the direction with respect to each other.

In the RRIBC mode, the flip direction may include one of a horizontal direction (e.g., along an x-axis) or a vertical direction (e.g., along a y-axis) for RRIBC coded blocks. For example, for a current block coded in the RRIBC mode (e.g., an IBC advanced motion vector prediction (AMVP) coded block), a first indication (e.g., a first syntax flag) may indicate/signal whether to use flipping (e.g., also referred to as mirror flipping) to encode/decode the current block. Additionally or alternatively, for the current block, a second indication (e.g., a second syntax flag) may indicate/signal the direction for flipping (e.g., vertical or horizontal). For IBC merge, the flip direction may be inherited from neighboring blocks, without syntax signaling. For RRIBC, flipping of a current block (or a reference block) in a horizontal and a vertical direction can be represented in equations (19) and (20), respectively:

$$Reference(x, y) = Sample(w - 1 - x, y) \qquad (19)$$

$$Reference(x, y) = Sample(x, h - 1 - y) \qquad (20)$$

where *w* and *h* are the width and height of a current block, respectively. Sample(x,y) may indicate a sample value located in (x,y). Reference(x,y) may indicate a corresponding reference sample value after flipping. For horizontal flipping, equation (19) may show that the current block may be flipped in the horizontal direction by sampling from right to left. For example, for vertical flipping, (20) may show that the current block may be flipped in the vertical direction by sampling the current block from down to up.

Considering the horizontal or vertical symmetry, the current block and/or the reference block may be normally aligned horizontally or vertically, respectively. The reference block may be determined from a reference region (including candidate reference blocks) aligned in the same flipping direction, as described herein. The reference block may be determined from a reference region (including candidate reference blocks) aligned in the same flipping direction, for example, based on the RRIBC mode and a flipping direction. The vertical component (BVy) of the BV (indicating a displacement from the current block to the reference block) may not need to be signaled because it may be inferred to be equal to 0, for example, if flipping in a horizontal direction is used/applied/indicated. The horizontal component (BVx) of the BV may not need to be signaled because it may be inferred to be equal to 0, for example, if flipping in a vertical direction is used/applied/indicated. For example, only one component, aligned with the direction for flipping, of the BV may be encoded and signaled for the current block.

For a current block coded in IBC mode, a BV for the current block may be constrained to indicate a relative displacement from the current block to a reference block within an IBC reference region. A BVP used to predicatively code a BV may be similarly constrained, for example, because a BVP may be derived from a BV of a spatially neighboring block of the current block or a prior coded BV as described herein. A BVD may be determined as a difference between the BV and the BVP, for example, based on the BVP. This BVD may be encoded and/or sent (e.g., transmitted) along with an indication of the selected BVP in a bitstream to enable decoding of the current block, as described herein.

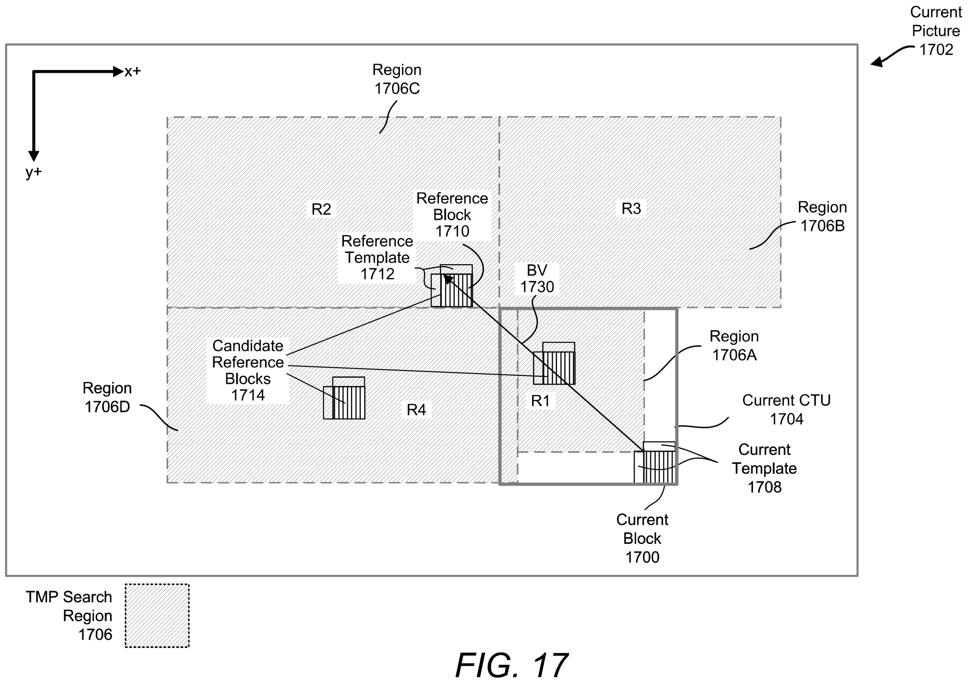

FIG. 17 shows an example of intra template matching prediction (IntraTMP). More specifically, FIG. 17 shows an example of IntraTMP for predicting and/or determining a current block 1700. IntraTMP may be an intra prediction mode that may copy a reference block, from a reconstructed part of a current picture 1702 (e.g., current frame, current frame of content), whose template (e.g., an L-shaped template, above-only template, or left-only template) may be determined to best match current template 1708 (e.g., the L-shaped template, above only template, or left-only template) of current block 1700 to predict current block 1700. Current block 1700 may comprise a rectangular block of samples, in a picture or video frame of current picture 1702, to be encoded by the encoder and/or decoded by the decoder. Current template 1708 may be determined, for example, based on samples in a reconstructed region neighboring current block 1700. Current template 1708 may comprise samples that are adjacent to the current block 1700 such as including one or more rows of samples above the current block 1700 and/or and one or more columns of samples to the left of the current block 1700. In some instances, the current template 1708 may be an L-shaped template, a top-only template, or a left-only template of the current block 1700. The L-shaped template may include the top-only template and/or the left-only template. The L-shaped template may further include an above-left template.

In IntraTMP, a plurality of reference templates of respective candidate reference blocks 1714 from a predefined TMP search region 1706 may be matched with the current template 1708 to determine and/or select a reference template 1712 that may best match (or may be most similar to) the current template 1708. A reference block (RB) 1710, selected from the candidate reference blocks 1714 and/or indicated by the selected reference template 1712, may be used as a prediction block to determine and/or predict the current block 1700. Block vector (BV) 1730 may indicate a displacement from the current block 1700 (e.g., the top left sample of current block 1700) to reference block 1710 (e.g., the top left sample of the reference block 1710).

TMP search region 1706 may comprise a portion of a reconstructed region of current picture 1702. TMP search region 1706 may indicate the regions in which the encoder and/or decoder may search for candidate templates (e.g., candidate templates of candidate reference blocks 1714), for example, to determine a reference template 1712 and/or a corresponding reference block 1710. For example, as described herein with respect to FIG. 17, TMP search region 1706 may include region 1706A (R1) from a current CTU 1704, region 1706B (R3) including a portion of the above CTU, region 1706C (R2) including a portion of the above-left CTU, and/or region 1706D (R4) including a portion of the left CTU. The CTUs may result from picture partitioning operations as described herein. For example, the TMP search region 1706 may further include other regions of reconstructed samples of the current picture 1702.

The dimensions of TMP search region 1706 (e.g., SearchRange_w, SearchRange_h) may be set to be proportional to the dimensions of current block 1700 (e.g., BlkW, BlkH) to have a fixed number/quantity of cost comparisons (e.g., SAD) per pixel. For example, the dimensions of TMP search region 1706 may be calculated as follows:

$$SearchRange\_w = \min(64, \alpha * BlkW) \qquad (21)$$

$$\text{SearchRange\_h} = \min (64, \alpha * \text{BlkH}) \qquad\qquad (22)$$

$\alpha$ (or alpha) is a constant that may control a gain/complexity trade-off for the encoder and/or decoder. For example, $\alpha$ may be equal to 5. The dimensions of TMP search region 1706 in FIG. 17 are shown by example and not by limitation.

The candidate templates of candidate reference blocks 1714 may have the same shape and/or size as current template 1708. For example, the candidate templates may have the same orientation as current template 1708. Matching templates may include calculating a template matching (TM) cost between samples of a candidate reference template of a candidate RB (e.g., indicated by a respective candidate block vector) and/or corresponding samples of current template 1708. The difference may be based on a sum of squared differences (SSD), a sum of absolute differences (SAD), a sum of absolute transformed differences (SATD), and/or a difference determined based on a hash function. The template matching cost may represent a similarity between the templates with a smaller cost representing more similar templates.

A position of each sample in TMP search region 1706 may be selected as a location of a candidate reference block whose respective reference template may be compared with current template 1708 to determine a TM cost. The position may be indicated by a candidate block vector that represents a displacement from current block 1700 (e.g., a top-left sample of current block 1700) to the position. One or more of TMP search region 1706 may be subsampled by a subsampling interval (e.g., 3) such that not every position is considered as a location of a candidate reference block, for example, to speed up the template matching process. A refinement process may be performed to select additional candidate block vectors, for example, after (or if) finding a set of candidates (e.g., to generate the list of candidates). The refinement process may be performed via a second template matching search in a search region around one or more of the set of candidates. The search region may be a reduced search range associated with the subsampling interval.

Based on selection of the IntraTMP by the encoder for coding the current block, the encoder may signal such selection to the decoder. The decoder may perform the same prediction and/or matching operations.

The decoder and/or the encoder may construct a candidate list of up to a predetermined maximum number/quantity (e.g., 19) of candidate block vectors (or candidate block vector predictors), for example, by performing template matching operations on candidate reference templates in TMP search regions 1706A-D. These candidate block vectors may be in ascending order based on the template matching costs of respective reference templates of candidate reference blocks indicated by the candidate block vectors. In some examples

A prediction block (e.g., a predictor) of current block 1700 may be generated using one or more of the reference blocks (e.g., reference block 1710) determined using IntraTMP as well as using/applying one or more optional filters. For example, the following modes may be supported: single predictor, fusion of multiple predictors, sub-pel precision, and/or linear filter model. A single predictor may be selected from the candidate list such as selecting reference block 1710, for example, in the single predictor mode. Multiple predictors may be blended to derive the final prediction block such as selecting two or more candidate reference blocks 1714, for example, in the fusion of multiple predictors mode. The blending weights may be computed from the template matching cost of each predictor or by using a Wiener filter-based weight derivation method. In the sub-pel precision mode, if a single predictor is used, the sub-pel precision may be used with 1/2-pel precision, 1/4-pel precision, or 3/4-pel precision, each with 8 possible directions. A linear filter may be learned (e.g., generated or derived) between the reference template and current template and be used/applied to the reference block, for example, in the linear filter model mode. This mode may be used for the single predictor, for example, if the sub-pel precision is not used.

As described with respect to FIG. 17, reference template 1712 of reference block 1710 may be determined to best match current template 1708, for example, based on the template matching cost between reference template 1712 and current template 1708 being a minimum TM cost. The encoder may select reference block 1710 as a prediction of current block 1700 and/or signal an index of a candidate block vector, indicating reference block 1710, in the candidate list. The decoder may generate the same candidate list and determine reference block 1710, for example, based on decoding the index from the bitstream. A block vector (BV) may indicate the displacement of a reference block (e.g., reference block 1710) relative to the current block 1700.

The IntraTMP mode may be enabled for blocks (e.g., CUs) with a size (e.g., width times height) less than or equal to a threshold size (e.g., 64). The threshold size for IntraTMP may be configurable. The IntraTMP prediction mode may be signaled at a block (e.g., per CU) level through a dedicated flag.

An encoder may determine a difference (e.g., a corresponding sample-by-sample difference) between current block 1700 and reference block 1710 used to predict current block 1700. The difference may be referred to as a prediction error or residual. The encoder may store and/or signal, in a bitstream, the prediction error or residual for decoding by a decoder.

A decoder may perform the same operations as the encoder as described herein, for example, to perform TMP to code current block 1700. For example, based on receiving an indication from the encoder that IntraTMP is used to predict current block 1700 (e.g., via a flag), the decoder may similarly determine and/or construct current template 1708 of current block 1700. The decoder may further similarly search TMP search region 1706 to generate a list of candidates from which reference block 1710 may be determined, for example, after/if determining or constructing current template 1708. The decoder may obtain the block vector candidate by decoding, from the bitstream, the index of the block vector candidate in the list of candidates, for example, because the reference block may be indicated by a block vector candidate with the lowest cost in the list of candidates. The decoder may combine the residual, decoded from the bitstream, with reference block 1710 to reconstruct current block 1700. The encoder may not need to encode BV 1730 that may indicate reference block 1710 in the bitstream.

In video standards, the bit depth (N) parameter indicates the number/quantity of bits that a sample of the luma and/or chroma components signal may use to represent a pixel of a picture. The luma and/or chroma values may be represented as a positive integer value between 0 and $2^N$, for example, to facilitate handling pixel information of pictures.

The formats using a picture resolution of Standard Definition (SD) and/or formats with lower resolution may use, for example, a bit depth of 8 bits, which indicates a maximum number/quantity of 256 levels (which corresponds to $2^8$ levels). High Definition (HD) and higher resolutions such as Ultra-High Definition (UHD) may use a bit depth of 10 bits, allowing the extension of the number/quantity of luma and chroma levels to 1024 (which equals $2^{10}$). Some video formats (e.g., used in editing, color correction, and/or the visual effects stages) may use bit depths beyond 10 bits, for example, 12 bits and/or 16 bits. Some of the video compression standards define additional profiles for high-bit depth formats , for example, because these require particular adaptations in some of the encoding and/or decoding stages.

In some video coding standards (e.g., such as in Versatile Video Coding (VVC)), the video bit depth (also referred to as "internal bit depth", "internal processing bit depth", or "encoding bit depth") may be a mandatory parameter that the encoder signals to the decoder through the *sps_bitdepth_minus8* parameter (e.g., as part of ITU-T H.266, (08/2020), "Versatile Video Coding") in the Sequence Parameter Set (SPS) syntax element. In some standards that use color spaces different from the YCbCr color space, the internal bit depth of the luma and chroma components may be signaled separately as two parameters (e.g., $BitDepth_Y$ and $BitDepth_C$, respectively).

YCbCr color space may be derived from the RGB space. The component values of the RGB space may represent a pixel. In this color space transform, the luma ($E'_Y$) and/or chrominance ($E'_{PB}$ and $E'_{PR}$) component signals may be obtained as real numbers. $E'_Y = 0$ may be associated with nominal black. $E'_Y = 1$ may be associated with nominal white. $E'_{PB} = 0$ and $E'_{PR} = 0$ may be associated with both nominal black and nominal white. The range of both chroma components may be $\pm 0.5$.

Scaling, offset, and rounding to integers may be used/applied to achieve positive integer values for both the luma and chroma components. The type of scaling and/or offset used/applied to the luma and/or chroma components may determine the range of these components, characterized by a nominal maximum (e.g., nominal white for the Y component) and/or the nominal minimum (e.g., nominal black for the Y component).

The video industry may use two types of scaling and offsets, which may determine two types of video ranges (e.g., the "full video range" and the "narrow video range"). The *vui_full_range_flag* parameter in the Video Usability Information (VUI) syntax element (e.g., as defined in ITU-T H.274 (V3) (09/2023), "Versatile supplemental enhancement information messages for coded video bitstreams") may signal the video range to the decoder.

If the *vui_full_range_flag* parameter is true (e.g. *vui_full_range_flag* = 1), it indicates that the video range is the full video range. If the video range is the full video range, the nominal luma and/or chroma values may use the entire range determined for the bit depth, ranging from 0 for the nominal minimum value, to $2^N$ - 1 for the nominal maximum value, where N is the bit depth. The luma and/or chroma values for the full video range may be derived as follows (e.g., as defined in ITU-T H.273 (V3) (09/2023), "Coding-independent code points for video signal type identification"):

$$Y = \text{Round} (((1 << BitDepth_Y) - 1) * E'_Y )$$

$$Cb = \text{Round} (((1 << BitDepth_C) - 1) * E'_{PB}) + (1 << (BitDepth_C - 1))$$

$$Cr = \text{Round} (((1 << BitDepth_C) - 1) * E'_{PR}) + (1 << (BitDepth_C - 1))$$

If the *vui_full_range_flag* is false, it may indicate that the video range is the narrow video range that is smaller than the full video range. If the video range is the narrow video range, the nominal luma and/or chroma values may be constrained. The white peak and/or the black levels may not match with the minimum and maximum values of 0 to $2^N$ - 1. For example, if when the video range is the narrow video range, the luma and/or chroma values may be derived as follows:

$$Y = \text{Clip1}_Y ( \text{Round}( ( 1 << ( BitDepth_Y - 8 ) ) * ( 235 * E'_Y + 16 ) ) )$$

$$Cb = \text{Clip1}_C ( \text{Round}( ( 1 << ( BitDepth_C - 8 ) ) * ( 224 * E'_{PB} + 128 ) ) )$$

$$Cr = \text{Clip1}_C \left( \text{Round}\left( \left( 1 << \left( BitDepth_C - 8 \right) \right) * \left( 224 * E'_{PR} + 128 \right) \right) \right)$$

The *vui_full_range_flag* parameter might not be mandatory, so the decoder may also be configured to decode a bitstream if the *vui_full_range_flag* is not present in the bitstream. The decoder may infer that the "narrow video range" is used and set a reference range for reconstructed samples of a picture to the "narrow video range," for example, if the *vui_full_range_flag* parameter is absent.

Some encoding/decoding stages in the encoder and decoder may need a larger internal bit depth than the bit depth of the samples of the original picture. For example, residual construction, computed as the difference between the current and prediction blocks, may achieve negative values. The residual sample may get a negative value of the white peak - $(2^N - 1)$, demanding the same bit depth of N bits to represent the internal samples with negative values correctly, for example, if a sample in the current block has the black level (e.g., 0) and the corresponding prediction sample is the white level (e.g., $2^N - 1$). A similar instance may occur in the output of the transform stage. The transform coefficients may be negative. The transform coefficients may require the largest dynamic range, for example, due to the discrete cosine and/or sine base functions used in transforms such as the discrete cosine transform (DCT) and/or sine discrete transform (SDT). The bit depth of samples of the original picture may be referred to herein as the "original bit depth" or "input bit depth".

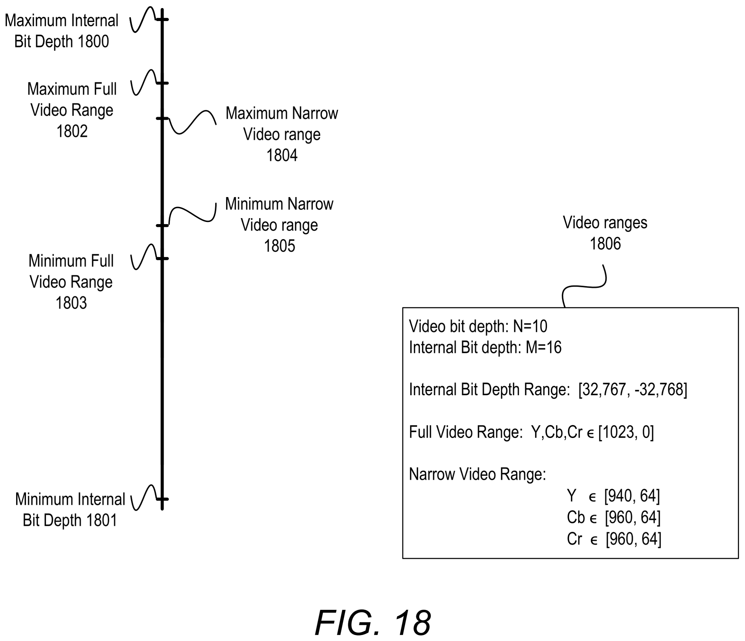

FIG. 18 shows an example of video ranges for a picture (e.g., content, video content). More specifically, FIG. 18 shows an example of video range for a picture using a video bit depth of 10 bits (e.g., N = 10) and an internal bit depth of 16 bits (e.g., M = 16). For example, the nominal maximum and minimum for the "full video range" (e.g., maximum full video range 1802 and minimum full video range 1803 in FIG. 18) and the "narrow video range" (e.g., maximum narrow video range 1804 and minimum narrow video range 1805 in FIG. 18) are indicated, as well as the boundaries of the internal bit depth (e.g., maximum internal bit depth 1800 and minimum internal bit depth 1801 in FIG. 18). As described with respect to video ranges 1806 in FIG. 18, the ranges shown on the left may be used for (or be applied to) a picture in which a 10-bit video bit depth (e.g., N = 10) and a 16-bit internal bit depth (e.g., internal bit depth = 16) may be specified. This may yield an internal bit depth range of [32767, -32767], a full video range of [1023, 0] for each of Y, Cb, and Cr components, and may yield a narrow video range of [940, 64], [960, 64], and [960, 64] for Y, Cb, and Cr components, respectively. The internal bit depth may be dependent on the processor. The range of the internal bit depth may be larger than the full video range. The specific values in the ranges and/or the bit depths shown are shown as examples and other values are possible.

In some video coding standards, some tools (e.g., inverse quantization and/or some of the post-processing filters) may produce reconstructed samples that may achieve values beyond the maximum and minimum bounds determined by the bit depth. Some video coding standards may include an adjusting stage (e.g., a clipping stage) after processing stages that may cause overflow and/or underflow of the picture sample dynamic range. For example, VVC may include adjusting (e.g., clipping) the prediction and/or reconstructed samples after stages such as the intra-prediction filtering, sampling, interpolation, adaptive loop filter (ALF), weighted prediction, and/or weighted combination. In VVC, the clipping between 0 and $2^{BitDepth} - 1$ may be used for (or applied to) the samples in the weighted samples prediction for the geometric partitioning mode. For example, the prediction sample values may be derived as follows:
*pbSamples[ x ][ y ] =* Clip3 *( 0, ( 1 << BitDepth ) - 1, ( predSamplesLA[ x ][ y ] \* wValue + predSamplesLB[ x ][ y ] \* (8 - wValue) + offset1 ) >> shift1 )*, where Clip3() may be a function to clip a value z between a upper bound of x and a lower bound of y, for example:

$$clip3(x, y, z) = \begin{cases} x \text{ if } z < x \\ y \text{ if } z > y \\ z \text{ otherwise.} \end{cases}$$

A similar adjusting (e.g., clipping) process as for prediction sample values may be used (or proposed) for the reconstructed samples at the output of the SAO (Sample-Adaptive Offset) filter in VVC. The modified picture sample array *saoPicture[xS_j][yS_k]* is derived as follows:
*saoPicture[ xS_i ][ yS_j ] =* Clip3*( 0, ( 1 << BitDepth ) - 1, recPicture[ xS_i ][ yS_j ] + SaoOffsetVal[ cIdx ][ rx ][ ry ][ edgeIdx ] )*. Adjusting (e.g., clipping) the samples to the bit depth range after certain processing stages may ensure that the reconstructed samples in the final picture may match independently of the internal bit depth used in the arithmetic operations of/by/for specific processors in the encoder and/or the decoder.

In some examples of video coding, an adaptive adjusting (e.g., clipping) technique was introduced by Cui et al., "Non-EE2: Adaptive clipping with signaled lower and upper bounds," JVET-AF0169, October 2023. This technique may replace conventional adjusting (e.g., clipping) to the bit depth bounds with adjusting (e.g., clipping) to the real (or actual) minimum and maximum luma sample values of each picture. This mechanism may reduce distortion caused by various encoder/decoder stages (e.g., the quantization stage), making the reconstructed values closer to the samples in the original picture (e.g., providing a higher peak signal-to-noise ratio (PSNR)).

On the encoder side, the adaptive adjusting (e.g., clipping) technique may scan the luma samples of the original picture and/or determine the actual maximum and minimum values. The differences between those bounds and the fixed maximum and minimum values, set to the "narrow video range" maximum and minimum values, may be signaled in the picture header.

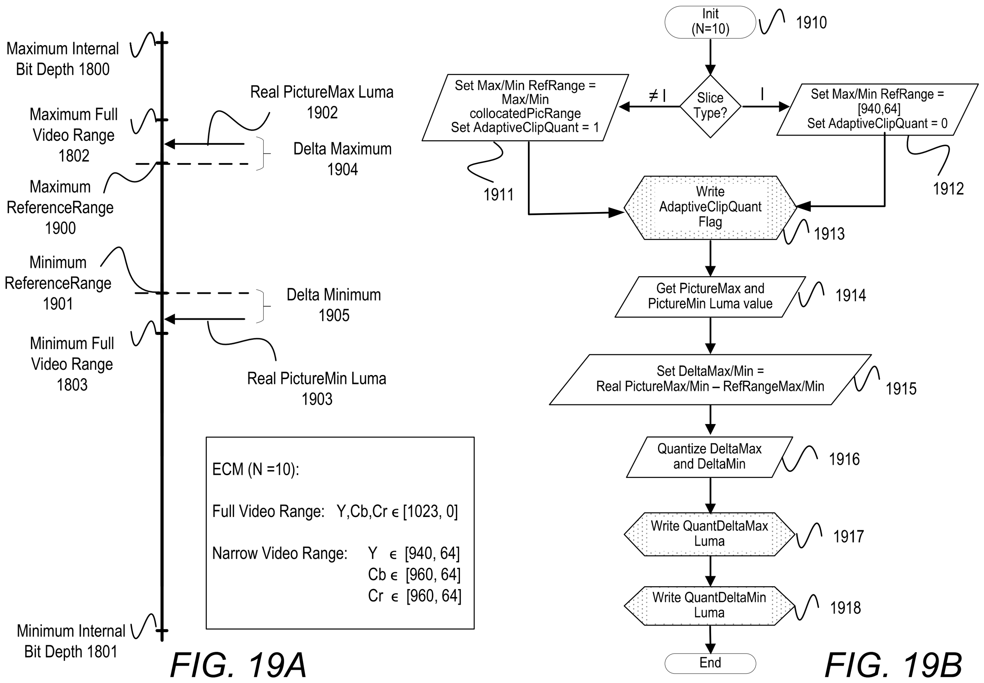

FIG. 19A shows an example of the bounds in adaptive adjusting (e.g., clipping). More specifically, FIG. 19A shows an example of the bounds used in an adaptive clipping tool using, for example, a bit depth of 10 bits. The maximum and minimum luma bounds of the "full video range" (e.g., maximum full video range 1802 and minimum full video range 1803) may be 1023 and 0, respectively, for example, for the bit depth of 10 bits. The maximum and minimum picture sample values may be between these bounds. For example, for intra (I) slices, the maximum and minimum luma bounds of the "reference range" (e.g., real picture max luma 1902 and real picture min luma 1903) may be set to the maximum and minimum luma bounds of the "narrow video range" (e.g., maximum reference range 1900 and minimum reference range 1901), which may be, for example, 940 and 64, respectively.

The maximum and minimum delta values (e.g., delta maximum 1904 and delta minimum 1905) may be calculated/determined as the difference between the actual luma maximum and minimum values in the original pixels (e.g., real picture max luma 1902 and real picture min luma 1903) and the maximum and minimum luma bounds of the reference range (e.g., maximum reference range 1900 and minimum reference range 1901). The actual luma maximum and minimum values in the original pixels (e.g., real picture max luma 1902 and real picture min luma 1903) may be determined, for example, by scanning the pixels of the original picture.

The encoder may use/apply a quantization to the delta values (e.g., determined/indicated by *"AdaptiveClipQuant"* flag at step 1913 in FIG. 19B). The encoder may use/apply a quantization to the delta values, for example, to reduce the overhead of delta values signaling (e.g., if the delta maximum value 1904 and the delta minimum value 1905 may be large). For the slices of slice type I, the quantization value may be set to 2 (e.g., *AdaptiveClipQuant* flag = 1) and/or set to $2^5$ for other types of slices (e.g., *AdaptiveClipQuant* flag = 0). In some examples of video coding, the encoder may signal the *AdaptiveClipQuant* flag to indicate the delta quantization step based on the slice type.

The reference range that may be used to compute/determine the delta values may be adjusted based on the slice type. For example, slices of type I may use the "narrow video range". For example, the other slices (e.g., slice type P or slice type B) may use the maximum and minimum ranges used for the collocated slices (e.g., an adjacent slice in the previous or subsequent frames).

FIG. 19B shows an example method for adaptive adjusting (e.g., clipping). More specifically, FIG. 19B shows a flowchart of an example method for an adaptive clipping tool in video coding, for example, as described in Cui et al., *"EE2-4.1: Adaptive clipping with signaled lower and upper bounds,"* JVET-AG0145, January 2024. One or more steps of the example method of FIG. 19B may be performed and/or implemented by an encoder (e.g., encoder 114 of FIG. 1). As described with respect to FIG. 19B, after initialization of the bit depth (e.g., bit depth = 10) at step 1900, the slice type of the current slice may be determined at step 1910. If the slice type is determined to be I at step 1910, the maximum and minimum bounds of the reference range may be set to the narrow video range (e.g., 940 and 64, respectively, if the bit depth is 10) and/or the *AdaptiveClipQuant* flag may be set to 0 at step 1912. If the slice type is not determined to be I at step 1910, the maximum and minimum bounds of the reference range may be set to the maximum and minimum values of the collocated picture range and/or the *AdaptiveClipQuant* flag may be set to 1 at step 1911.

At step 1913, the *AdaptiveClipQuant* flag may be signaled on the bitstream. At step 1914, the maximum and minimum luma values of pixels of the original picture (e.g., the real picture max luma 1902 and the real picture min luma 1903 in FIG. 19A) may be determined. At step 1915, the delta maximum value (e.g., the delta maximum 1904 in FIG. 19A) may be determined as the difference between the maximum luma value for pixels in the original picture (e.g., real picture max luma 1902 in FIG. 19A) and the maximum bound of the reference range (e.g., maximum reference range 1900 in FIG. 19A). The delta minimum value (e.g., delta minimum 1905 in FIG. 19A) may be determined as the difference between the minimum luma value for pixels in the original picture (e.g., real picture min luma 1903 in FIG. 19A) and the minimum bound of the reference range (e.g., minimum reference range 1901 in FIG. 19A).

At step 1916, the delta maximum and/or delta minimum (e.g., determined at step 1915) may be quantized. The quantization may be performed using the quantization step determined based on the *AdaptiveClipQuant* flag. A quantization step of 2 may be used, for example, if the *AdaptiveClipQuant* flag is not set/determined). A quantization step of $2^5$ may be used, for example, if the *AdaptiveClipQuant* flag is set/determined,. At step 1917, the quantized delta maximum value may be signaled on the bitstream. At step 1918, the quantized delta minimum value may be signaled on the bitstream. In some examples of video coding, and both the quantized delta maximum value and quantized delta minimum value be signaled to the decoder.

Signaling the *AdaptiveClipQuant* flag and both delta values to the decoder may significantly increase the bit rate for clipping, thereby reducing the encoding efficiency. Some techniques may avoid sending (e.g., transmitting) the *AdaptiveClipQuant* flag and/or at least one of the delta values.

Some techniques may provide for improved adaptive clipping with reduced bandwidth use. They may achieve improved adaptive clipping with reduced bandwidth use by implementing several distinguishing features compared to the adaptive clipping technique that is currently being implemented in video coding. These techniques may not signal the *"AdaptiveClipQuant"* flag 1913 of the adaptive clipping technique. Instead of signaling the flag, the decoder may derive the flag from the slice type of the current slice. For example, in VVC, the *"sh_slice_type"* parameter in the slice header may include the slice type of the current slice.

For slice type I, a decoder may set a reference range based on a *vui_full_range_flag.* The decoder may determine (or assume) the *vui_full_range_flag* is true (e.g., *vui_full_range_flag* = 1) and/or use the "full video range" as the reference range, for example, if the *vui_full_range_flag* is present. The decoder may determine (or assume) the *vui_full_range_flag* is false (e.g., *vui_full_range_flag* = 0) and/or use the "narrow video range" as the reference range by default, for example, if the *vui_full_range_flag* is absent. The maximum delta value and the minimum delta value may be represented in the *deltaMax* and *deltaMin* parameters, respectively. The maximum and minimum delta values may be encoded without the sign because they may be negative and positive. That is, if the reference range is the narrow video range, the *deltaMin* and *deltaMax* may be negative and positive, respectively, to the reference range, requiring the sign signaling and if the reference range is the full video range, the *deltaMin* and *deltaMax* may be only positive and negative, respectively, to the reference range, not requiring the sign signaling. Otherwise, the *deltaMin* and *deltaMax* may need to be encoded with the sign.

The encoder may signal to the decoder a new flag (e.g., *range_exact_flag*) to indicate whether the actual picture maximum and minimum luma values match the reference range. The maximum delta value and the minimum delta value (e.g., *deltaMax* and *deltaMin*) may not be sent (e.g., transmitted), for example, if the actual picture maximum and minimum luma values match the reference range. This technique is described in Damian Ruiz Coll, Jung-Kyung Lee, "AHG12: Range-Exact signaling for adaptive luma clipping." JVET-AJ0196-v2, November 2024.

A determination may be made with respect to each of the delta maximum and delta minimum whether it would be more efficient to signal that as a difference between the actual picture maximum or minimum luma values and the reference range or as a difference between the actual picture maximum or minimum luma values and a secondary reference range. The encoder may then signal delta maximum and/or delta minimum in the more efficient manner and also associate the signaled delta maximum and/or delta minimum with respective reference range indicators identifying the reference range or the secondary reference range.

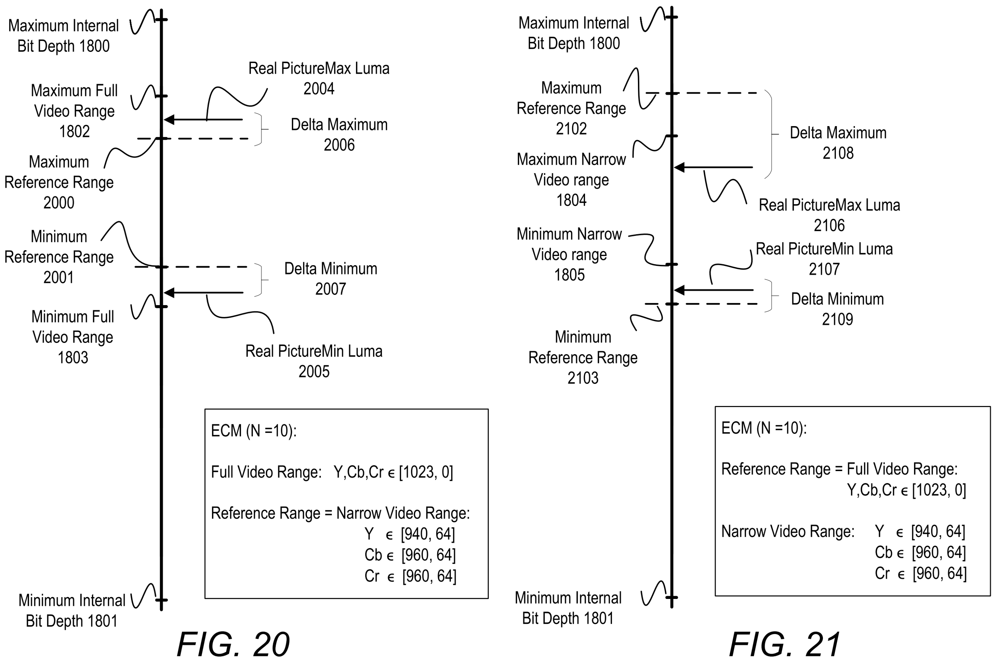

FIG. 20 shows an example of obtaining a reference range of video sample values. More specifically, FIG. 20 shows an example of obtaining a reference range of video sample values, for example, for a bit-depth of 10 bits. FIG. 20 shows an example in which the *"vui_full_range_flag"* is false or not present in the bitstream. The decoder may adjust the maximum and/or minimum bounds of the reference range (e.g., the maximum reference range 2000 and/or the minimum reference range 2001) to the maximum and/or minimum values of the "narrow video range." The maximum luma value (e.g., the real picture max luma 2004) and the minimum luma value (e.g., the real picture min luma 2005) of original pixels of the picture (e.g., pixels of the original picture) may be determined. The delta maximum value 2006 may be the difference between the maximum luma value (e.g., real picture max luma 2004) of the pixels of the original picture and the maximum bound of the reference range (e.g., the maximum reference range 2000). The delta minimum value 2007 may be the difference between the minimum luma value (e.g., the real picture min luma 2005) of the pixels of the original picture and the minimum bound of the reference range (e.g., the minimum reference range 2001).

FIG. 21 shows an example of obtaining a reference range of video sample values. More specifically, FIG. 21 shows an example of obtaining a reference range of video sample values, for example, for a bit-depth of 10 bits. FIG. 21 shows an example in which the *vui_full_range_flag* is true or present in the bitstream. The decoder may adjust the maximum and/or minimum bounds of the reference range (e.g., maximum reference range 2102 and/or minimum reference range 2103) to the maximum and/or minimum values of the "full video range" (e.g., maximum full video range 1802 and/or minimum full video range 1803 in FIG. 20). The maximum luma value (e.g., real picture max luma 2106) and the minimum luma value (e.g., real picture min luma 2107) of pixels of the original picture may be determined. The delta maximum value 2108 may be the difference between the maximum luma value (e.g., real picture max luma 2106) of the pixels of the original picture and the maximum bound of the reference range (e.g., maximum reference range 2102). The delta minimum value 2109 may be the difference between the minimum luma value (e.g., real picture min luma 2107) of the pixels of the original picture and the minimum bound of the reference range (e.g., minimum reference range 2103).

In video coding standards such as VVC, the BitDepth$_Y$ and BitDepth$_C$ may be in the range of 0 to 2, meaning that the samples of a picture may be encoded with an internal bit depth of 8, 9, or 10 bits. Encoding a picture with a higher bit depth may improve the encoding gain, even if the original picture sequence has a lower bit depth. If the picture's original bit depth (N) is less than BitDepth$_Y$ and BitDepth$_C$ (M), the input samples may be upscaled as follows:

$$\mathrm{Sample}_y(M) = \mathrm{Sample}_y(N) \ll (M - N) \ \forall \ M \geq N$$

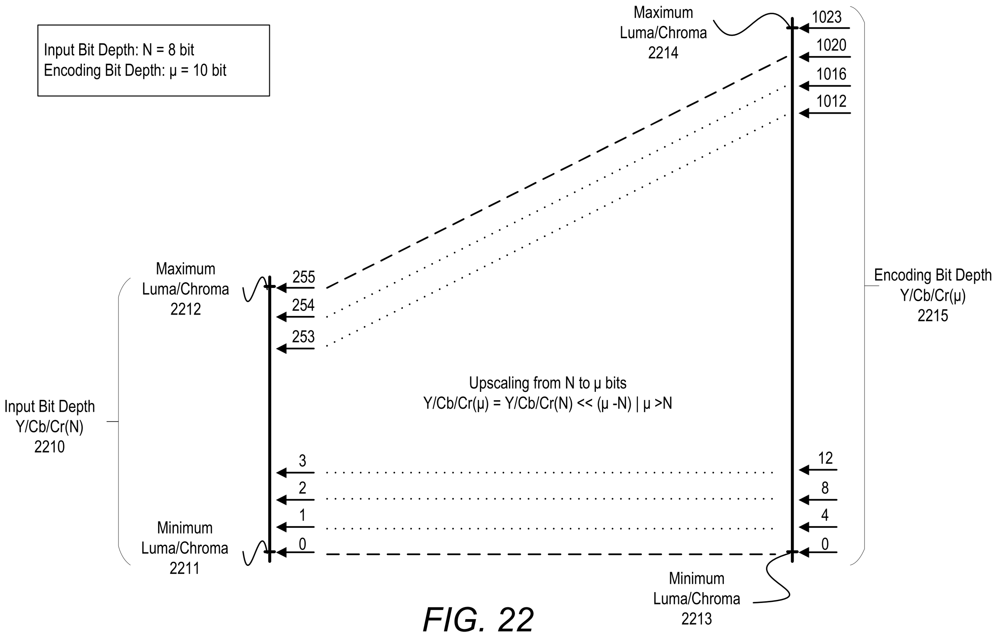

FIG. 22 depicts an example of upscaling a picture from a input bit depth of 8 bit to 10 bit. As the 8 bits samples are scaled x4 ($2^{(10-8)}$), so the samples in the 10 bit resolution may take values multiplied by 4. The input bit depth 2210 of 8 may provide a luma/chroma range from minimum luma/chroma value 2211 of 0 to maximum luma/chroma value 2212 of 255. With the upscaling to 10 bits, the encoding bit depth 2215 ($\mu$) may range from minimum luma/chroma value 2213 of 0 to maximum luma/chroma value 2214 of 1020.

The input video may be upscaled. The input video may be upscaled, for example, if an internal bit depth (BitDepth$_Y$ and BitDepth$_C$) of 10 bits is used, but the input video has a bit depth of 8 bits. Increasing the internal bit depth from 10 bits to 12 bits may achieve a significant gain. It may be highly likely that future video coding standards will use an internal bit depth of 12 bits or higher, which may further accentuate the described effect (e.g., resulting in 16 steps).

The reconstruction samples clipping to the maximum and minimum luma values may be signaled to the decoder, indicating the real maximum and minimum sample values of the original picture in the internal bit depth (BitDepth$_Y$, BitDepth$_C$). To reduce the bitstream overhead, the encoder may signal to the decoder the maximum and minimum delta parameters, which may be calculated as the difference between the real luma maximum and minimum value in the original picture and the maximum and minimum luma reference range signaled or determined (e.g., derived) by the encoder and decoder.

The maximum and minimum delta parameters may need to signal a high delta maximum and/or minimum value, which may be inefficient, particularly for low bit rates, where the overhead of signaling great (e.g., large) delta values may result in a significant performance reduction. For instance, an encoder may set the reference range to a narrow video range but the real luma maximum and minimum values are the full video range, or vice versa. This means that, for instance, for a bit depth of 10 bits, the minimum delta value signaled in the bitstream may be ±64 (64 - 0 or 0 - 64) and ±83 (940 - 1023 or 1023 - 940). This may increase the bit rate to signal the luma clipping values, thereby reducing the encoding efficiency.

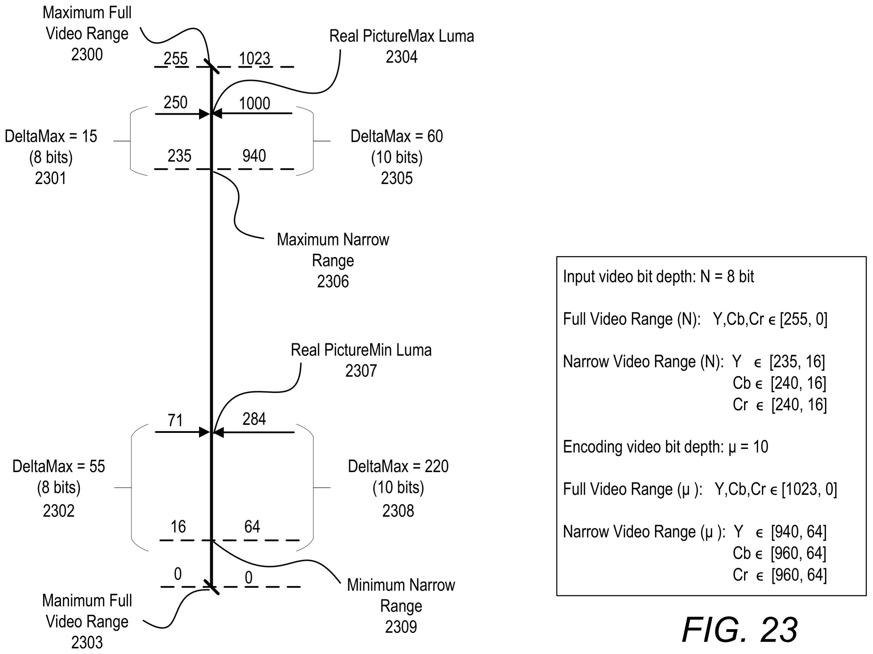

Regarding FIG. 19B, the encoder may quantize both delta parameters to reduce the delta values signaling. The delta parameters may be quantized with a step of two (2) for the I and inter-prediction slices non-encoded in low delay. Otherwise, they may be quantized by a factor of 32, for example, at step 1916 of FIG.19B. FIG. 23 shows an example of maximum and minimum delta parameters from a picture for an original bit depth and an internal bit depth. More specifically, FIG. 23 shows an example of the maximum and minimum delta parameters (DeltaMax, DeltaMin) that may be computed from a picture with an original bit depth of 8 bits (2301, 2302) and the equivalent maximum and minimum delta parameters that may be computed in the internal bit depth of 10 bits (2305, 2308). For both the original bit depth and the internal bit depth, the maximum delta values may be computed as the difference between the real maximum luma value (2304) and the maximum reference level (2306), corresponding to the maximum narrow range (e.g., 235 for a bit depth of 8 bit and 940 for a bit depth of 10 bit). Likewise, the minimum delta values may be computed as the difference between the minimum luma value (2307) and the minimum reference level (2309), corresponding to the minimum narrow range (e.g., 16 for a bit depth of 8 bit and 64 for a bit depth of 10 bit).

The maximum and minimum delta parameters (2305, 2308) in the 10-bit domain may be four times larger than the maximum and minimum delta parameters (2301, 2302) computed in the original 8-bit depth. Even after using (e.g., applying) the quantization of two (2) to the delta values, the delta parameter computed in the 10 bit domain (e.g., 60/2 and 220/2) may have double the magnitude compared to the delta parameters computed in the original 8 bit depth (e.g., 15 and 55).

Examples described herein may achieve improved adaptive clipping by adjusting the delta parameters' quantization according to the original picture bit depth instead of using a fixed quantization parameter irrespective of the original or input picture bit depth. This may allow the delta parameters' overhead to be reduced compared to existing adaptive clipping techniques. To reduce delta parameter signaling, examples described herein may be configured to modify the delta quantization in the adaptive luma clipping process described herein with respect to FIG. 19B. This may be achieved by signaling the original bit depth and adjusting the quantization step size in accordance with the original bit depth and the internal bit depth.

The original bit depth (e.g., sps_origbitdepth_minus8) may be signaled in the Sequence Parameter Set (SPS) in a manner similar to the signaling of the internal depth flag (sps_bitdepth_minus8). The original bit depth thereafter may be considered in adjusting the delta quantization step. Examples described herein may adjust the delta quantization step (*deltaQuant*) based on the target quantization Q and the difference between the original bit depth (N) and the internal bit depth (M) as shown below:

$$deltaQuant = \max(Q, 2^{(M-N)}) \ \forall \ M \geq N$$

Using (e.g., applying) this modification in adaptive clipping methods that use a target quantization of Q = 2 regardless of the original bit depth, the encoder and decoder may use (e.g., apply) a quantization level of 2 for input video with an original bit depth of 10 bits. A quantization parameter of 4 as $\max(2, 2^{(10-8)})$, may be used, for example, for input video with an 8-bit depth. This would result in effectively halving both the maximum and minimum delta parameters and thereby improve the coding efficiency.

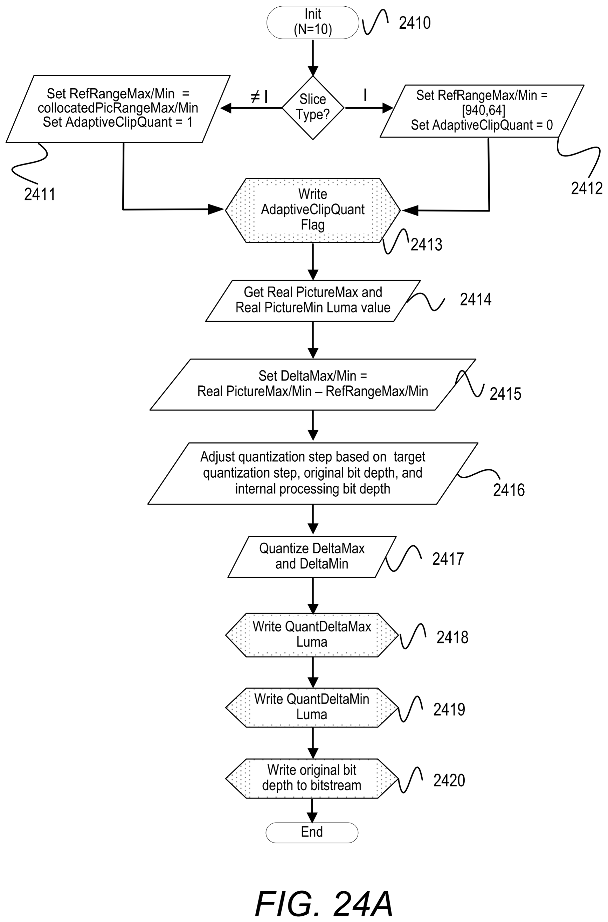

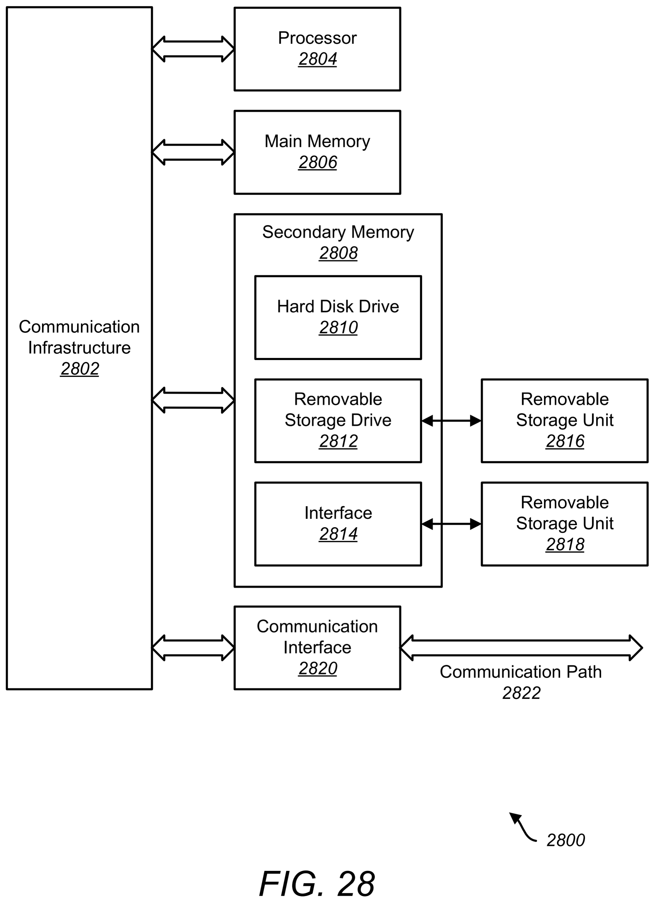

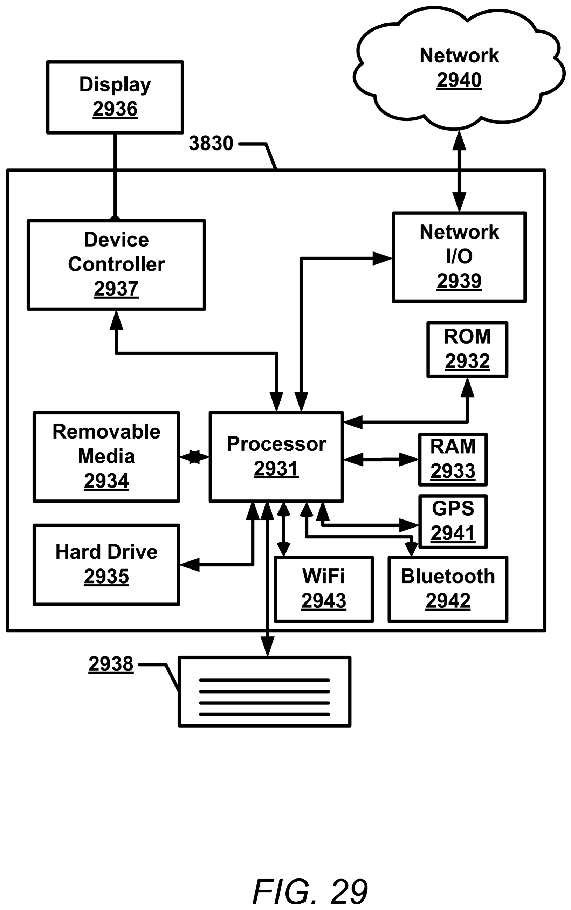

FIG. 24A shows an example method of adaptive quantization for use in clipping. More specifically, FIG. 24A shows a flowchart of an example method of adaptive quantization for use in clipping where the method incorporates the adjusting of quantization based on the original bit depth. One or more steps of the example method of Figure 24A may be implemented and/or performed by a coder such as an encoder (e.g., encoder 114 in FIG. 1, encoder 200 in FIG. 2), an example computer system 2800 as described herein with respect to FIG. 28, and/or an example computing device 2930 as described herein with respect to FIG. 29. In the process of FIG. 24A, the operations of steps 2410-2415 may be the same as those in corresponding steps 1910-1915 as described herein with respect to FIG. 19B, and the operations of steps 2417-2419 may be the same as those in corresponding steps 1916-1918 as described herein with respect to FIG. 19B.

The process of FIG. 24A may differ from the process of FIG. 19B, for example, by determining the quantization step at step 2416 of FIG. 24A based on the target quantization parameter, the original bit depth, and the internal bit depth. Additionally the process described herein with respect to FIG. 24A may differ from the process described herein with respect to FIG. 19B, for example, by signaling the original bit depth to the decoder at step 2420.

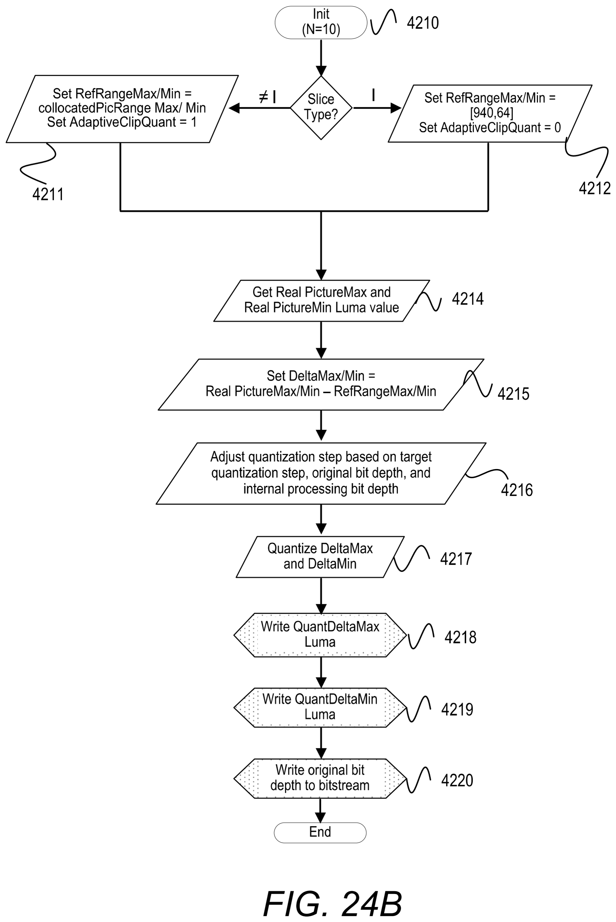

FIG. 24B shows an example method of adaptive quantization for use in clipping. More specifically, FIG. 24B shows a flowchart of an example method of adaptive quantization for use in clipping where the method incorporates the adjusting of quantization based on the original bit depth. One or more steps of the example method of Figure 24B may be implemented and/or performed by a coder such as an encoder (e.g., encoder 114 in FIG. 1, encoder 200 in FIG. 2), an example computer system 2800 as described herein with respect to FIG. 28, and/or an example computing device 2930 as described herein with respect to FIG. 29. In the process of FIG. 24B, the operations of steps 4210-4212 may be the different than those in corresponding steps 2410-2412 shown in FIG. 24A, and the operations of steps 4214-4220 may be the same as those in corresponding steps 2414-2420 shown in FIG. 24A. In particular, the *AdaptiveClipQuant* parameter may not be signaled to the decoder, as previously described herein.

In FIG. 24B, the slice type of the current slice may be determined. The slice type of the current slice may be determined, for example, after initialization of the bit depth (e.g., internal bit depth 10) at step 4210. At step 4212, the maximum and minimum bounds of the reference range may be set to the narrow video range (e.g., 940 and 64, respectively, for bit depth 10) and the *AdaptiveClipQuant* may be set to 0. The *AdaptiveClipQuant* may be set to 0, for example, if the slice is of slice type I. At step 4211, the maximum and minimum bounds of the reference range may be set to the maximum and minimum values of the collocated picture range and the *AdaptiveClipQuant* flag may be set to 1. The *AdaptiveClipQuant* flag may be set to 1, for example, if the slice type is different from slice type I. The *AdaptiveClipQuant* flag may be signaled in the bitstream.

The operations described herein at least with respect to steps 2416 and 2420 may enable an encoder to adapt conventional adaptive quantization for clipping to efficiently code large delta values (i.e. large differences between the target range and the reference range). Instead of merely setting the quantization step (*AdaptiveClipQuant*) based on the slice type of the current picture, the operations described herein may efficiently code large delta values, for example, by adjusting the quantization step in accordance with the difference in the internal processing bit depth and the original bit depth.

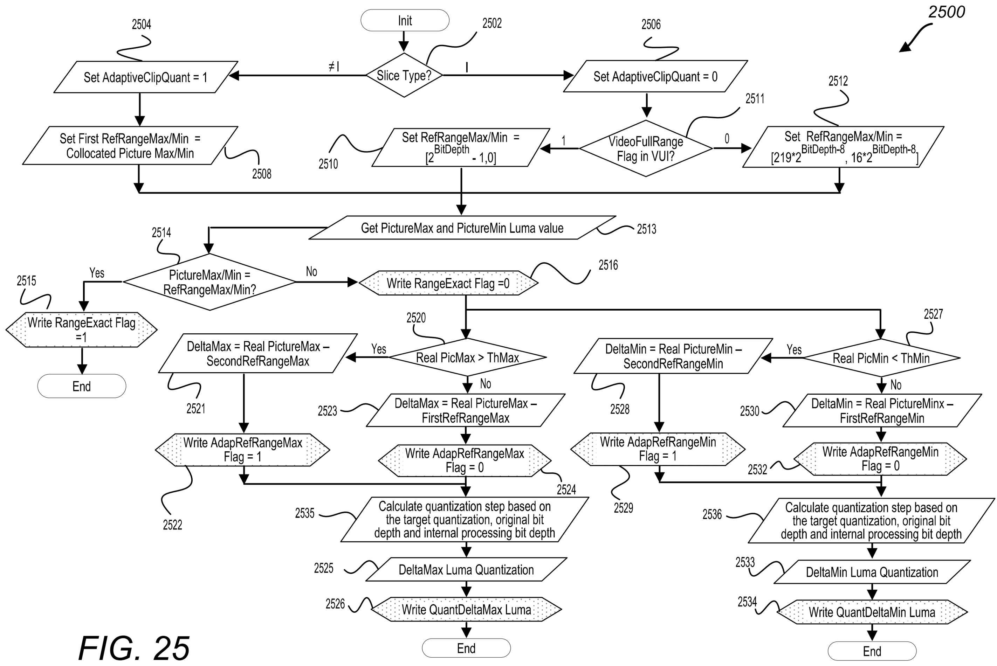

FIG. 25 shows an example method of adaptive quantization for use in clipping. More specifically, FIG. 25 shows a flowchart 2500 of an example method that provides for selective reference range determination for improved adaptive clipping and incorporates the adjusting of quantization based on the original bit depth. The example method of FIG. 25 may adapt a process for selective reference range determination for improved adaptive clipping to adjust the quantization step based on the original bit depth. One or more steps of the example method of Figure 25 may be implemented and/or performed by a coder such as an encoder (e.g., encoder 114 in FIG. 1, encoder 200 in FIG. 2), an example computer system 2800 as described herein with respect to FIG. 28, and/or an example computing device 2930 as described herein with respect to FIG. 29. One or more steps of the example method may be performed by the encoder during and/or at the end of one or more of several processes during the encoding process to prevent sample value overflow and/or inversion. The example method of Figure 25 may determine difference values (e.g., delta values) between a target range for clipping and a selected reference range, and may signal the difference values for signaling to the decoder. The example method of Figure 25 may improve a process for selective reference range determination for improved adaptive clipping, for example, by the addition of the operations of steps 2535 and 2536 and providing for the original bit depth to be communicated from the encoder to the decoder (not separately shown in FIG. 25).

The encoder may determine a quantization step size for the delta parameters and determine the first reference range. The encoder may determine (e.g., select) a quantization step size for the delta parameters and determine (e.g., select) the first reference range, for example, after initializing the example method of Figure 25. At step 2502, the quantization step size for the delta parameters and the first reference range may be initially determined (e.g., selected). The quantization step size for the delta parameters and the first reference range may be initially determined based on (e.g., selected according to) the slice type. At step 2504, the encoder may set the quantization parameter to a first quantization value (e.g., to 32) and may optionally set a *AdaptiveClipQuant* configuration parameter to 1. The encoder may set the quantization parameter to a first quantization value (e.g., to 32) and may optionally set a *AdaptiveClipQuant* configuration parameter to 1, for example, if the slice is not an I frame. At step 2508, the encoder may set the reference range (e.g., primary reference range) to the maximum and minimum values of the collocated picture. The encoder may set the reference range (e.g., primary reference range) to the maximum and minimum values of the collocated picture, for example, if the slice is not an I frame.

At step 2506, the encoder may set the quantization step size to a second quantization value (e.g., to 2) and may optionally set the *AdaptiveClipQuant* configuration parameter to 0. The encoder may set the quantization step size to a second quantization value (e.g., to 2) and may optionally set the *AdaptiveClipQuant* configuration parameter to 0, for example, if the slice type is type I. At step 2511, the encoder may determine the reference range (e.g., primary reference range) based on the full video range flag. At step 2510, the full video range flag may be set to a full video range of $[0, 2^{N-1}]$, for example, if the full video range flag is 1. Alternatively, at step 2512, the full video range flag may be set to a narrow video range, for instance [64, 940] for a bit depth of 10-bits. The full video range flag may be set to a narrow video range, for example, if the full video range flag is 0. The encoder may infer that a narrow video range is used. The encoder may infer that a narrow video range is used, for example, if the full video range flag is not present at the Video Usability Information (VUI). At the encoder, the full video range flag may be a configuration setting.

At step 2513, the encoder may determine the maximum and minimum luma values. The encoder may determine the maximum and minimum luma values, for example, by scanning the whole picture . The determination of the range of actual values may be performed block by block in the picture. For example, since the prediction and encoding of the picture is performed on a block by block basis, each block may be clipped (that is, the samples of each block may be clipped) if necessary to prevent sample values exceeding the bit depth during the prediction and encoding of the picture.

A *"range_exact_flag"* may be set to 1, and the encoder signals the *range_exact_flag* in the bitstream. A *"range_exact_flag"* may be set to 1, and the encoder signals the *range_exact_flag* in the bitstream (2515), for example, if the original maximum and minimum luma values match the reference range (2514). Otherwise, the *"range_exact_flag"* may be set to 0 and the encoder signals the *range_exact_flag* in the bitstream. The *"range_exact_flag"* may be set to 0 and the encoder signals the *range_exact_flag* in the bitstream (2516), for example, if the maximum and minimum luma values do not match the reference range (e.g., either bound does not match). The encoder may evaluate whether a secondary reference range for the maximum and/or minimum may be more efficient for determining the delta parameters. The encoder may evaluate whether a secondary reference range for the maximum and/or minimum may be more efficient for determining the delta parameters, for example, if the maximum and minimum actual luma values (also referred to as real maximum and real minimum) do not match the reference range (e.g., primary reference range). The secondary reference range may be set to the other of the narrow video range or the full video range. The secondary reference range may be set to either of the narrow video range or the full video range, for example, if the slice type is I and the reference range (e.g., primary reference range) is one of the narrow video range or the full video range. The reference range (e.g., primary reference range) may be set to the collocated reference range, and the secondary reference range may be the default reference range according to the *vui_full_video_range* flag signaled in the VUI (or the narrow range if it is not present). The reference range (primary reference range) may be set to the collocated reference range, and the secondary reference range may be the default reference range according to the *vui_full_video_range* flag signaled in the VUI (or the narrow range if it is not present), for example, if the slice type is not I. The selection of the primary reference range or the secondary reference range as the more efficient may be performed individually for the maximum and minimum bounds and signaled to the decoder. The encoder may determine a threshold (e.g., maximum threshold or *thMax*) between the primary and secondary maximum reference ranges and a threshold (e.g., minimum threshold or *thMin*) between the first and second minimum reference range. For instance, for a 10-bit bit depth, an encoder may determine a luma value between 940 and 1023 for the *thMax* threshold and a luma value between 0 and 64 for the *thMin* threshold.

The encoder may determine whether the secondary reference range's maximum value is greater than the primary reference range's maximum value. At step 2520, the encoder may determine whether the maximum actual luma value may be greater than the maximum threshold *thMax.* At step 2521, the encoder may determine the delta maximum (*deltaMax*) parameter using the secondary reference range. The delta maximum (*deltaMax*) parameter may be determined using the secondary reference range, for example, if the secondary reference range's maximum value (e.g., 1023) may be greater than the primary reference range's maximum value (e.g., 940), and the maximum actual luma value may be greater than the maximum threshold *thMax.* At step 2522, the encoder may set a reference range indicator (e.g. *AdaptiveRefRangeMax* flag) to 1. At step 2522, the encoder may signal the reference range indicator to the decoder. At step 2523, the encoder may determine the *deltaMax* to be the difference between the maximum actual luma value and the primary reference maximum value. The encoder may determine the *deltaMax* to be the difference between the maximum actual luma value and the primary reference maximum value, for example, if the maximum actual luma value is less than or equal to the maximum threshold *thMax.* At step 2524, the encoder may set the *AdaptiveRefRangeMax* flag to 0 and signal the *AdaptiveRefRangeMax* flag to the decoder.

Based on similar logic, the delta minimum (*deltaMin*) parameter may be determined using the secondary reference range , and a reference range indicator may be set to 1 and signaled to the decoder. The delta minimum (*deltaMin*) parameter may be determined using the secondary reference range (2528), and a reference range indicator (e.g. *AdaptiveRefRangeMin* flag) may be set to 1 and signaled to the decoder (2529), for example, if the secondary reference range's minimum value is lower than the primary reference range's minimum value and the minimum actual luma value may be less than the minimum threshold *thMin* (2527). Alternatively, *AdaptiveRefRangeMin* flag may be set to 0 and signaled to the decoder. *AdaptiveRefRangeMin* flag may be set to 0 and signaled to the decoder (2532), for example, if *deltaMin* is determined as the difference between the maximum actual luma value and the primary reference maximum value (2530).

Further, the *deltaMax* value may be quantized (2525) and signaled to the decoder (2526), and the *deltaMin* value may be quantized (2533) and signaled to the decoder (2534). The process 2500 may be configured to adjust the quantizing step determined at 2504 or 2506 in accordance with the original bit depth for providing for more efficient coding of large delta values. The quantization step may be adjusted at 2535 and 2536 respectively, in accordance with the target quantization step determined at 2504 or 2506, the internal processing bit depth, and the original bit depth, for example, prior to the quantizing at 2525 and 2533. The process 2500 may provide for the original bit depth to be sent (e.g., transmitted) from the encoder to the decoder so that the decoder can use the original bit depth in adjusting the quantization step. By providing for the quantization step which may be initially determined solely based on the slice type, to be adjusted prior to the quantization of the delta parameters and also by communicating the original bit depth to the decoder as described in relation to the example processes shown in FIGs. 24A-B and FIG. 25, examples described herein may enable improving the coding efficiency of the delta parameters.

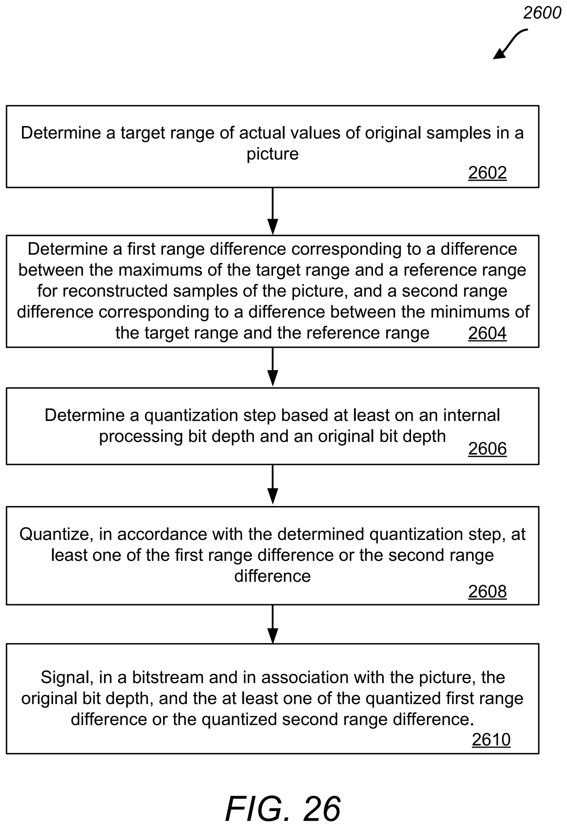

FIG. 26 shows an example method for adaptive quantization based on original or input bit depth. More specifically, FIG. 26 shows a flowchart 2600 of an example method for adjusting, based on the original bit depth, the quantization step for improved luma adaptive clipping. One or more steps of the example method may be implemented by a coder such as an encoder (e.g., encoder 114 in FIG. 1, encoder 200 in FIG. 2), an example computer system 2800 as described herein with respect to FIG. 28, and/or an example computing device 2930 as described herein with respect to FIG. 29. Some of the one or more steps of the example method of FIG. 26 may not necessarily be in the same sequence.

One or more steps of the example method of Figure 26 may be performed by the encoder during and/or at the end of any one or more processing stages in the prediction and encoding process. The method of Figure 26 can be used to adjust (e.g., clip) sample values, for example, to prevent overflow and/or value inversion during or after any one or more of the stages such as prediction, adaptive loop filter (ALF), deblocking filter, SAO filter, and/or if the decoded residual is added to the prediction.

At step 2602, the encoder may determine a range of actual luma values of original samples in a picture. The range of actual luma values may be determined, for example, by scanning values of original pixels in the picture to determine a maximum luma value and a minimum luma value. The original samples of the picture may comprise samples obtained by using (e.g., applying) a temporal filter to two or more pictures including a current picture. The range of actual values may defined by the determined maximum luma value and the determined minimum luma value. The range of actual luma values determined at 2602 may also be referred to as the "target range", or "clipping range."

At step 2604, the encoder may determine the difference between the target range and a reference range for reconstructed samples of the picture. More particularly, the encoder may determine a first range difference corresponding to a difference between the maximum of the target range and the maximum of the reference range, and a second range difference corresponding to a difference between the minimum of the target range and the minimum of reference range. The differences determined may be referred to as "delta maximum" (*deltaMax*) and "delta minimum" (*deltaMin*), respectively.

The encoder may determine a reference range for samples of the picture. The encoder may compare the reference range to the target range determined at step 2602. The encoder may compare the reference range to the target range, for example, before determining the delta maximum and the delta minimum. The reference range may be established for each picture based on configuration. The reference range may be determined to be one of two video ranges: a full video range or a narrow video range. The full video range may be determined as luma values between a minimum luma value of 0 to a maximum luma value of $2^N - 1$, where N is the bit depth. The narrow video range may be determined as luma values between a minimum of $16*2^{N-8}$ to a maximum of, for example, $235*2^{N-8}$. Other values instead of 16 and 235 may be used for the min and max of the narrow video range.

The encoder may obtain the internal processing bit depth value from configuration. A configuration parameter may specify a flag indicating whether the reference range is to be set to the full video range or to the narrow video range. The encoder may set the reference range to be to the full video range, for example, if the flag is set, the encoder may set the reference range to be the narrow video range. The flag may be optionally signaled (e.g., sent, transmitted) on the bitstream to the decoder. For example, the flag may be the *vui_full_range_flag* parameter in the video usability information (VUI) syntax element signaling the video range to the decoder in VVC.

Thus, the encoder may compare the target range determined at 2602 and the full video range, for example, if the *vui_full_range_flag* or the corresponding configuration flag is set indicating that the reference range is the full video range. The encoder may compare the target range determined at 2602 and the narrow video range, for example, if the *vui_full_range_flag* or the corresponding configuration flag is not set indicating that the reference range is the narrow video range. The comparing of the target range determined at 2602 to the reference range may be performed, for example, by comparing the maximum value in the target range to the maximum bound of the reference range and by comparing the minimum value in the target range to the minimum bound of the reference range.

As described herein in relation to FIG. 25, a match indicator (e.g., *range_exact_flag*) may be set to indicate that the target range matches one or both the maximum of the reference range and the minimum of the reference range. The encoder may send (e.g., transmit) the match indicator and not send (e.g., transmit) the corresponding delta parameter(s), for example, if a match indicator (e.g., *range_exact_flag*) indicates that the target range matches one or both the maximum of the reference range and the minimum of the reference range. As also described herein with respect to FIG. 25, the delta minimum and/or the delta maximum may be specified in relation to a secondary reference range instead of in relation to the reference range (e.g., primary reference range). At step 2606, the encoder may determine a quantization step. The encoder may determine a quantization step, for example, based on at least the internal processing bit depth and the original bit depth. The quantization step may be determined as the maximum of the target quantization step and a quantization step based on the internal processing bit depth and the original bit depth. The target quantization step may be the quantization step that is initially determined in accordance with the type of the current slice of the picture. More particularly, some example described herein adjust the delta quantization step (*deltaQuant*) based on the target quantization step Q and the difference between the original bit depth (N) and the internal bit depth (M) as shown below:

$$deltaQuant = \max(Q, 2^{(M-N)}) \; \forall \; M \geq N.$$

At step 2608, in accordance with the quantization step determined at 2606, the encoder may quantize at least one of the first range difference and the second range difference. Both the first range difference and the second range difference may be quantized. As described herein in relation to FIG. 25, the encoder may communicate only one of the delta minimum or delta maximum to the decoder. The quantizing may be used for (e.g., applied to) the sent (e.g., transmitted) one of the delta minimum or delta maximum.

At step 2610, the encoder may signal in a bitstream the original bit depth and the at least one of the first and second range differences. The encoder may signal the original bit depth and the at least one of the first and second range differences in a bitstream in association with the picture. The original bit depth may be included in a Sequence Parameter Set (SPS) syntax element in association with the picture. The internal processing bit depth may also be included in a SPS syntax element in association with the picture. Both the first and second range differences may be signaled in the bitstream.

An indicator may be sent (e.g., transmitted) in the bitstream in association with the picture, where the indicator identifies the reference range. The indicator may be included in the video usability information (VUI) syntax element in the bitstream.

Additionally, one or more of the quantized delta maximum and the quantized delta minimum may be sent (e.g., transmitted) to the decoder. The quantized delta parameters may be included in a header of the picture in the bitstream.

As described herein with respect to FIGs. 24A-B and FIG. 25, one or more other indicators (e.g., *AdaptiveRefRangeMax, AdaptiveRefRangeMin, range_exact_flag*) may also be signaled from the encoder to the decoder in association with the picture. The *AdaptiveClipQuant* flag may be signaled to indicate whether adaptive quantization is enabled/used. Alternatively, the decoder may be configured to determine the initial quantization step size based on the slice type of the current slice, even without the encoder signaling the *AdaptiveClipQuant* flag. For example, the *"sh_slice_type"* parameter in the slice header may include the slice type of the current slice.

The current block or CTUs in the picture may be adjusted (e.g., clipped) according to the target range. That is, sample values in the current block or group of blocks may be adjusted (e.g., clipped) to ensure that they are between the minimum bound and the maximum bound of the target range. As described herein, the adjusting (e.g., clipping) can take place, for example, during or after one or more stages in the encoder. The samples to which clipping is used (e.g., applied) in the encoder may be referred to as prediction samples. The clipped samples of the picture may be signaled on the bitstream to the decoder. The example method of Figure 26 is described herein, without limitation, primarily for luma samples. The same technique may also be used for (e.g., applied to) chroma samples.

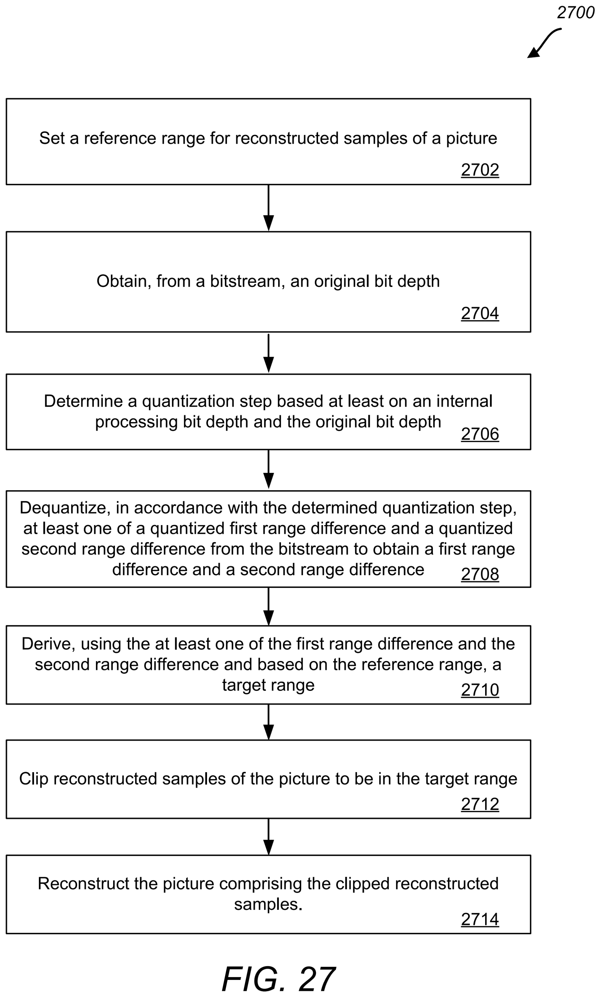

FIG. 27 illustrates a flowchart 2700 for a method of adjusting, based on the original bit depth, the quantization step for improved luma adaptive clipping. The method of flowchart 2700 may be performed by a decoder (e.g., decoder 300 of FIG. 3). Some of the steps of flowchart 2700 may not necessarily be in the same sequence, as would be understood by a skilled person in the art.

A process according to method of flowchart 2700 may be performed, for example, during or at the end of several stages in the reconstruction and decoding performed in the decoder, to ensure that the samples of reconstructed blocks do not overflow/underflow. The method of flowchart 2700 can be used to clip sample values to prevent overflow and/or value inversion. The method of flowchart 2700 can be used to clip sample values to prevent overflow and/or value inversion, for example, during or after any one or more of the stages such as reconstruction, adaptive loop filter (ALF), deblocking filter, SAO filter, and if the decoded residual is added to the prediction.

At step 2702, the reference range for reconstructed samples of a picture may be set. The reference range may be set to a default range. For example, the default range may be predefined in the coder or it may be preset for the video. The reference range may be set based on a status of an indicator of reference range in a bitstream. Based on a status of a first indicator in a bitstream, the reference range may be set for reconstructed samples of a picture.

The indicator of reference range, also referred to as a reference range flag/indicator, may be a flag indicating whether the reference range is to be set to the full video range or to the narrow video range. The reference range may be set equal to the narrow video range. The reference range may be set equal to the narrow video range, for example, if the flag is set the primary reference range is set equal to the full video range, or if the flag is not set. The reference range may be set equal to the narrow video range. The reference range may be set equal to the narrow video range, for example, if the reference range indicator is absent in the bitstream. It may be considered the same as the flag not being set. The reference range indicator is the *vui_full_range_flag* parameter in the VUI syntax element in the bitstream received from the encoder.

The video ranges, full video range and the narrow video range may depend on the internal processing bit depth parameter and were described herein. The decoder may obtain the bit depth from the bitstream, the internal processing bit depth may be signaled by the encoder through the *sps_bitdepth_minus8* parameter in the sequence parameter set (SPS) syntax element.

At 2704, the original bit depth may be obtained from the bitstream. The original bit depth may be obtained from a Sequence Parameter Set (SPS) syntax element associated with the picture. As described herein in relation to 2610 of the encoder process, in addition to the original bit depth, the encoder may include other parameters and indicators in relation to the clipping. For example, the decoder may obtain from the bitstream one or more of the internal processing bit depth, an indicator identifying the reference range, one or more of the quantized delta maximum and the quantized delta minimum, and one or more other indicators (e.g., *AdaptiveRefRangeMax, AdaptiveRefRangeMin, range_exact_flag*). The "sh_slice_type" parameter in the slice header may include the slice type of the current slice.

At 2706, the quantization step Q may be determined or adjusted based at least on an internal processing bit depth and the original bit depth. The quantization step may be determined based on the internal processing bit depth, the original bit depth, and a target quantization step. The target quantization step may have been initially determined in accordance with a type of the current slice of the picture. For example, if the slice type is I, the quantization step is initially determined as 2, and as $2^5$ otherwise. The quantization step to be used for dequantization may be determined as the maximum of the target quantization step (i.e., the initially determined quantization step based on the slice type) and a value based on a difference between the internal processing bit depth and the original bit depth. More particularly, examples described herein may adjust the delta quantization step (*deltaQuant*) based on the target quantization step Q and the difference between the original bit depth (N) and the internal bit depth (M) as:

$$deltaQuant = \max(Q, 2^{(M-N)}) \; \forall \; M \geq N.$$

As described herein, the original bit depth and the internal processing bit depth may be obtained from the bitstream. The internal processing bit depth may be obtained from an SPS syntax element associated with the picture in the bitstream.

At 2708, in accordance with the quantization step determined at 2706, at least one of a quantized first range difference (e.g., quantized delta maximum) and a quantized second range difference (e.g., quantized delta minimum) obtained (e.g., parsed) from the bitstream may be dequantized to obtain the corresponding first and/or second range differences (e.g., dequantized delta maximum and/or dequantized delta minimum). At 2710, using the at least one of the first and second range differences, the target range for reconstructed sample values may be determined.

As described herein in relation to FIG. 25, a match indicator (e.g., *range_exact_flag*) may be set to indicate that the target range matches one or both the maximum of the reference range and the minimum of the reference range. The encoder may send (e.g., transmit) the match indicator and not send (e.g., transmit) the corresponding delta parameter(s). The encoder may send (e.g., transmit) the match indicator and not send (e.g., transmit) the corresponding delta parameter(s), for example, if such a match is determined. As also described in relation to FIG. 25, the delta minimum and/or the delta maximum may be specified in relation to a secondary reference range instead of in relation to the reference range (primary reference range). The determining of the target range may be adapted accordingly.

At 2712, reconstructed samples of the picture may be clipped to be in the target range. The clipping of the reconstructed samples in accordance with the derived target range may be performed, for example and without limitation, in an inverse quantization, a post-processing filter, in a weighted samples prediction for a geometric partitioning mode, and/or at an output of a sample-adaptive offset (SAO) filter.

At 2714, the picture comprising the clipped reconstructed samples may be reconstructed. The processes of flowcharts 2500 and 2600 are described herein, without limitation, in relation to the full video range and the narrow video range. The same techniques may be applicable to pairs of other ranges known to both the encoder and decoder. The processes of flowcharts 2600 and 2700 are described herein, without limitation, primarily for luma samples. The same technique may be used for (e.g., applied to) chroma samples.

Features of the present disclosure may be implemented in hardware using analog and/or digital circuits, in software, through the execution of instructions by one or more general purpose or special-purpose processors, or as a combination of hardware and software. Consequently, features of the present disclosure may be implemented in the environment of a computer system or other processing system. An example of such a computer system 2800 is shown in FIG. 28. FIG. 28 shows an example computer system in which examples of the present disclosure may be implemented. For example, the example computer system 2800 shown in FIG. 28 may implement one or more of the methods described herein. For example, various devices and/or systems described herein may be implemented in the form of one or more computer systems 2800. Furthermore, each of the steps of the flowcharts depicted in this disclosure may be implemented on one or more computer systems 2800. If/when more than one computer system 2800 is used to implement features of the present disclosure, the computer systems 2800 may be interconnected by one or more networks to form a cluster of computer systems that may act as a single pool of seamless resources. The interconnected computer systems 2800 may form a "cloud" of computers.

The computer system 2800 may comprise one or more processors, such as a processor 2804. The processor 2804 may be a special purpose processor, a general purpose processor, a microprocessor, and/or a digital signal processor. The processor 2804 may be connected to a communication infrastructure 2802 (e.g., a bus or network). The computer system 2800 may also comprise a main memory 2806 (e.g., a random access memory (RAM)) and/or a secondary memory 2808.

The secondary memory 808 may comprise a hard disk drive 2810 and/or a removable storage drive 2812 (e.g., a magnetic tape drive, an optical disk drive, and/or the like). The removable storage drive 2812 may read from and/or write to a removable storage unit 2816. The removable storage unit 2816 may comprise a magnetic tape, an optical disk, and/or the like. The removable storage unit 2816 may be read by and/or may be written to the removable storage drive 2812. The removable storage unit 2816 may comprise a computer usable storage medium having stored therein computer software and/or data.

The secondary memory 2808 may comprise other similar means for allowing computer programs or other instructions to be loaded into the computer system 2800. Such means may include a removable storage unit 2818 and/or an interface 2814. Examples of such means may comprise a program cartridge and/or a cartridge interface (such as in video game devices), a removable memory chip (such as an erasable programmable read-only memory (EPROM) or a programmable read-only memory (PROM)) and associated socket, a thumb drive and USB port, and/or other removable storage units 2818 and interfaces 2814 which may allow software and/or data to be transferred from the removable storage unit 2818 to the computer system 2800.

The computer system 2800 may also comprise a communications interface 2820. The communications interface 2820 may allow software and data to be transferred between the computer system 2800 and external devices. Examples of the communications interface 2820 may include a modem, a network interface (e.g., an Ethernet card), a communications port, etc. Software and/or data transferred via the communications interface 2820 may be in the form of signals which may be electronic, electromagnetic, optical, and/or other signals capable of being received by the communications interface 2820. The signals may be provided to the communications interface 2820 via a communications path 2822. The communications path 2822 may carry signals and may be implemented using wire or cable, fiber optics, a phone line, a cellular phone link, an RF link, and/or any other communications channel(s).

The computer system 2800 may also comprise one or more sensor(s) 2824. The sensor(s) 2824 may measure or detect one or more physical quantities and convert the measured or detected physical quantities into an electrical signal in digital and/or analog form. For example, the sensor(s) 2824 may include an eye tracking sensor to track the eye movement of a user. A display of a point cloud may be updated, for example, based on the eye movement of a user. The sensor(s) 2824 may include a head tracking sensor to track the head movement of a user. A display of a point cloud may be updated, for example, based on the head movement of a user. The sensor(s) 2824 may include a camera sensor for taking photographs and/or a 3D scanning device (e.g., a laser scanning device, a structured light scanning device, and/or a modulated light scanning device). The 3D scanning devices may determine geometry information by moving one or more laser heads, structured light, and/or modulated light cameras relative to the object or scene being scanned. The geometry information may be used to construct a point cloud.

A computer program medium and/or a computer readable medium may be used to refer to tangible storage media, such as removable storage units 2816 and 2818 or a hard disk installed in the hard disk drive 2810. The computer program products may be means for providing software to the computer system 2800. The computer programs (which may also be called computer control logic) may be stored in the main memory 2806 and/or the secondary memory 2808. The computer programs may be received via the communications interface 2820. Such computer programs, when executed, may enable the computer system 2800 to implement the present disclosure as discussed herein. In particular, the computer programs, when executed, may enable the processor 2804 to implement the processes of the present disclosure, such as any of the methods described herein. Accordingly, such computer programs may represent controllers of the computer system 2800.

Features of the disclosure may be implemented in hardware using, for example, hardware components such as application-specific integrated circuits (ASICs) and gate arrays. Implementation of a hardware state machine to perform the functions described herein will also be apparent to persons skilled in the relevant art(s).

FIG. 29 shows example elements of a computing device that may be used to implement any of the various devices described herein, including, for example, a source device (e.g., 102), an encoder (e.g., 114), a destination device (e.g., 106), a decoder (e.g., 120), and/or any computing device described herein. The computing device 2930 may include one or more processors 2931, which may execute instructions stored in the random-access memory (RAM) 2933, the removable media 2934 (such as a Universal Serial Bus (USB) drive, compact disk (CD) or digital versatile disk (DVD), or floppy disk drive), or any other desired storage medium. Instructions may also be stored in an attached (or internal) hard drive 2935. The computing device 2930 may also include a security processor (not shown), which may execute instructions of one or more computer programs to monitor the processes executing on the processor 2931 and any process that requests access to any hardware and/or software components of the computing device 2930 (e.g., ROM 2932, RAM 2933, the removable media 2934, the hard drive 2935, the device controller 2937, a network interface 2939, a GPS 2941, a Bluetooth interface 2942, a WiFi interface 2943, etc.). The computing device 2930 may include one or more output devices, such as the display 2936 (e.g., a screen, a display device, a monitor, a television, etc.), and may include one or more output device controllers 2937, such as a video processor. There may also be one or more user input devices 2927, such as a remote control, keyboard, mouse, touch screen, microphone, etc. The computing device 2930 may also include one or more network interfaces, such as a network interface 2939, which may be a wired interface, a wireless interface, or a combination of the two. The network interface 2939 may provide an interface for the computing device 2930 to communicate with a network 2940 (e.g., a RAN, or any other network). The network interface 2939 may include a modem (e.g., a cable modem), and the external network 2940 may include communication links, an external network, an in-home network, a provider's wireless, coaxial, fiber, or hybrid fiber/coaxial distribution system (e.g., a DOCSIS network), or any other desired network. Additionally, the computing device 2930 may include a location-detecting device, such as a global positioning system (GPS) microprocessor 2941, which may be configured to receive and process global positioning signals and determine, with possible assistance from an external server and antenna, a geographic position of the computing device 2930.

The example in FIG. 29 may be a hardware configuration, although the components shown may be implemented as software as well. Modifications may be made to add, remove, combine, divide, etc. components of the computing device 2930 as desired. Additionally, the components may be implemented using basic computing devices and components, and the same components (e.g., processor 2931, ROM storage 2932, display 2936, etc.) may be used to implement any of the other computing devices and components described herein. For example, the various components described herein may be implemented using computing devices having components such as a processor executing computer-executable instructions stored on a computer-readable medium, as shown in FIG. 29. Some or all of the entities described herein may be software based, and may co-exist in a common physical platform (e.g., a requesting entity may be a separate software process and program from a dependent entity, both of which may be executed as software on a common computing device).

Hereinafter, various characteristics will be highlighted in a set of numbered clauses or paragraphs. These characteristics are not to be interpreted as being limiting on the invention or inventive concept, but are provided merely as a highlighting of some characteristics as described herein, without suggesting a particular order of importance or relevancy of such characteristics.

Clause 1. A method, comprising: determining, by a computing device, a reference range for reconstructed samples of a picture.

Clause 2. The method of clause 1, further comprising: determining a quantization step based on an internal processing bit depth and an original bit depth obtained from a bitstream.

Clause 3. The method of clause 1 or clause 2, further comprising: based on the quantization step, dequantizing at least one of a quantized first range difference or a quantized second range difference, obtained from the bitstream, to determine at least one of a dequantized first range difference or a dequantized second range difference.

Clause 4. The method of any one of clauses 1 to 3, further comprising: determining a target range for the reconstructed samples of the picture based on: the at least one of the dequantized first range difference or the dequantized second range difference; and the reference range.

Clause 5. The method of any one of clauses 1 to 4, further comprising: clipping the reconstructed samples of the picture.

Clause 6. The method of any one of clauses 1 to 5, wherein the clipping the reconstructed samples of the picture comprises: clipping the reconstructed samples using an inverse quantization; or clipping the reconstructed samples using a post-processing filter.

Clause 7. The method of any one of clauses 1 to 6, wherein the original bit depth is obtained from a Sequence Parameter Set syntax element associated with the picture.

Clause 8. The method of any one of clauses 1 to 7, further comprising: obtaining, from the bitstream, at least one of: the internal processing bit depth; or a first indicator identifying the reference range.

Clause 9. The method of any one of clauses 1 to 8, wherein determining the reference range for the reconstructed samples of the picture comprises setting the reference range to a video range when the reference range is not signaled in the bitstream.

Clause 10. The method of any one of clauses 1 to 9, wherein the dequantizing the at least one of the quantized first range difference or the quantized second range difference comprises dequantizing the quantized first range difference and the quantized second range difference; and the determining the target range based on the reference range and the at least one of the dequantized first range difference or the dequantized second range difference comprises determining the target range based on the reference range and both the dequantized first range difference and the dequantized second range difference.

Clause 11. The method of any one of clauses 1 to 10 wherein each of the reconstructed samples comprises at least one of: a luma value of a pixel; or a chroma value of the pixel.

Clause 12. A computing device comprising: one or more processors; and memory storing instructions that, when executed by the one or more processors, cause the computing device to perform the method of any one of clauses 1 to 11.

Clause 13. A system comprising: a first computing device configured to perform the method of any one of clauses 1 to 11; and a second computing device configured send via the bitstream the original bit depth.

Clause 14. A computer-readable medium storing instructions that, when executed, cause performance of the method of any one of clauses 1 to 11.

Clause 15. A method, comprising: determining, by a computing device, a target range of values of original samples in a picture.

Clause 16. The method of claim 15, further comprising: determining a first range difference indicating a difference between a maximum of the target range and a maximum of a reference range for reconstructed samples of the picture, and a second range difference indicating a difference between a minimum of the target range and a minimum of the reference range.

Clause 17. The method of clause 15 or clause 16, further comprising: determining a quantization step based on an internal processing bit depth and an original bit depth.

Clause 18. The method of any one of clauses 15 to 17, further comprising: quantizing at least one of the first range difference or the second range difference based on the quantization step.

Clause 19. The method of any one of clauses 15 to 18, further comprising: sending via a bitstream: the original bit depth; and the at least one of the first range difference or the second range difference.

Clause 20. The method of any one of clauses 15 to 19, wherein the original bit depth is obtained from a Sequence Parameter Set syntax element associated with the picture.

Clause 21. The method of any one of clauses 15 to 20, wherein the determining the quantization step based on the internal processing bit depth and the original bit depth comprises determining the quantization step based on the internal processing bit depth, the original bit depth, and a target quantization step.

Clause 22. The method of any one of clauses 15 to 21, further comprising: setting the reference range to a first video range or a second video range different from the first video range.

Clause 23. The method of any one of clauses 15 to 22, further comprising: sending via the bitstream, at least one of: the internal processing bit depth; or a first indicator identifying the reference range.

Clause 24. The method of any one of clauses 15 to 23, wherein the at least one of the first range difference or the second range difference are included in a header of the picture in the bitstream.

Clause 25. The method of any one of clauses 15 to 24, wherein the quantizing comprises quantizing both the first range difference and the second range difference; and the sending via the bitstream comprises sending the original bit depth, the first range difference, and the second range difference.

Clause 26. The method of any one of clauses 15 to 25, wherein the original samples in the picture comprise samples obtained by applying a temporal filter to two or more pictures including a current picture.

Clause 27. A computing device comprising: one or more processors; and memory storing instructions that, when executed by the one or more processors, cause the computing device to perform the method of any one of clauses 15 to 26.

Clause 28. A system comprising: a first computing device configured to perform the method of any one of clauses 15 to 26; and a second computing device configured to obtain, from the bitstream, at least one of the first range difference or the second range difference.

Clause 29. A computer-readable medium storing instructions that, when executed, cause performance of the method of any one of clauses 15 to 26.

Clause 30. A method, comprising: determining, by a computing device, a target range of values of original samples in a picture.

Clause 31. A method, comprising: obtaining, by a computing device and from a bitstream, information associated with a picture, wherein the information includes at least an original bit depth.

Clause 32. The method of clause 31, further comprising: determining a reference range for reconstructed samples of the picture.

Clause 33. The method of clause 31 or clause 32, further comprising: determining a quantization step based on the original bit depth and an internal processing bit depth.

Clause 34. The method of any one of clauses 31 to 33, further comprising: determining a target range for the reconstructed samples based on the reference range and one or more first range differences associated with the picture.

Clause 35. The method of any one of clauses 31 to 34, further comprising: dequantizing the one or more first range differences obtained from the bitstream.

Clause 36. The method of any one of clauses 31 to 35, further comprising: reconstructing the picture by clipping the reconstructed samples based on the target range.

Clause 37. The method of any one of clauses 31 to 36, wherein the determining the quantization step based on the original bit depth and the internal processing bit depth comprises determining the quantization step based on the original bit depth, the internal processing bit depth, and a target quantization step.

Clause 38. The method of any one of clauses 31 to 37, further comprising: determining a second reference range for the picture; determining a third reference range based on the target range; determining a first range difference as a difference between the one or more first range differences associated and the reference range; determining a second range difference as a difference between the minimum of the target range and the minimum of the second reference range; determining a third range difference as a difference between the maximum of the target range and the maximum of the second reference range; using the third reference range as the second reference range based on: the second range difference or the third range difference being smaller than the first range difference; or the difference between the minimum of the target range and the minimum of the second reference range being smaller than the second range difference; and determining, based on an indicator, whether one or more of the first range difference or the second range difference are relative to the second reference range.

Clause 39. The method of any one of clauses 31 to 38, wherein the original bit depth is included in any one of: a sequence parameter set syntax element; a video usability information syntax element; a picture parameter set syntax element; or a supplementary enhancement information syntax element.

Clause 40. The method of any one of clauses 31 to 39, wherein the reconstructing the picture by clipping the reconstructed samples based on the target range comprises at least one of:
clipping the reconstructed samples in an inverse quantization or a post-processing filter; clipping the reconstructed samples in a weighted samples prediction for a geometric partitioning mode; clipping the reconstructed samples at an output of a sample-adaptive offset filter; or reconstructing the picture using the clipped reconstructed samples.

Clause 41. A computing device comprising: one or more processors; and memory storing instructions that, when executed by the one or more processors, cause the computing device to perform the method of any one of clauses 31 to 39.

Clause 42. A system comprising: a first computing device configured to perform the method of any one of clauses 31 to 39; and a second computing device configured to send via the bitstream the original bit depth.

Clause 43. A computer-readable medium storing instructions that, when executed, cause performance of the method of any one of clauses 31 to 39.

Clause 44. A method, comprising: determining, by a computing device, a reference range for reconstructed samples of a picture.

Clause 45. The method of clause 44, further comprising: determining a quantization step based on an internal processing bit depth and an original bit depth obtained from a bitstream.

Clause 46. The method of clause 44 or clause 45, further comprising: based on the quantization step, dequantizing at least one of a quantized first range difference or a quantized second range difference, obtained from the bitstream, to determine at least one of a dequantized first range difference or a dequantized second range difference.

Clause 47. The method of any one of clause 44 to 46, further comprising: determining a target range for the reconstructed samples of the picture based on: the at least one of the dequantized first range difference or the dequantized second range difference; and the reference range.

Clause 48. The method of any one of clauses 44 to 47, further comprising: clipping the reconstructed samples of the picture.

Clause 49. The method of any one of clauses 44 to 48, wherein the clipping the reconstructed samples of the picture comprises: clipping the reconstructed samples using an inverse quantization; or clipping the reconstructed samples using a post-processing filter.

Clause 50. The method of any one of clauses 44 to 49, wherein the original bit depth is obtained from a Sequence Parameter Set syntax element associated with the picture.

Clause 51. The method of any one of clauses 44 to 50, further comprising: obtaining, from the bitstream, at least one of: the internal processing bit depth; or a first indicator identifying the reference range.

Clause 52. The method of any one of clauses 44 to 51, wherein determining the reference range for the reconstructed samples of the picture comprises setting the reference range to a video range when the reference range is not signaled in the bitstream.

Clause 53. The method of any one of clauses 44 to 52, wherein: the dequantizing the at least one of the quantized first range difference or the quantized second range difference comprises dequantizing the quantized first range difference and the quantized second range difference; and the determining the target range based on the reference range and the at least one of the dequantized first range difference or the dequantized second range difference comprises determining the target range based on the reference range and both the dequantized first range difference and the dequantized second range difference.

Clause 54. The method of any one of clauses 44 to 53, wherein each of the reconstructed samples comprises at least one of: a luma value of a pixel; or a chroma value of the pixel.

Clause 55. The method of any one of clauses 44 to 54, wherein the original bit depth is included in any one of: a sequence parameter set syntax element; a video usability information syntax element; a picture parameter set syntax element; or a supplementary enhancement information syntax element.

Clause 56. The method of any one of clauses 44 to 55, wherein the determining the quantization step based on the internal processing bit depth and the original bit depth comprises determining the quantization step based on the internal processing bit depth, the original bit depth, and a target quantization step.

Clause 57. The method of any one of clauses 44 to 56, wherein reconstructing the picture by clipping the reconstructed samples based on the target range comprises at least one of: clipping the reconstructed samples in an inverse quantization or a post-processing filter; clipping the reconstructed samples in a weighted samples prediction for a geometric partitioning mode; clipping the reconstructed samples at an output of a sample-adaptive offset filter; or reconstructing the picture using clipped reconstructed samples.

Clause 58. The method of any one of clauses 44 to 57, wherein original samples in the picture comprise samples obtained by applying a temporal filter to two or more pictures including a current picture.

Clause 59. The method of any one of clauses 44 to 58, wherein the at least one of the quantized first range difference or the quantized second range difference are included in a header of the picture in the bitstream.

Clause 60. A computing device comprising: one or more processors; and memory storing instructions that, when executed by the one or more processors, cause the computing device to perform the method of any one of clauses 44 to 59.

Clause 61. A system comprising: a first computing device configured to perform the method of any one of clauses 44 to 59; and a second computing device configured to send via the bitstream the original bit depth.

Clause 62. A computer-readable medium storing instructions that, when executed, cause performance of the method of any one of clauses 44 to 59.

Clause 63. A method, comprising: determining, by a computing device, a reference range for reconstructed samples of a picture.

Clause 64. The method of clause 63, further comprising: determining a quantization step based on an internal processing bit depth and an original bit depth obtained from a bitstream.

Clause 65. The method of clause 63 or clause 64, further comprising: based on the quantization step, dequantizing at least one of a quantized first range difference or a quantized second range difference, obtained from the bitstream, to determine at least one of a dequantized first range difference or a dequantized second range difference.

Clause 66. The method of any one of clauses 63 to 65, further comprising: determining a target range for the reconstructed samples of the picture based on: the at least one of the dequantized first range difference or the dequantized second range difference; and the reference range.

Clause 67. The method of any one of clauses 63 to 66, further comprising: clipping the reconstructed samples of the picture.

Clause 68. The method of any one of clauses 63 to 67, further comprising: wherein the clipping the reconstructed samples of the picture comprises: clipping the reconstructed samples using an inverse quantization; or clipping the reconstructed samples using a post-processing filter.

Clause 69. The method of any one of clauses 63 to 68, wherein the original bit depth is obtained from a Sequence Parameter Set syntax element associated with the picture.

Clause 70. The method of any one of clauses 63 to 69, further comprising: obtaining, from the bitstream, at least one of: the internal processing bit depth; or a first indicator identifying the reference range.

Clause 71. The method of any one of clauses 63 to 70, wherein determining the reference range for the reconstructed samples of the picture comprises setting the reference range to a video range when the reference range is not signaled in the bitstream.

Clause 72. The method of any one of clauses 63 to 71, wherein: the dequantizing the at least one of the quantized first range difference or the quantized second range difference comprises dequantizing the quantized first range difference and the quantized second range difference; and the determining the target range based on the reference range and the at least one of the dequantized first range difference or the dequantized second range difference comprises determining the target range based on the reference range and both the dequantized first range difference and the dequantized second range difference.

Clause 73. The method of any one of clauses 63 to 72, wherein each of the reconstructed samples comprises at least one of: a luma value of a pixel; or a chroma value of the pixel.

Clause 74. A computing device comprising: one or more processors; and memory storing instructions that, when executed by the one or more processors, cause the computing device to perform the method of any one of clauses 63 to 73.

Clause 75. A system comprising: a first computing device configured to perform the method of any one of clauses 63 to 73; and a second computing device configured to send via the bitstream the original bit depth.

Clause 76. A computer-readable medium storing instructions that, when executed, cause performance of the method of any one of clauses 63 to 73.

Clause 77. A method, comprising: determining, by a computing device, a target range of values of original samples in a picture.

Clause 78. The method of clause 77, further comprising: determining a first range difference indicating a difference between a maximum of the target range and a maximum of a reference range for reconstructed samples of the picture, and a second range difference indicating a difference between a minimum of the target range and a minimum of the reference range.

Clause 79. The method of clause 77 or clause 78, further comprising: determining a quantization step based on an internal processing bit depth and an original bit depth.

Clause 80. The method of any one of clauses 77 to 79, further comprising: quantizing at least one of the first range difference or the second range difference based on the quantization step.

Clause 81. The method of any one of clauses 77 to 80, further comprising: sending via a bitstream: the original bit depth; and the at least one of the first range difference or the second range difference.

Clause 82. The method of any one of clauses 77 to 81, wherein the determining the quantization step based on the internal processing bit depth and the original bit depth comprises determining the quantization step based on the internal processing bit depth, the original bit depth, and a target quantization step.

Clause 83. The method of any one of clauses 77 to 82, further comprising: setting the reference range to a first video range or a second video range different from the first video range.

Clause 84. The method of any one of clauses 77 to 83, wherein the at least one of the first range difference or the second range difference are included in a header of the picture in the bitstream.

Clause 85. The method of any one of clauses 77 to 84, wherein: the quantizing comprises quantizing both the first range difference and the second range difference; and the sending via the bitstream comprises sending the original bit depth, the first range difference, and the second range difference.

Clause 86. The method of any one of clauses 77 to 85, wherein the original samples in the picture comprise samples obtained by applying a temporal filter to two or more pictures including a current picture.

Clause 87. A computing device comprising: one or more processors; and memory storing instructions that, when executed by the one or more processors, cause the computing device to perform: the method of any one of clauses 77 to 86.

Clause 88. A system comprising: a first computing device configured to perform the method of any one of claims 77 to 86; and a second computing device configured to send via the bitstream the original bit depth.

Clause 89. A computer-readable medium storing instructions that, when executed, cause performance of the method of any one of clauses 77 to 86.

Clause 90. A method, comprising: obtaining, by a computing device and from a bitstream, information associated with a picture, wherein the information includes at least an original bit depth.

Clause 91. The method of clause 90, further comprising: determining a reference range for reconstructed samples of the picture.

Clause 92. The method of clause 90 or clause 91, further comprising: determining a quantization step based on the original bit depth and an internal processing bit depth.

Clause 93. The method of any one of clauses 90 to 92, further comprising: determining a target range for the reconstructed samples based on the reference range and one or more first range differences associated with the picture.

Clause 94. The method of any one of clauses 90 to 93, further comprising: dequantizing the one or more first range differences obtained from the bitstream.

Clause 95. The method of any one of clauses 90 to 94, further comprising: reconstructing the picture by clipping the reconstructed samples based on the target range.

Clause 96. The method of any one of clauses 90 to 95, further comprising: determining a second reference range for the picture; determining a third reference range based on the target range; determining a first range difference as a difference between the one or more first range differences associated and the reference range; determining a second range difference as a difference between the minimum of the target range and the minimum of the second reference range; determining a third range difference as a difference between the maximum of the target range and the maximum of the second reference range; using the third reference range as the second reference range based on: the second range difference or the third range difference being smaller than the first range difference; or the difference between the minimum of the target range and the minimum of the second reference range being smaller than the second range difference; and determining, based on an indicator, whether one or more of the first range difference or the second range difference are relative to the second reference range.

Clause 97. The method of any one of clauses 90 to 96, wherein the original bit depth is included in any one of: a sequence parameter set syntax element; a video usability information syntax element; a picture parameter set syntax element; or a supplementary enhancement information syntax element.

Clause 98. The method of any one of clauses 90 to 97, wherein the reconstructing the picture by clipping the reconstructed samples based on the target range comprises at least one of: clipping the reconstructed samples in an

**EP 4 770 087 A1**

inverse quantization or a post-processing filter; clipping the reconstructed samples in a weighted samples prediction for a geometric partitioning mode; clipping the reconstructed samples at an output of a sample-adaptive offset filter; or reconstructing the picture using the clipped reconstructed samples.

Clause 99. A computing device comprising: one or more processors; and memory storing instructions that, when executed by the one or more processors, cause the computing device to perform: the method of any one of clauses 90 to 98.

Clause 100. A system comprising: a first computing device configured to perform the method of any one of clauses 90 to 98.

Clause 101. A computer-readable medium storing instructions that, when executed, cause performance of the method of any one of clauses 90 to 98.

Clause 102. A method, comprising: setting a reference range for reconstructed samples of a picture.

Clause 103. The method of clause 102, further comprising: determining a quantization step based at least on an internal processing bit depth and an original bit depth obtained from a bitstream.

Clause 104. The method of clause 102 or clause 103, further comprising: dequantizing, in accordance with the determined quantization step, at least one of a quantized first range difference and a quantized second range difference from the bitstream to obtain a first range difference and a second range reference.

Clause 105. The method of any one of clauses 102 to 104, further comprising: deriving, using the at least one of the first range difference and the second range difference and based on the reference range, a target range.

Clause 106. The method of any one of clauses 102 to 105, further comprising: clipping reconstructed samples of the picture in accordance with the target range to reconstruct the picture.

Clause 107. The method of any one of clauses 102 to 106, wherein the original bit depth is obtained from a Sequence Parameter Set (SPS) syntax element associated with the picture.

Clause 108. The method of any one of clauses 102 to 107, wherein the determining the quantization step based at least on the internal processing bit depth and the original bit depth comprises determining the quantization step based on the internal processing bit depth, the original bit depth, and a target quantization step.

Clause 109. The method of any one of clauses 102 to 108, wherein the target quantization step is determined in accordance with a type of the current slice of the picture.

Clause 110. The method of any one of clauses 102 to 109, wherein the quantization step is determined as the maximum of the target quantization step and a value based on a difference between the internal processing bit depth and the original bit depth.

Clause 111. The method of any one of clauses 102 to 110, wherein the internal processing bit depth is obtained from the bitstream.

Clause 112. The method of any one of clauses 102 to 111, wherein the internal processing bit depth is obtained from an SPS syntax element in the bitstream.

Clause 113. The method of any one of clauses 102 to 112, further comprising: obtaining a first indicator in the bitstream in association with the picture, wherein the first indicator identifies the reference range.

Clause 114. The method of any one of clauses 102 to 113, wherein the first indicator is included in the video usability information (VUI) syntax element in the bitstream.

Clause 115. The method of any one of clauses 102 to 114, wherein the setting a reference range for reconstructed samples of the picture comprises setting the reference range to a first video range or a second video range in accordance with the first indicator.

Clause 116. The method of any one of clauses 102 to 115, wherein the setting a reference range for reconstructed samples of the picture comprises setting the reference range to a second video range when the reference range is not signaled in the bitstream.

Clause 117. The method of any one of clauses 102 to 116, wherein one or more of the quantized first range difference and the quantized second range difference are included in a header of the picture in the bitstream.

Clause 118. The method of any one of clauses 102 to 117, wherein the dequantizing, in accordance with the determined quantization step, at least one of the quantized first range difference or the quantized second range difference comprises dequantizing the quantized first range difference and the dequantized second range difference, and wherein the deriving, using the at least one of the first range difference and the second range difference and based on the reference range, the target range comprises deriving, using the first range difference and the second range difference and based on the reference range, the target range.

Clause 119. The method of any one of clauses 102 to 118, wherein each of the reconstructed samples comprises a luma value of a pixel.

Clause 120. The method of any one of clauses 102 to 119, wherein each of the reconstructed samples comprises a chroma value of a pixel.

Clause 121. The method of any one of clauses 102 to 120, wherein the clipping the reconstructed samples in the picture in accordance with the derived target range comprises applying the clipping in an inverse quantization and/or a post-processing filter.

Clause 122. The method of any one of clauses 102 to 121, wherein the clipping the reconstructed samples in the picture in accordance with the derived target range comprises applying the clipping to the reconstructed samples in a weighted samples prediction for a geometric partitioning mode.

Clause 123. The method of any one of clauses 102 to 122, further comprising: wherein the clipping the reconstructed samples in the picture in accordance with the derived target range comprises applying the clipping to reconstructed samples at an output of a sample-adaptive offset (SAO) filter.

Clause 124. A computing device comprising: one or more processors; and memory storing instructions that, when executed by the one or more processors, cause the computing device to perform the method of any one of clauses 102 to 122.

Clause 125. A system comprising: a first computing device configured to perform the method of any one of clauses 102 to 122; and a second computing device configured send via the bitstream the original bit depth.

Clause 126. A computer-readable medium storing instructions that, when executed, cause performance of the method of any one of clauses 102 to 122.

Clause 127. A method, comprising: determining a target range of actual values of original samples in a picture.

Clause 128. The method of clause 127, further comprising: determining a first range difference corresponding to a difference between the maximums of the target range and a reference range for reconstructed samples of the picture, and a second range difference corresponding to a difference between the minimums of the target range and the reference range.

Clause 129. The method of clause 127 or clause 128, further comprising: determining a quantization step based at least on an internal processing bit depth and an original bit depth.

Clause 130. The method of any one of clauses 127 to 129, further comprising: quantizing, in accordance with the determined quantization step, at least one of the first range difference or the second range difference.

Clause 131. The method of any one of clauses 127 to 130, further comprising: signaling, in a bitstream and in association with the picture, the original bit depth, and the at least one of the quantized first range difference or the quantized second range difference.

Clause 132. The method of any one of clauses 127 to 131, wherein the original bit depth is included in a Sequence Parameter Set (SPS) syntax element in association with the picture.

Clause 133. The method of any one of clauses 127 to 132, wherein the determining the quantization step based at least on the internal processing bit depth and the original bit depth comprises determining the quantization step based on the internal processing bit depth, the original bit depth, and a target quantization step.

Clause 134. The method of any one of clauses 127 to 133, wherein the target quantization step is determined in accordance with a type of the current slice of the picture.

Clause 135. The method of any one of clauses 127 to 134, wherein the quantization step is determined as the maximum of the target quantization step and a value based on a difference between the internal processing bit depth and the original bit depth.

Clause 136. The method of any one of clauses 127 to 135, wherein the reference range to a first video range or a second video range different from the first video range.

Clause 137. The method of any one of clauses 127 to 136, wherein a range of an internal processing bit depth is larger than the first video range, and the first video range is larger than the second video range.

Clause 138. The method of any one of clauses 127 to 137, further comprising: signaling the internal processing bit depth in the bitstream in association with the picture.

Clause 139. The method of any one of clauses 127 to 138, wherein the internal processing bit depth is included in a Sequence Parameter Set (SPS) syntax element in association with the picture.

Clause 140. The method of any one of clauses 127 to 139, further comprising: signaling a first indicator in the bitstream in association with the picture, wherein the first indicator identifies the reference range.

Clause 141. The method of any one of clauses 127 to 140, wherein the first indicator is included in the video usability information (VUI) syntax element in the bitstream.

Clause 142. The method of any one of clauses 127 to 141, wherein one or more of the quantized first range difference and the quantized second range difference are included in a header of the picture in the bitstream.

Clause 143. The method of any one of clauses 127 to 142, further comprising: wherein the quantizing, in accordance with the determined quantization step, at least one of the first range difference or the second range difference comprises quantizing the first range difference and the second range difference, and wherein the signaling, in the bitstream and in association with the picture, the original bit depth and the at least one of the quantized first range difference or the quantized second range difference comprises signaling, in the bitstream and in association with the picture, the original bit depth, the quantized first range difference, and the quantized second range difference.

Clause 144. The method of any one of clauses 127 to 143, wherein the quantizing, in accordance with the determined quantization step, at least one of the first range difference or the second range difference comprises: when a third range difference calculated as the difference between the maximums of the target range and a second reference range is smaller than the first range difference or the difference between the minimums of the target range and the second reference range is smaller than the second range difference, before the quantizing, using the third range difference as the second range difference; and wherein the signaling comprises further signaling a second indicator indicating one or more of the quantized first range difference or the quantized second range difference is in relation to the second reference range.

Clause 145. The method of any one of clauses 127 to 144, wherein each of the reconstructed samples comprises a luma value of a pixel.

Clause 146. The method of any one of clauses 127 to 145, wherein each of the reconstructed samples comprises a chroma value of a pixel.

Clause 147. The method of any one of clauses 127 to 146, wherein the original samples of the picture comprise samples obtained by applying a temporal filter to two or more pictures including a current picture.

Clause 148. The method of any one of clauses 127 to 147, wherein the original bit depth is included in any of a sequence parameter set (SPS) syntax element, video usability information (VUI) syntax element, picture parameter set (PPS) syntax element, or supplementary enhancement information (SEI) syntax element in association with the picture.

Clause 149. A computing device comprising: one or more processors; and memory storing instructions that, when executed by the one or more processors, cause the computing device to perform the method of any one of clauses 127 to 148.

Clause 150. A system comprising: a first computing device configured to perform the method of any one of clauses 127 to 148; and a second computing device configured to obtain, from a bitstream, at least one of a first range difference or a second range difference and reconstruct samples of the picture based on the obtained at least one of the first range difference or the second range difference.

Clause 151. A computer-readable medium storing instructions that, when executed, cause performance of the method of any one of clauses 127 to 148.

A computing device may perform a method comprising multiple operations. The computing device may determine a reference range for reconstructed samples of a picture. The computing device may determine a quantization step based on an internal processing bit depth and an original bit depth obtained from a bitstream. Based on the quantization step, the computing device may dequantize at least one of a quantized first range difference or a quantized second range difference, obtained from the bitstream, to determine at least one of a dequantized first range difference or a dequantized second range difference. The computing device may determine a target range for the reconstructed samples of the picture based on: the at least one of the dequantized first range difference or the dequantized second range difference; and the reference range. The computing device may clip the reconstructed samples of the picture. Clipping the reconstructed samples of the picture may be done by using an inverse quantization or using a post-processing filter. The original bit depth may be obtained from a Sequence Parameter Set syntax element associated with the picture. The computing device may obtain, from the bitstream, at least one of: the internal processing bit depth; or a first indicator identifying the reference range. The computing device may determine the reference range for the reconstructed samples of the picture comprises setting the reference range to a video range when the reference range is not signaled in the bitstream. Dequantizing the at least one of the quantized first range difference or the quantized second range difference may comprise dequantizing the quantized first range difference and the quantized second range difference; and the determining the target range based on the reference range and the at least one of the dequantized first range difference or the dequantized second range difference comprises determining the target range based on the reference range and both the dequantized first range difference and the dequantized second range difference. Each of the reconstructed samples may comprise at least one of: a luma value of a pixel; or a chroma value of the pixel. The computing device may comprise one or more processors; and memory storing instructions that, when executed by the one or more processors, cause the computing device to perform the described method, additional operations and/or include the additional elements. A system comprising: a first computing device configured to perform the described method, additional operations and/or include the additional elements; and a second computing device configured to send via the bitstream the original bit depth. A computer-readable medium storing instructions that, when executed, cause performance of the described method, additional operations and/or include the additional elements.

A computing device may perform a method comprising multiple operations. The computing device may determine a target range of values of original samples in a picture. The computing device may determine a first range difference indicating a difference between a maximum of the target range and a maximum of a reference range for reconstructed samples of the picture, and a second range difference indicating a difference between a minimum of the target range and a minimum of the reference range. The computing device may determine a quantization step based on an internal processing bit depth and an original bit depth. The computing device may quantize at least one of the first range difference or the second range difference based on the quantization step. The computing device may send via a bitstream: the original bit depth; and the at least one of the first range difference or the second range difference. The original bit depth may be obtained from a Sequence Parameter Set syntax element associated with the picture. The computing device may determine the quantization step based on the internal processing bit depth and the original bit depth comprises determining the quantization step based on the internal processing bit depth, the original bit depth, and a target quantization step. The computing device may set the reference range to a first video range or a second video range different from the first video range. The computing device may send via the bitstream, at least one of: the internal processing bit depth; or a first indicator identifying the reference range. The at least one of the first range difference or the second range difference may be included in a header of the picture in the bitstream. The computing device may quantize both the first range difference and the second range difference and send via the bitstream the original bit depth, the first range difference, and the second range difference. The original samples in the picture may be obtained by applying a temporal filter to two or more pictures including a current picture. The computing device may comprise one or more processors; and memory storing instructions that, when executed by the one or more processors, cause the computing device to perform the described method, additional operations and/or include the additional elements. A system comprising: a first computing device configured to perform the described method, additional operations and/or include the additional elements; and a second computing device configured to obtain, from the bitstream, at least one of the first range difference or the second range difference. A computer-readable medium storing instructions that, when executed, cause performance of the described method, additional operations and/or include the additional elements.

A computing device may perform a method comprising multiple operations. The computing device may determine a target range of values of original samples in a picture. The computing device may obtain, from a bitstream, information associated with a picture, wherein the information may include at least an original bit depth. The computing device may determine a reference range for reconstructed samples of the picture. The computing device may determine a quantization step based on the original bit depth and an internal processing bit depth. The computing device may determine a target range for the reconstructed samples based on the reference range and one or more first range differences associated with the picture. The computing device may dequantize the one or more first range differences obtained from the bitstream. The computing device may reconstruct the picture by clipping the reconstructed samples based on the target range. Determining the quantization step based on the original bit depth and the internal processing bit depth may comprise determining the quantization step based on the original bit depth, the internal processing bit depth, and a target quantization step. The computing device may determine a second reference range for the picture; determining a third reference range based on the target range; determining a first range difference as a difference between the one or more first range differences associated and the reference range; determining a second range difference as a difference between the minimum of the target range and the minimum of the second reference range; determining a third range difference as a difference between the maximum of the target range and the maximum of the second reference range; using the third reference range as the second reference range based on: the second range difference or the third range difference being smaller than the first range difference; or the difference between the minimum of the target range and the minimum of the second reference range being smaller than the second range difference; and determining, based on an indicator, whether one or more of the first range difference or the second range difference are relative to the second reference range. The original bit depth may be included in any one of: a sequence parameter set syntax element; a video usability information syntax element; a picture parameter set syntax element; or a supplementary enhancement information syntax element. The reconstructing the picture by clipping the reconstructed samples based on the target range comprises at least one of: clipping the reconstructed samples in an inverse quantization or a post-processing filter; clipping the reconstructed samples in a weighted samples prediction for a geometric partitioning mode; clipping the reconstructed samples at an output of a sample-adaptive offset filter; or reconstructing the picture using the clipped reconstructed samples. The computing device may comprise one or more processors; and memory storing instructions that, when executed by the one or more processors, cause the computing device to perform the described method, additional operations and/or include the additional elements. A system comprising: a first computing device configured to perform the described method, additional operations and/or include the additional elements; and a second computing device configured to send via the bitstream the original bit depth. A computer-readable medium storing instructions that, when executed, cause performance of the described method, additional operations and/or include the additional elements.

A computing device may perform a method comprising multiple operations. The computing device may set a reference range for reconstructed samples of a picture. The computing device may determine a quantization step based at least on an internal processing bit depth and an original bit depth obtained from a bitstream. The computing device may dequantize, in accordance with the determined quantization step, at least one of a quantized first range difference and a quantized second range difference from the bitstream to obtain a first range difference and a second range reference. The computing device may derive, using the at least one of the first range difference and the second range difference and based on the reference range, a target range. The computing device may clip reconstructed samples of the picture in accordance with the target range to reconstruct the picture. The original bit depth may be obtained from a Sequence Parameter Set (SPS) syntax element associated with the picture. Determining the quantization step based at least on the internal processing bit depth and the original bit depth may comprise determining the quantization step based on the internal processing bit depth, the original bit depth, and a target quantization step. The target quantization step may be determined in accordance with a type of the current slice of the picture. The quantization step may be determined as the maximum of the target quantization step and a value based on a difference between the internal processing bit depth and the original bit depth. The internal processing bit depth may be obtained from the bitstream. The internal processing bit depth is obtained from an SPS syntax element in the bitstream. The computing device may obtain a first indicator in the bitstream in association with the picture, wherein the first indicator identifies the reference range. The first indicator may be included in the video usability information (VUI) syntax element in the bitstream. Setting a reference range for reconstructed samples of the picture may comprise setting the reference range to a first video range or a second video range in accordance with the first indicator. The setting a reference range for reconstructed samples of the picture comprises setting the reference range to a second video range when the reference range may not be signaled in the bitstream. One or more of the quantized first range difference and the quantized second range difference may be included in a header of the picture in the bitstream. The dequantizing, in accordance with the determined quantization step, at least one of the quantized first range difference or the quantized second range difference comprises dequantizing the quantized first range difference and the dequantized second range difference, and wherein the deriving, using the at least one of the first range difference and the second range difference and based on the reference range, the target range may comprise deriving, using the first range difference and the second range difference and based on the reference range, the target range. Each of the reconstructed samples may comprise a luma value of a pixel. Each of the reconstructed samples may comprise a chroma value of a pixel. Clipping the reconstructed samples in the picture in accordance with the derived target range may comprise applying the clipping in an inverse quantization and/or a post-processing filter. Clipping the reconstructed samples in the picture in accordance with the derived target range may comprise applying the clipping to the reconstructed samples in a weighted samples prediction for a geometric partitioning mode. Clipping the reconstructed samples in the picture in accordance with the derived target range may comprise applying the clipping to reconstructed samples at an output of a sample-adaptive offset (SAO) filter. The computing device may comprise one or more processors; and memory storing instructions that, when executed by the one or more processors, cause the computing device to perform the described method, additional operations and/or include the additional elements. A system comprising: a first computing device configured to perform the described method, additional operations and/or include the additional elements; and a second computing device configured to send via the bitstream the original bit depth. A computer-readable medium storing instructions that, when executed, cause performance of the described method, additional operations and/or include the additional elements.

A computing device may perform a method comprising multiple operations. The computing device may determine a target range of actual values of original samples in a picture. The computing device may determine a first range difference corresponding to a difference between the maximums of the target range and a reference range for reconstructed samples of the picture, and a second range difference corresponding to a difference between the minimums of the target range and the reference range. The computing device may determine a quantization step based at least on an internal processing bit depth and an original bit depth. The computing device may quantize, in accordance with the determined quantization step, at least one of the first range difference or the second range difference. The computing device may signal, in a bitstream and in association with the picture, the original bit depth, and the at least one of the quantized first range difference or the quantized second range difference. The original bit depth may be included in a Sequence Parameter Set (SPS) syntax element in association with the picture. Determining the quantization step based at least on the internal processing bit depth and the original bit depth may comprise determining the quantization step based on the internal processing bit depth, the original bit depth, and a target quantization step. The target quantization step may be determined in accordance with a type of the current slice of the picture. The quantization step may be determined as the maximum of the target quantization step and a value based on a difference between the internal processing bit depth and the original bit depth. The reference range to a first video range or a second video range different from the first video range. A range of an internal processing bit depth is larger than the first video range, and the first video range is larger than the second video range. The computing device may signal the internal processing bit depth in the bitstream in association with the picture. The internal processing bit depth is included in a Sequence Parameter Set (SPS) syntax element in association with the picture. The computing device may signal a first indicator in the bitstream in association with the picture, wherein the first indicator identifies the reference range. The first indicator is included in the video usability information (VUI) syntax element in the bitstream. The one or more of the quantized first range difference and the quantized second range difference may be included in a header of the picture in the bitstream. The quantizing, in accordance with the determined quantization step, at least one of the first range difference or the second range difference comprises quantizing the first range difference and the second range difference, and wherein the signaling, in the bitstream and in association with the picture, the original **bit** depth and the at least one of the quantized first range difference or the quantized second range difference may comprise signaling, in the bitstream and in association with the picture, the original bit depth, the quantized first range difference, and the quantized second range difference. Quantizing, in accordance with the determined quantization step, at least one of the first range difference or the second range difference may comprise when a third range difference calculated as the difference between the maximums of the target range and a second reference range is smaller than the first range difference or the difference between the minimums of the target range and the second reference range is smaller than the second range difference, before the quantizing, using the third range difference as the second range difference; and wherein the signaling comprises further signaling a second indicator indicating one or more of the quantized first range difference or the quantized second range difference is in relation to the second reference range. Each of the reconstructed samples may comprise a luma value of a pixel. Each of the reconstructed samples may comprise a chroma value of a pixel. The original samples of the picture may comprise samples obtained by applying a temporal filter to two or more pictures including a current picture. The original bit depth may be included in any of a sequence parameter set (SPS) syntax element, video usability information (VUI) syntax element, picture parameter set (PPS) syntax element, or supplementary enhancement information (SEI) syntax element in association with the picture. The computing device may comprise one or more processors; and memory storing instructions that, when executed by the one or more processors, cause the computing device to perform the described method, additional operations and/or include the additional elements. A system comprising: a first computing device configured to perform the described method, additional operations and/or include the additional elements; and a second computing device configured to obtain, from the bitstream, at least one of the first range difference or the second range difference. A computer-readable medium storing instructions that, when executed, cause performance of the described method, additional operations and/or include the additional elements.

One or more examples herein may be described as a process which may be depicted as a flowchart, a flow diagram, a data flow diagram, a structure diagram, and/or a block diagram. Although a flowchart may describe operations as a sequential process, one or more of the operations may be performed in parallel or concurrently. The order of the operations shown may be re-arranged. A process may be terminated when its operations are completed, but could have additional steps not shown in a figure. A process may correspond to a method, a function, a procedure, a subroutine, a subprogram, etc. If a process corresponds to a function, its termination may correspond to a return of the function to the calling function or the main function.

Operations described herein may be implemented by hardware, software, firmware, middleware, microcode, hardware description languages, or any combination thereof. When implemented in software, firmware, middleware or microcode, the program code or code segments to perform the necessary tasks (e.g., a computer-program product) may be stored in a computer-readable or machine-readable medium. A processor(s) may perform the necessary tasks. Features of the disclosure may be implemented in hardware using, for example, hardware components such as application-specific integrated circuits (ASICs) and gate arrays. Implementation of a hardware state machine to perform the functions described herein will also be apparent to persons skilled in the art.

One or more features described herein may be implemented in a computer-usable data and/or computer-executable instructions, such as in one or more program modules, executed by one or more computers or other devices. Generally, program modules include routines, programs, objects, components, data structures, etc. that perform particular tasks or implement particular abstract data types when executed by a processor in a computer or other data processing device. The computer executable instructions may be stored on one or more computer readable media such as a hard disk, optical disk, removable storage media, solid state memory, RAM, etc. The functionality of the program modules may be combined or distributed as desired. The functionality may be implemented in whole or in part in firmware or hardware equivalents such as integrated circuits, field programmable gate arrays (FPGA), and the like. Particular data structures may be used to more effectively implement one or more features described herein, and such data structures are contemplated within the scope of computer executable instructions and computer-usable data described herein. Computer-readable medium may comprise, but is not limited to, portable or non-portable storage devices, optical storage devices, and various other mediums capable of storing, containing, or carrying instruction(s) and/or data. A computer-readable medium may include a non-transitory medium in which data can be stored and that does not include carrier waves and/or transitory electronic signals propagating wirelessly or over wired connections. Examples of a non-transitory medium may include, but are not limited to, a magnetic disk or tape, optical storage media such as compact disk (CD) or digital versatile disk (DVD), flash memory, memory or memory devices. A computer-readable medium may have stored thereon code and/or machine-executable instructions that may represent a procedure, a function, a subprogram, a program, a routine, a subroutine, a module, a software package, a class, or any combination of instructions, data structures, or program statements. A code segment may be coupled to another code segment or a hardware circuit by passing and/or receiving information, data, arguments, parameters, or memory contents. Information, arguments, parameters, data, etc. may be passed, forwarded, or transmitted via any suitable means including memory sharing, message passing, token passing, network transmission, or the like.

A non-transitory tangible computer readable media may comprise instructions executable by one or more processors configured to cause operations described herein. An article of manufacture may comprise a non-transitory tangible computer readable machine-accessible medium having instructions encoded thereon for enabling programmable hardware to cause a device (e.g., an encoder, a decoder, a transmitter, a receiver, and the like) to allow operations described herein. The device, or one or more devices such as in a system, may include one or more processors, memory, interfaces, and/or the like.

Communications described herein may be determined, generated, sent, and/or received using any quantity of messages, information elements, fields, parameters, values, indications, information, bits, and/or the like. While one or more examples may be described herein using any of the terms/phrases message, information element, field, parameter, value, indication, information, bit(s), and/or the like, one skilled in the art understands that such communications may be performed using any one or more of these terms, including other such terms. For example, one or more parameters, fields, and/or information elements (IEs), may comprise one or more information objects, values, and/or any other information. An information object may comprise one or more other objects. At least some (or all) parameters, fields, IEs, and/or the like may be used and can be interchangeable depending on the context. If a meaning or definition is given, such meaning or definition controls.

One or more elements in examples described herein may be implemented as modules. A module may be an element that performs a defined function and/or that has a defined interface to other elements. The modules may be implemented in hardware, software in combination with hardware, firmware, wetware (e.g., hardware with a biological element) or a combination thereof, all of which may be behaviorally equivalent. For example, modules may be implemented as a software routine written in a computer language configured to be executed by a hardware machine (such as C, C++, Fortran, Java, Basic, Matlab or the like) or a modeling/simulation program such as Simulink, Stateflow, GNU Octave, or LabVIEWMathScript. Additionally or alternatively, it may be possible to implement modules using physical hardware that incorporates discrete or programmable analog, digital and/or quantum hardware. Examples of programmable hardware may comprise: computers, microcontrollers, microprocessors, application-specific integrated circuits (ASICs); field programmable gate arrays (FPGAs); and/or complex programmable logic devices (CPLDs). Computers, microcontrollers and/or microprocessors may be programmed using languages such as assembly, C, C++ or the like. FPGAs, ASICs and CPLDs are often programmed using hardware description languages (HDL), such as VHSIC hardware description language (VHDL) or Verilog, which may configure connections between internal hardware modules with lesser functionality on a programmable device. The above-mentioned technologies may be used in combination to achieve the result of a functional module.

One or more of the operations described herein may be conditional. For example, one or more operations may be performed if certain criteria are met, such as in computing device, a communication device, an encoder, a decoder, a network, a combination of the above, and/or the like. Example criteria may be based on one or more conditions such as device configurations, traffic load, initial system set up, packet sizes, traffic characteristics, a combination of the above, and/or the like. If the one or more criteria are met, various examples may be used. It may be possible to implement any portion of the examples described herein in any order and based on any condition.

Although examples are described above, features and/or steps of those examples may be combined, divided, omitted, rearranged, revised, and/or augmented in any desired manner. Various alterations, modifications, and improvements will readily occur to those skilled in the art. Such alterations, modifications, and improvements are intended to be part of this description, though not expressly stated herein, and are intended to be within the spirit and scope of the descriptions herein. Accordingly, the foregoing description is by way of example only, and is not limiting.

**Claims**

1. A method, comprising:

   determining, by a computing device, a reference range for reconstructed samples of a picture;
   determining a quantization step based on an internal processing bit depth and an original bit depth obtained from a bitstream;
   based on the quantization step, dequantizing at least one of a quantized first range difference or a quantized second range difference, obtained from the bitstream, to determine at least one of a dequantized first range difference or a dequantized second range difference;
   determining a target range for the reconstructed samples of the picture based on:

   the at least one of the dequantized first range difference or the dequantized second range difference; and
   the reference range; and

   clipping the reconstructed samples of the picture.

2. The method of claim 1 wherein the clipping the reconstructed samples of the picture comprises:

   clipping the reconstructed samples using an inverse quantization; or
   clipping the reconstructed samples using a post-processing filter.

3. The method according to claim 1 or claim 2, wherein the original bit depth is obtained from a Sequence Parameter Set syntax element associated with the picture.

4. The method according to any one of claims 1 to 3, further comprising obtaining, from the bitstream, at least one of:

the internal processing bit depth; or
a first indicator identifying the reference range.

5. The method according to any one of claims 1 to 4, wherein determining the reference range for the reconstructed samples of the picture comprises setting the reference range to a video range when the reference range is not signaled in the bitstream.

6. The method according to any one of claims 1 to 5, wherein:

the dequantizing the at least one of the quantized first range difference or the quantized second range difference comprises dequantizing the quantized first range difference and the quantized second range difference; and
the determining the target range based on the reference range and the at least one of the dequantized first range difference or the dequantized second range difference comprises determining the target range based on the reference range and both the dequantized first range difference and the dequantized second range difference.

7. The method according to any one of claims 1 to 6, wherein each of the reconstructed samples comprises at least one of:

a luma value of a pixel; or
a chroma value of the pixel.

8. The method according to any one of claims 1 to 7, wherein the original bit depth is included in any one of:

a sequence parameter set syntax element;
a video usability information syntax element;
a picture parameter set syntax element; or
a supplementary enhancement information syntax element.

9. The method according to any one of claims 1 to 8, wherein the determining the quantization step based on the internal processing bit depth and the original bit depth comprises determining the quantization step based on the internal processing bit depth, the original bit depth, and a target quantization step.

10. The method according to any one of claims 1 to 9, wherein reconstructing the picture by clipping the reconstructed samples based on the target range comprises at least one of:

clipping the reconstructed samples in an inverse quantization or a post-processing filter;
clipping the reconstructed samples in a weighted samples prediction for a geometric partitioning mode;
clipping the reconstructed samples at an output of a sample-adaptive offset filter; or
reconstructing the picture using clipped reconstructed samples.

11. The method according to any one of claims 1 to 10, wherein original samples in the picture comprise samples obtained by applying a temporal filter to two or more pictures including a current picture.

12. The method according to any one of claims 1 to 11, wherein the at least one of the quantized first range difference or the quantized second range difference are included in a header of the picture in the bitstream.

13. A computing device comprising:

one or more processors; and
memory storing instructions that, when executed by the one or more processors, cause the computing device to perform the method of any one of claims 1 to 12.

14. A system comprising:

a first computing device configured to perform the method of any one of claims 1 to 12; and
a second computing device configured to send via the bitstream the original bit depth.

**15.** A computer-readable medium storing instructions that, when executed, cause performance of the method of any one of claims 1 to 12.

FIG. 1

FIG. 2

FIG. 3

## FIG. 4

## FIG. 5

Vertical Binary Tree
Partition
*602*

Horizontal Binary Tree
Partition
*604*

Vertical Ternary Tree
Partition
*606*

Horizontal Ternary Tree
Partition
*608*

*FIG. 6*

EP 4 770 087 A1

FIG. 7A

FIG. 7B

PARTITION_SPLIT

PARTITION_VERT_4

PARTITION_HORZ_4

PARTITION_HORZ_B

PARTITION_VERT_A

PARTITION_HORZ_A

PARTITION_VERT_B

PARTITION_HORZ

PARTITION_VERT

FIG. 8

Partitioned CTB
700

Reference Samples
902

Current Block
904

FIG. 9

0: Planar
1: DC

FIG. 10A

0: Planar
1: DC

FIG. 10B

*FIG. 10C*

Reference Samples
*902*

Current Block
*904*

*FIG. 11*

FIG. 12

*FIG. 13A*

*FIG. 13B*

FIG. 14

*FIG. 15A*

*FIG. 15B*

The quick brown fox jumps over the lazy dog. The quick brown fox jumps over the lazy dog. The quick brown fox jumps over the lazy dog.

FIG. 16

Current Picture 1702

Region 1706B

Region 1706A

Current CTU 1704

Current Template 1708

Current Block 1700

R3

BV 1730

R1

Region 1706C

Reference Block 1710

Reference Template 1712

R2

R4

Candidate Reference Blocks 1714

Region 1706D

TMP Search Region 1706

x+

y+

*FIG. 17*

Maximum Internal
Bit Depth 1800

Maximum Full
Video Range
1802

Maximum Narrow
Video range
1804

Minimum Narrow
Video range
1805

Minimum Full
Video Range
1803

Video ranges
1806

Minimum Internal
Bit Depth 1801

Video bit depth: N=10
Internal Bit depth: M=16

Internal Bit Depth Range:  [32,767, -32,768]

Full Video Range:  Y,Cb,Cr ∈ [1023, 0]

Narrow Video Range:

Y  ∈  [940, 64]
Cb ∈  [960, 64]
Cr  ∈  [960, 64]

*FIG. 18*

EP 4 770 087 A1

EP 4 770 087 A1

Maximum Internal
Bit Depth 1800

Maximum Full
Video Range
1802

Maximum
ReferenceRange
1900

Minimum
ReferenceRange
1901

Minimum Full
Video Range
1803

Minimum Internal
Bit Depth 1801

Real PictureMax Luma
1902

Delta Maximum
1904

Delta Minimum
1905

Real PictureMin Luma
1903

ECM (N =10):

Full Video Range:   Y,Cb,Cr ∈ [1023, 0]

Narrow Video Range:   Y ∈ [940, 64]
Cb ∈ [960, 64]
Cr ∈ [960, 64]

**FIG. 19A**

Init
(N=10)  — 1910

Slice
Type?

≠ I

Set Max/Min RefRange =
Max/Min
collocatedPicRange
Set AdaptiveClipQuant = 1

1911

I

Set Max/Min RefRange =
[940,64]
Set AdaptiveClipQuant = 0

1912

Write
AdaptiveClipQuant
Flag  — 1913

Get PictureMax and
PictureMin Luma value  — 1914

Set DeltaMax/Min =
Real PictureMax/Min – RefRangeMax/Min  — 1915

Quantize DeltaMax
and DeltaMin  — 1916

Write QuantDeltaMax
Luma  — 1917

Write QuantDeltaMin
Luma  — 1918

End

**FIG. 19B**

**FIG. 20**

Maximum Internal Bit Depth 1800

Maximum Full Video Range 1802

Maximum Reference Range 2000

Minimum Reference Range 2001

Minimum Full Video Range 1803

Minimum Internal Bit Depth 1801

Real PictureMax Luma 2004

Delta Maximum 2006

Delta Minimum 2007

Real PictureMin Luma 2005

ECM (N =10):

Full Video Range: Y,Cb,Cr ∈ [1023, 0]

Reference Range = Narrow Video Range:
Y ∈ [940, 64]
Cb ∈ [960, 64]
Cr ∈ [960, 64]

**FIG. 21**

Maximum Internal Bit Depth 1800

Maximum Reference Range 2102

Maximum Narrow Video range 1804

Minimum Narrow Video range 1805

Minimum Reference Range 2103

Minimum Internal Bit Depth 1801

Delta Maximum 2108

Real PictureMax Luma 2106

Real PictureMin Luma 2107

Delta Minimum 2109

ECM (N =10):

Reference Range = Full Video Range:
Y,Cb,Cr ∈ [1023, 0]

Narrow Video Range:
Y ∈ [940, 64]
Cb ∈ [960, 64]
Cr ∈ [960, 64]

FIG. 22

Maximum Full Video Range 2300

255     1023

Real PictureMax Luma 2304

250     1000

DeltaMax = 15 (8 bits) 2301

235     940

DeltaMax = 60 (10 bits) 2305

Maximum Narrow Range 2306

Real PictureMin Luma 2307

71     284

DeltaMax = 55 (8 bits) 2302

DeltaMax = 220 (10 bits) 2308

16     64

0     0

Manimum Full Video Range 2303

Minimum Narrow Range 2309

Input video bit depth: N = 8 bit

Full Video Range (N):    $Y, C_b, C_r \in [255, 0]$

Narrow Video Range (N):   $Y \in [235, 16]$
$C_b \in [240, 16]$
$C_r \in [240, 16]$

Encoding video bit depth: $\mu = 10$

Full Video Range ($\mu$):    $Y, C_b, C_r \in [1023, 0]$

Narrow Video Range ($\mu$):   $Y \in [940, 64]$
$C_b \in [960, 64]$
$C_r \in [960, 64]$

*FIG. 23*

Init
(N=10)                2410

Set RefRangeMax/Min =        ≠ I        Slice        I        Set RefRangeMax/Min =
collocatedPicRangeMax/Min  ←————  Type?  ————→         [940,64]
Set AdaptiveClipQuant = 1                              Set AdaptiveClipQuant = 0

2411                                                                    2412

Write
AdaptiveClipQuant
Flag                2413

Get Real PictureMax and
Real PictureMin Luma value          2414

Set DeltaMax/Min =
Real PictureMax/Min − RefRangeMax/Min          2415

Adjust quantization step based on target
quantization step, original bit depth, and
internal processing bit depth          2416

Quantize DeltaMax
and DeltaMin          2417

Write QuantDeltaMax
Luma          2418

Write QuantDeltaMin
Luma          2419

Write original bit
depth to bitstream          2420

End

# FIG. 24A

FIG. 24B

*2500*

Init — 2502

2504 — Set AdaptiveClipQuant = 1

Slice Type? ≠ I / I

2506 — Set AdaptiveClipQuant = 0

2508 — Set First RefRangeMax/Min = Collocated Picture Max/Min

2510 — Set RefRangeMax/Min = $[2^{BitDepth} - 1, 0]$

2511 — VideoFullRange Flag in VUI? 1 / 0

2512 — Set RefRangeMax/Min = $[219 * 2^{BitDepth-8}, 16 * 2^{BitDepth-8}]$

2513 — Get PictureMax and PictureMin Luma value

2514 — PictureMax/Min = RefRangeMax/Min? Yes / No

2515 — Write RangeExact Flag = 1

End

2516 — Write RangeExact Flag = 0

2520 — Real PicMax > ThMax Yes / No

2521 — DeltaMax = Real PictureMax – SecondRefRangeMax

2523 — DeltaMax = Real PictureMax – FirstRefRangeMax

2522 — Write AdapRefRangeMax Flag = 1

2524 — Write AdapRefRangeMax Flag = 0

2527 — Real PicMin < ThMin Yes / No

2528 — DeltaMin = Real PictureMin – SecondRefRangeMin

2530 — DeltaMin = Real PictureMinx – FirstRefRangeMin

2529 — Write AdapRefRangeMin Flag = 1

2532 — Write AdapRefRangeMin Flag = 0

2535 — Calculate quantization step based on the target quantization, original bit depth and internal processing bit depth

2525 — DeltaMax Luma Quantization

2526 — Write QuantDeltaMax Luma

End

2536 — Calculate quantization step based on the target quantization, original bit depth and internal processing bit depth

2533 — DeltaMin Luma Quantization

2534 — Write QuantDeltaMin Luma

End

*FIG. 25*

*2600*

Determine a target range of actual values of original samples in a picture
<u>2602</u>

Determine a first range difference corresponding to a difference between the maximums of the target range and a reference range for reconstructed samples of the picture, and a second range difference corresponding to a difference between the minimums of the target range and the reference range <u>2604</u>

Determine a quantization step based at least on an internal processing bit depth and an original bit depth <u>2606</u>

Quantize, in accordance with the determined quantization step, at least one of the first range difference or the second range difference <u>2608</u>

Signal, in a bitstream and in association with the picture, the original bit depth, and the at least one of the quantized first range difference or the quantized second range difference. <u>2610</u>

*FIG. 26*

*2700*

Set a reference range for reconstructed samples of a picture

2702

Obtain, from a bitstream, an original bit depth

2704

Determine a quantization step based at least on an internal processing bit depth and the original bit depth

2706

Dequantize, in accordance with the determined quantization step, at least one of a quantized first range difference and a quantized second range difference from the bitstream to obtain a first range difference and a second range difference

2708

Derive, using the at least one of the first range difference and the second range difference and based on the reference range, a target range

2710

Clip reconstructed samples of the picture to be in the target range

2712

Reconstruct the picture comprising the clipped reconstructed samples.

2714

*FIG. 27*

**FIG. 28**

FIG. 29

Europäisches
Patentamt

European
Patent Office

Office européen
des brevets

**EUROPEAN SEARCH REPORT**

**Application Number**

EP 25 22 7835

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | D. RUIZ COLL (OFINNO) ET AL: "AHG12: Range-Exact signaling for adaptive luma clipping", 36. JVET MEETING; 20241101 - 20241108; KEMER; (THE JOINT VIDEO EXPLORATION TEAM OF ISO/IEC JTC1/SC29/WG11 AND ITU-T SG.16 ), 4 November 2024 (2024-11-04), XP030326134, [retrieved on 2024-11-04] | 1,2,4-7, 9,10, 12-15 | INV. H04N19/124 H04N19/70 |
| Y | * the whole document * | 3,8,11 | |
| X | D. RUIZ COLL (OFINNO) ET AL: "AHG12: Range-Exact signaling for adaptive luma clipping", 36. JVET MEETING; 20241101 - 20241108; KEMER; (THE JOINT VIDEO EXPLORATION TEAM OF ISO/IEC JTC1/SC29/WG11 AND ITU-T SG.16 ), 4 November 2024 (2024-11-04), XP030326135, [retrieved on 2024-11-04] | 1,2,4-7, 9,10, 12-15 | |
| Y | * the whole document * | 3,8,11 | TECHNICAL FIELDS SEARCHED (IPC) |
| Y | M. COBAN ET AL: "Algorithm description of Enhanced Compression Model 14 (ECM 14)", 147. MPEG MEETING; 20240715 - 20240719; SAPPORO; (MOTION PICTURE EXPERT GROUP OR ISO/IEC JTC1/SC29/WG11), 21 October 2024 (2024-10-21), XP030329980, [retrieved on 2024-10-21] * paragraph [3.7.1] * | 11 | H04N |

-/--

The present search report has been drawn up for all claims

| Place of search | Date of completion of the search | Examiner |
|---|---|---|
| Munich | 8 May 2026 | Oelbaum, Tobias |

EPO FORM 1503 03.82 (P04C01)

**page 1 of 2**

Europäisches
Patentamt

European
Patent Office

Office européen
des brevets

## EUROPEAN SEARCH REPORT

**Application Number**

EP 25 22 7835

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | J. BOYCE (NOKIA) ET AL: "AHG9: Bitdepth range information SEI", 35. JVET MEETING; 20240712 - 20240719; SAPPORO; (THE JOINT VIDEO EXPLORATION TEAM OF ISO/IEC JTC1/SC29/WG11 AND ITU-T SG.16 ), 5 July 2024 (2024-07-05), XP030320491, [retrieved on 2024-07-05] * page 3 * | 3,8 | |

TECHNICAL FIELDS
SEARCHED    (IPC)

The present search report has been drawn up for all claims

| Place of search | Date of completion of the search | Examiner |
|---|---|---|
| Munich | 8 May 2026 | Oelbaum, Tobias |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................................
& : member of the same patent family, corresponding document

EPO FORM 1503 03.82 (P04C01)

page 2 of 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63740853

**Non-patent literature cited in the description**

- **CUI et al.** Non-EE2: Adaptive clipping with signaled lower and upper bounds. *JVET-AF0169*, October 2023